(19) Europäisches Patentamt / European Patent Office / Office européen des brevets

(11) EP 2 758 455 B1

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(21) Anmeldenummer: **12762593.7**

(22) Anmeldetag: **24.09.2012**

(51) Int Cl.:
***C08G 77/04*** *(2006.01)* ***C08G 77/20*** *(2006.01)*

(86) Internationale Anmeldenummer:
**PCT/EP2012/068770**

(87) Internationale Veröffentlichungsnummer:
**WO 2013/041723 (28.03.2013 Gazette 2013/13)**

(54) **HYDROLYSIERBARE UND POLYMERISIERBARE SILANE MIT EINSTELLBARER RÄUMLICHER VERTEILUNG DER FUNKTIONELLEN GRUPPEN SOWIE DEREN VERWENDUNG**

HYDROLYSABLE AND POLYMERIZABLE SILANES WITH ADJUSTABLE SPATIAL DISTRIBUTION OF THE FUNCTIONAL GROUPS, AND USE THEREOF

SILANES HYDROLYSABLES ET POLYMÉRISABLES PRÉSENTANT UNE RÉPARTITION SPATIALE AJUSTABLE DES GROUPES FONCTIONNELS, ET UTILISATION DESDITS SILANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2011 DE 102011053865**

(43) Veröffentlichungstag der Anmeldung:
**30.07.2014 Patentblatt 2014/31**

(73) Patentinhaber: **Fraunhofer-Gesellschaft zur Förderung der angewandten Forschung e.V.
80686 München (DE)**

(72) Erfinder:
- **WOLTER, Herbert
97941 Tauberbischofsheim (DE)**
- **NIQUE, Somchith
97249 Eisingen (DE)**

(56) Entgegenhaltungen:
**DE-A1- 10 349 766**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft ein Verfahren zur Kettenverlängerung von über Kohlenstoff an Silicium gebundenen Resten in Silanen oder Siloxanen. Diese Reste enthalten mindestens zwei funktionelle Gruppen, und es ist das Ziel der Erfindung, mindestens eine dieser beiden Gruppen durch Verlängerung der Kette, die zwischen ihr und dem Siliciumatom liegt, im Molekül "weiter nach außen" zu schieben, wobei diese Gruppe entweder erhalten oder durch eine andere funktionelle Gruppe ersetzt werden soll. In einer spezifischen Ausgestaltung der Erfindung sollen sich mit dem erfindungsgemäßen Verfahren weitere funktionelle Gruppen einführen lassen. Wiederholt man einzelne Schritte des Verfahrens unter Einführung weiterer funktioneller Gruppen, lassen sich hierdurch dendrimerartige Strukturen erhalten.

Im Bereich der dentalen Werksstoffe, aber nicht nur dort, ist es wichtig, eine Palette von Materialien bereitstellen zu können, die zwar dem Grunde nach für dieselben Zwecke verwendet werden können und dieselben physikalischen und mechanischen Eigenschaften besitzen, wobei diese Eigenschaften jedoch an spezifische, häufig sogar individuelle Anforderungen detailgenau angepasst werden müssen. Beispiele sind die Farbe bzw. Transluzenz von Überkronungen, die Matrixhydrophilie, die Schrumpfung, die Reaktivität gegenüber Substraten oder weiteren Matrix- oder Komposit-Bestandteilen wie Zahngewebe, Co-Reaktanten oder Reaktionspartnern in Ionomer-Kompositen. Hier haben minimale Veränderungen häufig eine große Wirkung. Kann der mit diesen Materialien arbeitende Spezialist, beispielsweise ein Zahnarzt oder ein Zahntechniker, auf eine abgestufte Palette der für seine Zwecke erforderlichen Materialien zurückgreifen, wird er in die Lage versetzt, für jede einzelne Applikation das genau dazu passende Material auszuwählen.

In den vergangenen 20 Jahren wurde eine Vielzahl von Silanen entwickelt, die nicht nur hydrolytisch kondensierbar sind, sondern, beispielsweise über reaktive Doppelbindungen, zusätzlich einer organischen Polymerisation unterworfen werden können. Über eine Polymerisation vorhandener Doppelbindungen sowie die Umsetzung ggf. vorhandener weiterer reaktiver Gruppen lässt sich eine Vielzahl von Kondensaten, Polymeren und Kompositen aus bzw. mit diesen Silanen herstellen, die sich für eine Vielzahl von Applikationen eignen. Beispiele solcher Materialien sind in DE 40 11 044 A1, DE 44 16 857 C1, DE199 10 895 A1, DE 103 49 766 A1 und DE 101 32 654 A1 offenbart. Allerdings liegen in diesen Materialien die verschiedenen funktionellen Gruppen in den Silanen immer noch relativ dicht beieinander und auch dicht am Molekülkern.

DE 103 49 766 A1 offenbart die Reaktion von Glycidyloxypropyltrimethoxysilan mit Methacrylsäure, wobei das Produkt dieser Reaktion hydrolysiert und dann mit Acryloylchlorid umgesetzt wird.

Aufgabe der Erfindung ist es, hier Abhilfe zu schaffen und Verfahren bereitzustellen, mit denen sich diese funktionellen Gruppen, die über eine kohlenstoffhaltige Kette und ein Kohlenstoffatom dieser Kette an Silicium gebunden sind, in eine Position verschieben lassen, die einen größeren Abstand zum jeweiligen Siliciumatom aufweist. Aufgrund der strukturellen Anordnung dieser Ketten in den aus Silanen erhältlichen Kieselsäurepolykondensaten (die auch als Siloxane bzw. "ORMOCER®e" bezeichnet werden können) können derartige Verschiebungen eine extreme Wirkung erzeugen. In manchen Ausführungsformen ist es dabei wünschenswert, dass die ursprünglich vorhandene funktionelle Gruppe gegen eine andere funktionelle Gruppe ausgetauscht wird. Weiterhin kann es wünschenswert sein, im Verlauf solcher Verschiebungen zusätzliche funktionelle Gruppen an den siliciumgebundenen Rest anzubinden. Zusätzliche Gruppen wie z.B. Hydroxygruppen oder Säuregruppen können die Matrixhydrophilie oder andere Eigenschaften der aus den Silanen hergestellte Kondensate, Polymere und Komposite positiv beeinflussen. Darüber hinaus kann man hierdurch erreichen, dass beim wiederholten Durchführen der Verlängerungsreaktionen gleichzeitig eine dendrimerartige Struktur am kohlenstoffhaltigen Rest ausgebildet wird.

In Lösung der gestellten Aufgabe geht die vorliegende Erfindung aus von Strukturen der nachstehenden Formel (1)

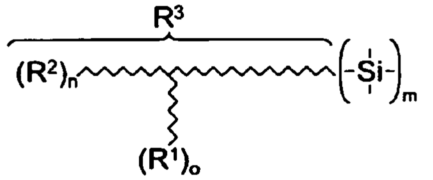

(1)

In dieser Formel steht die Zickzacklinie für das Rückgrat eines über ein Kohlenstoffatom an das Silicium gebundenen Kohlenwasserstoffrestes, wobei dieses Rückgrat beliebig durch Heteroatome oder Kupplungsgruppen oder andere, Heteroatome enthaltende Gruppen unterbrochen sein darf. Beispiele sind Unterbrechungen durch -S-, -O-, -NH-, -C(O)O-, -NHCH(O)-. -C(O)NH- und dergleichen. Da es für die Zwecke der Erfindung auf die Struktur des Rückgrats dieses Restes nicht ankommt, kann der Fachmann diesbezüglich eine beliebige Auswahl treffen.

Der gesamte, über ein Kohlenstoffatom an das Siliciumatom gebundene Rest ist in Formel (1) mit $R^3$ bezeichnet. Dieser kann zusätzliche, ggf. dem Grunde nach ebenfalls reaktive Substituenten tragen, die dann aber für die vorliegende

Erfindung keine Rollen spielen. $R^1$ bezeichnet einen ungesättigten, organisch polymerisierbaren Rest. Unter dem Attribut "polymerisierbar" bzw. dem entsprechenden Substantiv "Polymerisation" soll dabei eine Polyreaktion verstanden werden, bei der reaktionsfähige Doppelbindungen unter dem Einfluss von Wärme, Licht, ionisierender Strahlung oder redoxinduziert (z.B. mit einem Initiator (Peroxid oder dgl.) und einem Aktivator (Amin oder dgl.)) in Polymere übergehen (engl.: addition polymerization oder chain-growth polymerization). Dabei treten weder Abspaltungen von molekularen Bestandteilen auf, noch Wanderungen oder Umlagerungen. Beispiele für $R^1$ sind daher Reste mit einer oder mehreren nichtaromatischen C=C-Doppelbindungen, vorzugsweise einer Michaeladdition zugänglichen Doppelbindungen wie Styryle oder (Meth)AcrylsäureDerivate. Der Rest $R^1$ enthält in der Regel mindestens zwei und vorzugsweise bis zu ca. 50, ggf. aber auch noch mehr Kohlenstoffatome. Die organisch polymerisierbare Gruppe kann dabei direkt oder über eine Kupplungsgruppe an das Kohlenstoffskelett des kohlenwasserstoffhaltigen Restes gebunden sein. Bevorzugt besitzt der organisch polymerisierbare Rest mindestens eine C=C-Doppelbindung, und stärker bevorzugt ist er einer Michael-Addition zugänglich. In spezifischen Ausführungsformen ist er oder weist er mindestens eine Acrylat- oder Methacrylatgruppe auf.

Der Ausdruck "(Meth)Acryl..." soll vorliegend bedeuten, dass es sich jeweils um die entsprechende Acryl- oder die entsprechende Methacryl-Verbindung oder ein Gemisch von beiden handeln kann. Die vorliegenden (Meth)Acrylsäure-Derivate umfassen die Säuren selbst, ggf. in aktivierter Form, Ester, Amide, Thioester und dgl.

Der Rest $R^2$ kann dieselbe Bedeutung wie $R^1$ besitzen. Alternativ kann $R^2$ eine Hydroxygruppe, ein phosphorhaltiger Rest, beispielsweise eine Phosphonsäure, eine freie Carbonsäure oder ein Ester oder ein Salz dieser Säuren sein.

Die drei nicht näher gekennzeichneten Bindungen des Si-Atoms stehen dann, wenn die Struktur (1) ein Silan darstellt, für weitere am Siliciumatom gebundene Reste. Stattdessen können sie Sauerstoffbrücken zu weiteren Siliciumatomen bzw. anderen Metallatomen symbolisieren, wenn die Struktur (1) Bestandteil eines Kieselsäure(hetero)polykondensats ist. (Der Ausdruck "(Hetero)polykondensat" soll bedeuten, dass das Kondensat neben Silicium andere Metallatome cokondensierter Verbindungen aufweisen kann, beispielsweise B, Al, Ti, Zn und/oder weitere Übergangsmetallatome.) Da die erfindungsgemäßen Reaktionen sowohl an monomeren Silanen als auch an bereits anorganisch vernetzten Kieselsäurepolykondensaten erfolgen können, kommt es auf die Natur dieser Bindung nicht an. Im Falle monomerer Silane können diese Reste beispielsweise unter Hydrolysebedingungen hydrolysierbare Gruppen sein, wie der Fachmann sie kennt, beispielsweise Halogenide oder Alkoxide. Stattdessen können eine oder mehrere dieser Gruppen OH bedeuten. In anderen Ausführungsformen symbolisiert mindestens ein Rest der Bindung mindestens einen weiteren über Kohlenstoff an das Siliciumatom gebundenen Rest, der beliebige Eigenschaften aufweisen kann. Diese können von denen des Restes $R^3$ abweichen; alternativ kann einer oder können sogar zwei solche Reste die Bedeutung von $R^3$ haben.

Die Indices m und n stehen unabhängig voneinander für 1 oder 2, gegebenenfalls aber auch 3, 4 oder noch größer. Häufig sind m und n jeweils 1, wobei aber in manchen Fällen auch n 2, 3 oder sogar 4 bedeuten kann. Eine Beschränkung nach oben ist theoretisch nicht gegeben.

Der Index o ist stark variabel und muss im Falle von Kieselsäurekondensaten keine ganze Zahl bedeuten. Er sollte vorzugsweise mindestens 0,2 betragen und liegt häufig zwischen 0,5 und 1,0. Er kann aber auch größer 1 sein, z.B. 1,5 oder 2,0 oder sogar darüber. Wenn der Index o keine ganze Zahl ist, also nicht jeder Rest $R^3$ im Polykondensat einen (oder mehrere) Reste $R^1$ aufweist, weisen diejenigen Reste $R^3$, die frei von $R^1$ sind oder nicht die maximale Anzahl davon besitzen, in der Regel statt dessen denjenigen Substituenten auf, aus dem $R^1$ zuvor gebildet wurde. Dieser kann ebenfalls reaktiv sein, spielt dann aber im Rahmen der Erfindung keine weitere Rolle (siehe z.B. das weiter unten gezeigte 2. Beispiel der 1. Reaktion).

Die in Formel (1) dargestellte Verzweigung des kohlenwasserstoffhaltigen Rückgrats, gezeigt anhand der abzweigenden Zickzacklinie, ist optional. In spezifischen Ausführungsfällen kann der Rest $R^1$ nämlich ein Substituent sein, der direkt an ein Atom des Rückgrats von $R^3$ gebunden ist. Ein Beispiel ist der Fall, in dem $R^1$ die Gruppe CHR'=CH-C(O) bedeutet, die in Form eines (Meth)Acrylsäureamids (CHR'=CH-C(O)-N*=) direkt an ein Stickstoffatom (N*) aus dem Rückgrat des Si-C-gebundenen Restes (symbolisiert durch die beiden nach rechts weisenden Bindungen am Stickstoff) gebunden ist. In diesem Fall kann R' z.B. Wasserstoff oder $CH_3$ bedeuten.

Beispiele für erfindungsgemäß einsetzbare Strukturen (1) sind:

Silane der allgemeinen Formel (A):

$$\{X_aR_bSi[R'(A)_c]_{(4-a-b)}\}_xB \qquad (A)$$

worin die Reste folgende Bedeutung haben:

X: Hydroxy, Alkoxy, Acyloxy, Alkylcarbonyl, Alkoxycarbonyl oder $-NR''_2$;
R: Alkyl, Alkenyl, Aryl, Alkylaryl oder Arylalkyl;

R’: Alkylen, Arylen oder Alkylenarylen;
R'': Wasserstoff, Alkyl oder Aryl;
A: O, S, PR'', POR'' oder NHC(O)O;
B: geradkettiger oder verzweigter organischer Rest, der sich von einer Verbindung mit mindestens drei C=C-Doppelbindungen und 5 bis 50 Kohlenstoffatomen ableitet;
a: 1, 2 oder 3;
b: 0, 1 oder 2;
c: 0 oder 1;
x: ganze Zahl, deren Maximalwert der Anzahl von Doppelbindungen in der Verbindung B minus 1 entspricht,

sowie davon abgeleitete Kieselsäurepolykondensate, entstanden durch hydrolytische Kondensation der Silane der Formel (A). Solche Silane und Polykondensate sind in DE 40 11 044 A1 offenbart. Sie fallen unter die vorliegende Strukturformel (1) mit $R^1$ und $R^2$ gleich organisch polymerisierbarem Rest.

Silane der allgemeinen Formel (B):

$$B\{A\text{-}(Z)_{d}\text{-}R^1(R^2)\text{-}R'\text{-}SiX_aR_b\}_c \qquad (B)$$

worin die Reste und Indices folgende Bedeutung haben:

A = O, S, NH oder C(O)O;
B = ein geradkettiger oder verzweigter organischer Rest mit mindestens einer C=C-Doppelbindung und 4 bis 50 Kohlenstoffatomen;
R = Alkyl, Alkenyl, Aryl, Alkylaryl oder Arylalkyl;
R’ = Alkylen, Arylen, Arylenalkylen oder Alkylenarylen mit jeweils 0 bis 10 Kohlenstoff-Atomen, wobei diese Reste durch Sauerstoff- und Schwefelatome oder durch Aminogruppen unterbrochen sein können;
$R^1$ = Stickstoff, Alkylen, Arylen oder Alkylenarylen mit jeweils 1 bis 10 Kohlenstoffatomen, wobei diese Reste durch Sauerstoff- oder Schwefelatome oder durch Aminogruppen unterbrochen sein können;
$R^2$ = OH oder COOH;
X = Hydroxy, Alkoxy, Acyloxy, Alkylcarbonyl, Alkoxycarbonyl oder $-NR''_2$;
R'' = Alkyl oder Aryl;
Z = CO oder CHR, mit R gleich H, Alkyl, Aryl oder Alkylaryl;
a = 1, 2 oder 3;
b = 0,1 oder 2;

sowie davon abgeleitete Kieselsäurepolykondensate, entstanden durch hydrolytische Kondensation der Silane mit der Formel (B). Solche Silane und Kieselsäurepolykondensate sind in DE 44 16 857 C1 offenbart. Sie repräsentieren Strukturen der Formel (1), worin $R^2$ eine Hydroxygruppe oder eine Carbonsäuregruppe ist.

Silane der allgemeinen Formel (C)

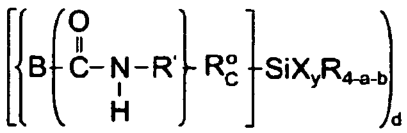

(C)

worin die Reste und Indices die folgende Bedeutung haben:

B = organischer Rest mit mindestens einer C=C-Doppelbindung;
R = Alkyl, Alkenyl, Aryl, Alkylaryl oder Arylalkyl;
R° und R’ jeweils = Alkylen, Alkenylen, Arylen, Alkylenarylen oder Arylenalkylen;
X = Hydroxy, Alkoxy, Acyloxy, Alkylcarbonyl, Alkoxycarbonyl oder $-N\,R''_2$ mit R'' gleich Wasserstoff, Alkyl oder Aryl;
a = 1, 2 oder 3
b = 1, 2 oder 3, mit a + b = 2, 3 oder 4;
c = 1;
d = 1, 2, 3, 4, 5, 6, 7, 8, 9 oder 10;

e = 2 oder 3 oder 4;

sowie davon abgeleitete Kieselsäurepolykondensate, entstanden durch hydrolytische Kondensation von Silanen mit der Formel (C). Die Silane der Formel (C) sowie die daraus ableitbaren Kieselsäurepolykondensate sind in DE 199 10 895 A1 offenbart. Sie fallen unter Strukturen der Formel (1), worin $R^2$ ein organisch polymerisierbarer Rest ist. Für den Fall, dass b in der Formel (C) 2 oder 3 bedeutet, haben auch einer oder zwei der weiteren Bindungen des Siliciumatoms die Bedeutung von $R^3$ In Formel (1).

Silane der allgemeinen Formel (D):

$$\{B'\text{-}Z'\text{-}R^1(B)\text{-}R\text{-}\}_a(R')_bSiX_{4\text{-}a\text{-}b} \qquad (D)$$

worin die Reste und Indices die folgende Bedeutung haben:

R ist eine Alkylen-, Arylen- oder Alkylenarylengruppe, die durch eine oder mehrere Sauerstoff- oder Schwefelatome oder Carboxyl- oder Aminogruppen unterbrochen sein oder solche Atome/Gruppen an ihrem dem Siliciumatom abgewandten Ende tragen kann;
$R^1$ ist eine mit Z' substituierte Alkylen-, Arylen- oder Alkylenarylengruppe, die durch eine oder mehrere Sauerstoff- oder Schwefelatome oder Carboxyl- oder Aminogruppen unterbrochen sein oder solche Atome/Gruppen an einem ihrer Enden tragen kann;
R' ist eine Alkyl-, Alkenyl-, Aryl-, Alkylaryl- oder Arylalkylgruppe;
B und B' können gleich oder verschieden sein, beide Reste haben die Bedeutung einer geradkettigen oder verzweigten organischen Gruppe mit mindestens einer C=C-Doppelbindung und mindestens zwei Kohlenstoffatomen;
X ist eine Gruppe, die unter Ausbildung von Si-O-Si-Brücken eine hydrolytische Kondensationsreaktion eingehen kann, mit Ausnahme von Wasserstoff und Halogen;
Z' hat die Bedeutung -NH-C(O)O-, -NH-C(O)- oder -CO(O)-, wobei die beiden erstgenannten Reste über die NH-Gruppe am Rest B' gebunden sind, während die Carboxylatgruppe in beiden Richtungen weisen kann;
a bedeutet 1 oder 2 und
b ist 0 oder 1;

sowie daraus abgeleitete Kieselsäurepolykondensate, die durch hydrolytische Kondensation der Silane (D) erhalten werden können. Solche Silane und Polykondensate sind in DE 103 49 766 A1 offenbart; sie lassen sich unter die Struktur (1) subsumieren, worin $R^2$ ein organisch polymerisierbarer Rest ist.

Silane der allgemeinen Formel (E):

$$(X_aR_bSi)_m[\text{-}\{B\}\text{-}([O]_oP[O]_pR'_cY_d)_n]_{4ab} \qquad (E)$$

worin die Gruppen, Reste und Indices die folgende Bedeutung haben:

B ist eine mindestens zweibindige, geradkettige oder verzweigte Gruppe mit mindestens einem organisch polymerisierbaren Rest und mindestens 3 Kohlenstoffatomen,
X ist ein vom Siliciumatom abhydrolysierbarer Rest oder OH, mit Ausnahme von Wasserstoff und Halogen,
R und R' sind unabhängig voneinander ggf. substituiertes Alkyl, Alkenyl, Aryl, Alkylaryl oder
Arylalkyl,
Y ist OH oder OR',
a ist 0, 1, 2 oder 3,
b ist 0, 1 oder 2, wobei a + b zusammen 1, 2 oder 3 sind,
c ist 0, 1 oder 2,
d ist 0, 1 oder 2,
c + d sind zusammen 2,
m ist mindestens 1, mit der Maßgabe, dass m nicht mehr als 1 ist, wenn a + b 1 oder 2 bedeutet,
n ist mindestens 1,
o ist 0 oder 1, und
p ist 0 oder 1,

sowie daraus abgeleitete Kieselsäurepolykondensate, die durch hydrolytische Kondensation der Silane mit der

Formel (E) erhalten werden. Silane der Formel (E) und daraus abgeleitete Kieselsäurepolykondensate sind in DE 101 32 654 A1 offenbart. Sie fallen unter die Struktur (A), worin $R^2$ ein phosphorhaltiger Rest, beispielsweise eine Phosphonsäure ist.

Silane der allgemeinen Formel (F):

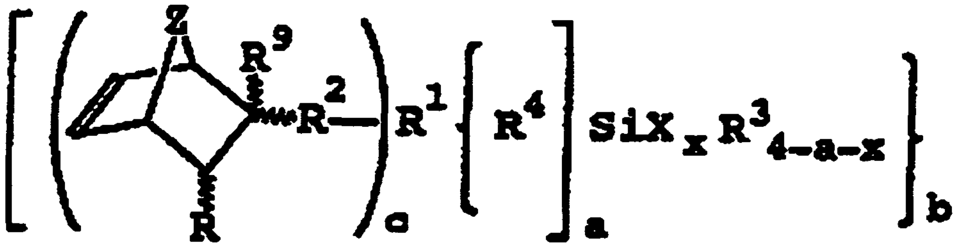

(F)

worin die Reste und Indices gleich oder verschieden sind und folgende Bedeutung haben:

R ist Wasserstoff, $R^2$-$R^1$-$R^4$-$SiX_xR^3_{3-x}$, Carboxyl, Alkyl, Alkenyl, Aryl, Alkylaryl oder Arylalkyl,
$R^1$ und $R^2$ sind unabhängig voneinander Alkylen, Arylen, Arylenalkylen oder Arylenalkylen,
$R^3$ ist Alkyl, Alkenyl, Aryl, Alkylaryl oder Arylalkyl,
$R^4$ ist $-(CHR^6\text{-}CHR^6)_n-$ mit n = 0 oder 1, $CHR^6$-$CHR^6$-S-$R^5$-, -C(O)-S-$R^5$-, $CHR^6$-$CHR^6$-$NR^6$-$R^5$, -Y-C(S)-NH-$R^5$, -S-$R^5$, -Y-C(O)-NH-$R^5$-, -C(O)O-$R^5$-, -Y-CO-$C_2H_3$(COOH)-$R^5$-, -Y-CO-$C_2H_3$(OH)-$R^5$- oder -C(O)-$NR^6$-$R^5$,
$R^5$ ist Alkylen, Arylen, Arylenalkylen oder Arylenalkylen,
$R^6$ ist Wasserstoff, Alkyl oder Aryl mit 1 bis 10 Kohlenstoffatomen,
$R^9$ ist Wasserstoff, Alkyl, Alkenyl, Aryl, Alkylaryl oder Arylalkyl,
X ist Hydroxy, Alkoxy, Acyloxy, Alkylcarbonyl oder Alkoxycarbonyl;
Y ist -O-, -S- oder $NR^6$,
Z ist -0- oder $-(CHR^6)_m$ mit m gleich 1 oder 2;
a ist 1, 2 oder 3, mit b = 1 für a = 2 oder 3
b ist 1, 2 oder 3, mit a = 1 für b = 2 oder 3
c ist eine ganze Zahl von 1 bis 6,
x ist 1, 2 oder 3 und
a + x sind 2, 3 oder 4.

mit der Bedingung, dass dann, wenn c = 1 ist, $R^4$ -Y-CO-$C_2H_3$(COOH)-$R^5$- oder -Y-CO-$C_2H_3$(OH)-$R^5$- sein muss.

Zum Zwecke der Kettenverlängerung wird das Silan bzw. das Kieselsäurepolykondensat der Formel (1) (zunächst) umgesetzt mit einer Verbindung der Formel (I)

$$X\text{-}W\text{-}(Z)_a \qquad (I)$$

worin

X = SH, $NH_2$ oder $NHR^4$ ist,
W ein substituierter oder unsubstituierter Kohlenwasserstoffrest, beispielsweise ein Alkylen-, ein Arylen-, ein Arylalkylen oder ein Alkylarylenrest oder ein Alkenylenrest ist, dessen Kohlenstoffkette durch beliebige Heteroatome oder Kupplungsgruppen wie -S-, -O-, -NH-, -$NR^4$-, worin $R^4$ die untenstehenden Bedeutung besitzt, -C(O)O-, -NHC(O)-, -C(O)NH-, -NHC(O)O-, -C(O)NHC(O)-, -NHC(O)NH-, -S(O)-, -C(S)O-, -C(S)NH-, -NHC(S)-, -NHC(S)O- unterbrochen sein kann, und
Z = OH, Silyl (d.h. $SiX^*_3$, worin die Reste X* unabhängig voneinander einen Kohlenwasserstoffrest oder einen hydrolysierbaren Rest, meist eine Alkyl- oder Alkoxygruppe mit 1 bis 6 Kohlenstoffatomen darstellen), den Carbonsäurerest (-COOH) oder einen Ester oder ein Salz dieser Säure bedeutet,

wobei $R^4$ ein unsubstituierter oder substituierter Kohlenwasserstoffrest, häufig Alkyl, Aryl, Arylalkyl oder Alkylaryl bedeutet und vorzugsweise ein Alkylrest mit stärker bevorzugt ein bis sechs Kohlenstoffatomen ist.

Bei dieser Umsetzung greift der Rest X der Verbindung (I) an der Doppelbindung der ungesättigten, organisch polymerisierbaren Gruppe $R^1$ an und verlängert damit die Struktur (1) über die Kupplungsgruppe A = -S-, -NH- oder -$NR^4$ um den Bestandteil W:

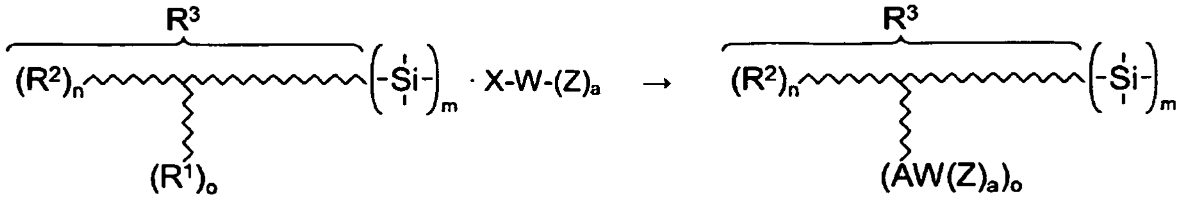

(1) (I) (2)

Dabei wird der Rest Z, sofern stöchiometrisch gearbeitet wird, a-fach an den o-fach vorhandenen Si-C-gebundenen Rest eingeführt.

Der Index a ist in vielen Ausführungsformen dieser Reaktion 1; in speziellen, unten näher erläuterten Ausführungsformen bedeutet er 2 oder 3 oder 4 oder größer 4, wobei 2 und 3 bevorzugt sind.

Bei dieser- wie auch allen nachfolgend beschriebenen - Reaktion ist es günstig, wenn die Verbindung mit der Formel (I) im molaren Unterschuss eingesetzt wird, bezogen auf den Rest $R^1$, definiert als 1-$\alpha$ Mol der Verbindung (I) in Relation pro Mol der ungesättigten, organisch polymerisierbaren Gruppe $R^1$. Dabei ist $\alpha$ vorzugsweise mindestens 0,05, vorzugsweise mindestens 0,10, in anderen Fällen mindestens 0,30, manchmal auch mindestens 0,40 und in Einzelfällen >0,50, wobei $\alpha$ dann auch Werte von z.B. 0,90 annehmen kann.

Dieser technischen Lehre liegt die Erkenntnis zugrunde, dass beim Einsatz der Verbindung (I) im Unterschuss diese Verbindung vollständig verbraucht wird, sodass in den Materialien, zu denen das Produkt dieser Reaktion verarbeitet wird, keine ggf. aus toxikologischer oder allergologischer Sicht problematischen Monomere mehr vorhanden sind. Darüber hinaus hat es sich als irrelevant herausgestellt, dass der mir $R^1$ bezeichnete Rest vollständig umgesetzt werden müsste, denn ein mehr oder weniger großer Anteil an nicht-verlängerten Si-C-gebundenen Resten im Gemisch wirkt sich nicht nachteilig auf die Eigenschaften des letzteren aus. Und schließlich ergibt sich ein entscheidender Vorteil für weitere mögliche Umsetzungen: das Produkt der Reaktion muss weder gereinigt noch auf eine sonstige Weise aufgearbeitet werden und kann daher sofort und unaufwändig einer nachfolgenden Reaktion unterzogen werden, wie es für die vorliegende Erfindung bevorzugt ist.

In einer bevorzugten Ausführungsform dieser ersten Reaktion hat X in der Verbindung der Formel (I) die Bedeutung SH. In dieser Variante wird der Rest -W-Z der Verbindung der Formel (I) über eine Thiol-en-Addition an die ungesättigte, organisch polymerisierbare Gruppe des am Siliciumatom gebundenen Restes angebunden. Alternativ dazu kann X auch $NH_2$ oder, in einer weiteren Alternative, $NHR^4$ sein, wobei $R^4$ die obige Bedeutung besitzt. Auch diese Reste greifen an der ungesättigten C=C-Doppelbindung der organisch polymerisierbaren Gruppe an, so dass der Rest -W-Z über eine NH-, oder $NR^4$-Brücke an den an das Siliciumatom gebundenen Rest angebunden wird.

In einer davon unabhängigen, bevorzugten Ausführungsform, die mit jeder der voranstehend genannten Ausführungsformen kombinierbar ist, besitzt der Rest Z in der Verbindung mit der Formel (I) die Bedeutung OH oder COOH. Die Bedeutung Z = OH ist besonders bevorzugt, auch und insbesondere in Kombination mit a = 2 oder 3, vorzugsweise a = 2. Wenn a größer 1 ist, können in einer nachstehend näher erläuterten Folgereaktion mehrere Gruppen OH (bzw. COOH) weiter umgesetzt werden, was letztendlich zu einer dendrimerartigen Struktur führen kann.

In einer davon unabhängigen, bevorzugten Ausführungsform, die mit jeder der voranstehend genannten Ausführungsformen kombinierbar ist, ist die zweite funktionelle Gruppe $R^2$ des am Silicium gebundenen Restes eine Hydroxy- oder eine weitere ungesättigte organisch polymerisierbare Gruppe. Im letzteren Falle kann diese identisch mit der (ersten) ungesättigten organisch polymerisierbaren Gruppe sein; sie kann sich aber auch von dieser unterscheiden. Beispielsweise kann die eine der beiden Gruppen eine Methacrylatgruppe sein, während die andere Gruppe eine Acrylatgruppe ist. Diese beiden Gruppen haben eine unterschiedliche Reaktivität gegenüber dem Rest X aus der Verbindung der Formel (I), sodass in solchen Fällen eine selektive Reaktionsführung erfolgt, während im anderen Fall ein unspezifisches Gemisch entsteht. Letzteres ist weniger bevorzugt.

Die Umsetzung des Silans oder Kieselsäurepolykondensats mit der Struktur (1) mit der Verbindung der Formel (I) wird im Rahmen der vorliegenden Verbindung als "erste Reaktion" bezeichnet. Diese soll nachstehen anhand einer Reihe von Beispielen näher erläutert werden.

Als Ausgangsmaterial wird im ersten dieser Beispiele als Struktur (1) ein Kieselsäurepolykondensat verwendet, das durch Hydrolyse und Kondensation eines Silans der allgemeinen Formel (B) (vorzugsweise im "Sol-Gel"-Verfahren) hergestellt wurde:

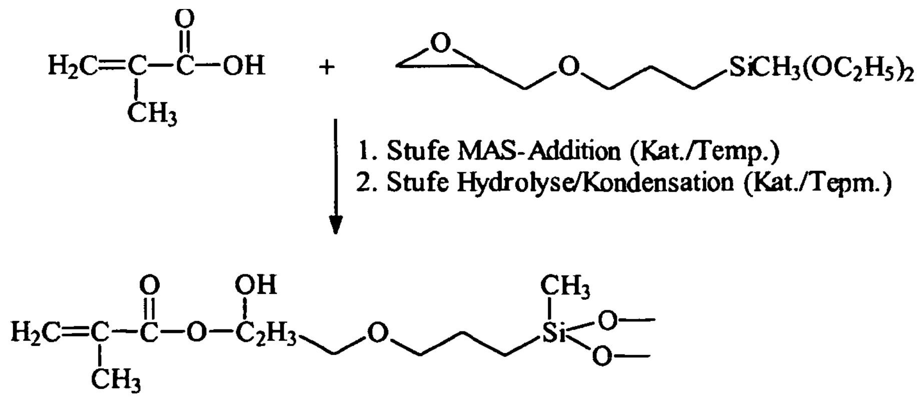


Diese Struktur, die nachstehend auch als "Basisharz I" bezeichnet wird, wird sodann mit einer Verbindung der Formel (I) umgesetzt, worin X eine Mercaptogruppe ist, Z eine Hydroxygruppe ist, W eine gesättigte Kohlenwasserstoffgruppe mit drei Kohlenstoffatomen ist und a = 2 bedeutet:

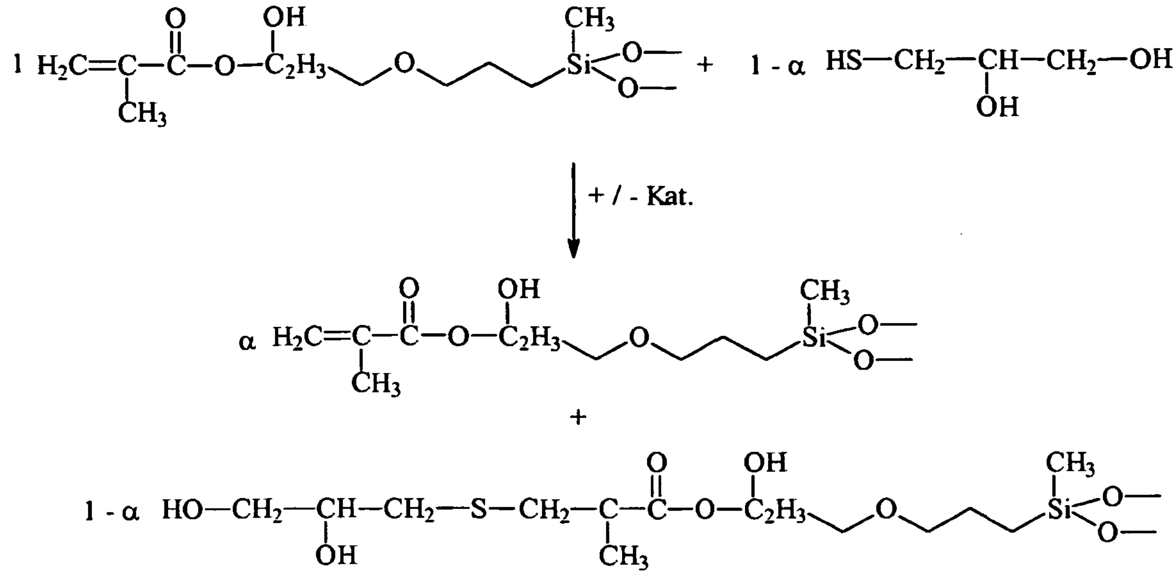


Das Produkt dieser Umsetzung (Ausführungsbeispiele 1a und 1b) enthält einen um ein Schwefelatom und drei Kohlenstoffatome verlängerten Rest $R^3$, in dem die ursprüngliche funktionelle Gruppe (die organisch polymerisierbare Gruppe) durch eine Hydroxygruppe ersetzt ist. Außerdem enthält das Produkt eine zusätzliche Hydroxygruppe. Als Verknüpfungsgruppe A enthält es eine Thioethergruppe.

Anstelle einer Verbindung mit der Formel (I), in der X eine Mercaptogruppe ist, könnte diese Reaktion auch mit einer Verbindung der Formel (I) durchgeführt werden, in der X eine primäre oder, weniger bevorzugt, eine sekundäre Aminogruppe ist. Hinsichtlich der im Fokus der Erfindung stehenden Kettenverlängerung spielt die Wahl des Restes X keine Rolle, da sie nur für die Struktur der Verknüpfungsgruppe A zwischen dem neu angebundenen Rest -W-Z und dem Restmolekül verantwortlich ist, die - mit einer Ausnahme - keine technische Funktion oder Wirkung besitzt. Bei dieser Ausnahme handelt es sich um die Mercaptogruppe, deren Einsatz als Rest X einen spezifischen Vorteil bietet: der Einbau des Schwefelatoms als Verknüpfungsgruppe A in das Gerüst des Si-C-gebundenen Restes bewirkt eine Erhöhung der Brechzahl $n_D$ des gebildeten Kieselsäurepolykondensats im Vergleich zu einer sekundären bzw. tertiären Aminogruppe.

Anstelle des im Beispiel für die Verbindung der Formel (I) eingesetzten Diols können selbstverständlich auch Monoalkohole verwendet werden; in diesem Fall entfällt die zusätzliche Einführung von Hydroxygruppen. Alternativ können aber auch Verbindungen mit mehr als zwei Hydroxygruppen als Verbindung der Formel (I) eingesetzt werden.

In einer anderen Variante der Erfindung wird für die erste Reaktion eine Verbindung der Formel (I) eingesetzt, in der der Rest Z eine Silylgruppe oder den Carbonsäurerest ($CO_2H$) bzw. einen Ester oder ein Metallsalz des Carbonsäurerestes darstellt. Auch gemischte Verbindungen sind möglich, das heißt solche Verbindungen, die sowohl eine Hydroxy- als auch eine Säurefunktion aufweisen.

Konkrete Beispiele für Verbindungen der Formel (I) sind:

OH-funktionalisierte Thiole mit nur einer Hydroxygruppe wie:

- 6-Mercapto-1-hexanol,
- 4-(Mercaptohexyloxy)-benzylalkohol,
- 2- bzw. 3- bzw. 4-Mercaptophenol,
- 11-Mercapto-1-undecanol,
- 1-Mercaptoundec-11-yl)-tetraethylenglykol.

$CO_2H$-funktionalisierte Thiole:

- 11-Mercaptoundecansäure
- 3-Mercaptopropionsäure
- 3- bzw. 4-Mercaptophenylessisäure
- 16-Mercaptohexadesansäure
- 6-Mercaptonicotinsäure
- 8-Mercaptooctansäure
- 15-Mercaptopentadecansäure
- 4-Mercaptophenylessigsäure
- Mercaptobernsteinsäure

Mit einem Silylrest funktionalisierte Thiole:

- 3-Mercaptopropyl-trimethoxysilan,
- 3-Mercaptopropyl-triethoxysilan,
- 3-Mercaptopropyl-methyldimethoxysilan.

Wenn Z in der Verbindung (I) ein Silylrest ist, werden Gruppen eingeführt, die eine zusätzliche anorganische Hydrolyse und Kondensation zulassen.

Als Ausgangsmaterial dient in einem zweiten Beispiel der ersten Reaktion ein Kieselsäurepolykondensat, das durch hydrolytische Kondensation eines Silans der allgemeinen Formel (D) hergestellt wurde:

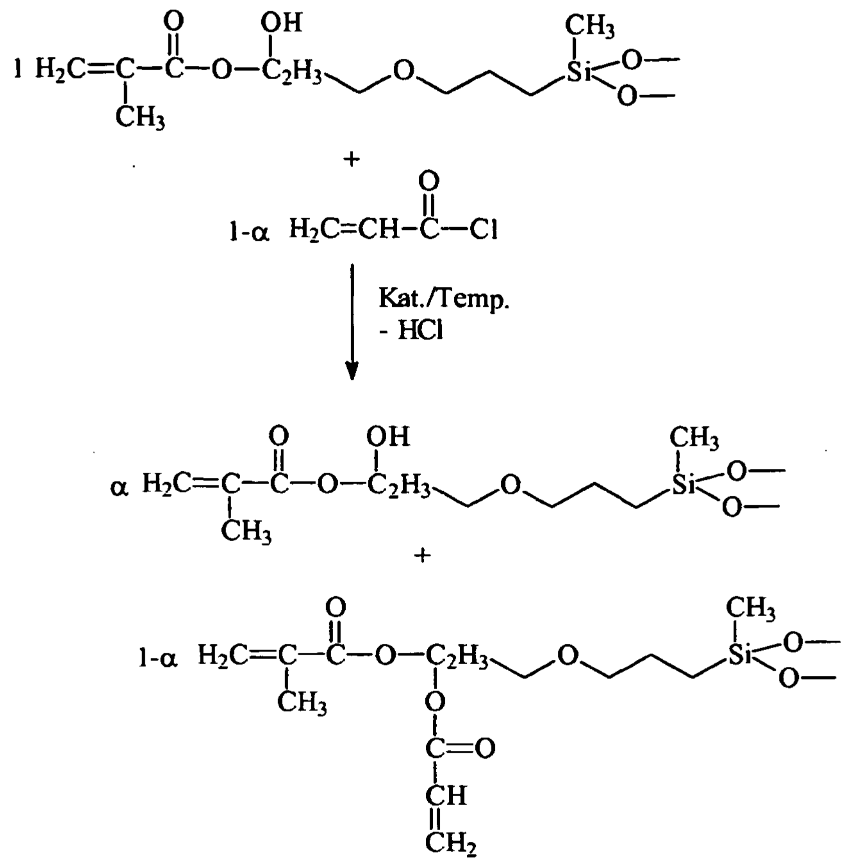


Diese Struktur wird nachstehend auch als "Basisharz II" bezeichnet. Anzumerken ist hier, dass dieses Polykondensat zwei verschiedenen Strukturen der Formel (1) enthält, in denen $R^1$ im einen Fall eine ungesättigte, organisch polymerisierbare Gruppe und im anderen Fall OH bedeutet, da die zugrundeliegende Umsetzung mit einem Unterschuss an Acrylsäurechlorid durchgeführt wurde. Gemischte Ausgangsmaterialien dieser Art können genauso wie unvollständig umgesetzte (d.h. solche mit o < 1) vorliegend in allen Varianten je nach Bedarf eingesetzt werden. Dabei wird ggf. bevorzugt ein Verhältnis von 0,6 bis 0,95 Mol des den Rest $R^1$ einführenden Reagens' eingesetzt, z.B. 0,6 bis 0,95 Mol Acrylsäurechlorid pro Mol Hydroxygruppe zur Einführung einer Acrylatgruppe als $R^1$ verwendet; statt dessen kann aber natürlich auch - je nach Bedarf - die Acrylsäureverbindung bis zur Moläquivalenz oder in manchen Fällen sogar darüber eingesetzt werden. Letzteres ist allerdings in Hinblick auf die gewünschte Vermeidung des Vorhandenseins von Monomer-Resten im Harz häufig nicht günstig.

Auch in diesem zweiten Beispiel wird die Struktur mit der Formel (D) sodann mit einer Verbindung der Formel (I) umgesetzt, worin X eine Mercaptogruppe ist, Z eine Hydroxygruppe ist, W eine gesättigte Kohlenwasserstoffgruppe mit drei Kohlenstoffatomen ist und a = 2 bedeutet:

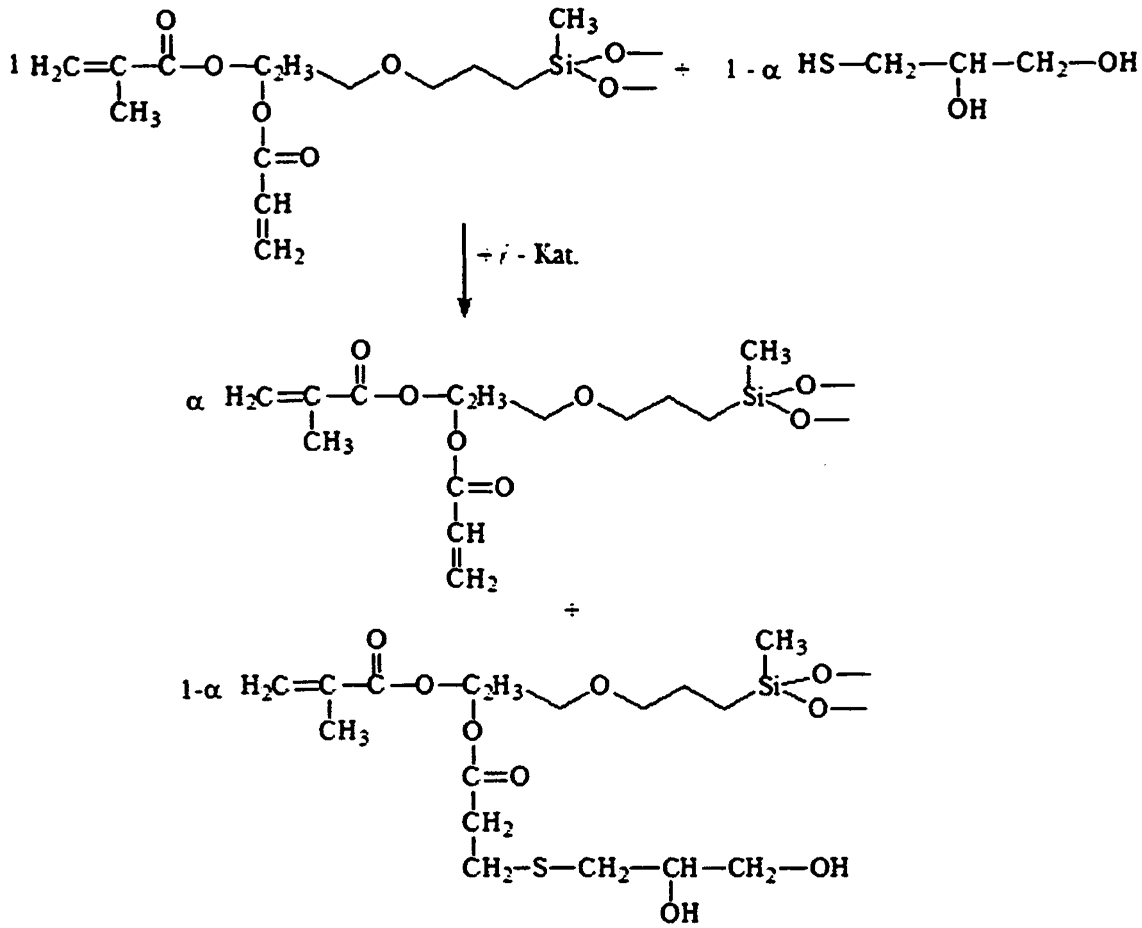


In diesem Beispiel sind zwar sowohl $R^1$ als auch $R^2$ jeweils ungesättigte organisch polymerisierbare Gruppen; sie unterscheiden sich jedoch voneinander. Die Umsetzung mit der Verbindung (I) ist dabei so gewählt, dass die SH-Addition bevorzugt an der Acrylatgruppe und nicht an der Methacrylatgruppe erfolgt. Daher ist die Umsetzung stereospezifisch: es erfolgt eine Verlängerung des Acrylatrestes. Man beobachtet infolge der Thioladdition eine drastische Zunahme der Polarität/Hydrophilie aufgrund der Steigerung des OH-Gehaltes und - völlig überraschend - nach der Härtung eine extrem hohe Durchbiegung bis zum Bruch, während die Bruchfestigkeit und der E-Modul verringert sind. (siehe auch Beispiel 5a).

Hinsichtlich der möglichen Abwandlung dieser beispielhaften Reaktion durch Verwendung anderer Verbindungen der Formel (I) anstelle des 3-Mercaptopropan-1,2-diols sei in vollem Umfang auf die Erläuterungen zum ersten Beispiel verwiesen: Selbstverständlich lassen sich alle genannten Verbindungstypen bzw. konkreten Beispiele für die Verbindung (I), die im Zusammenhang mit der Erläuterung zum ersten Beispiel für die erste Reaktion genannt waren, auch in Kombination mit dem zweiten Beispiel für diese Reaktion einsetzen.

Als Beispiel für eine Verbindung (I), in der X eine Aminogruppe ist, sei die Umsetzung der Struktur mit der Formel (D), wie sie voranstehend für das zweite Beispiel gezeigt war, mit einem hydroxysubstituierten, sekundären Amin dargestellt (drittes Beispiel der ersten Reaktion):

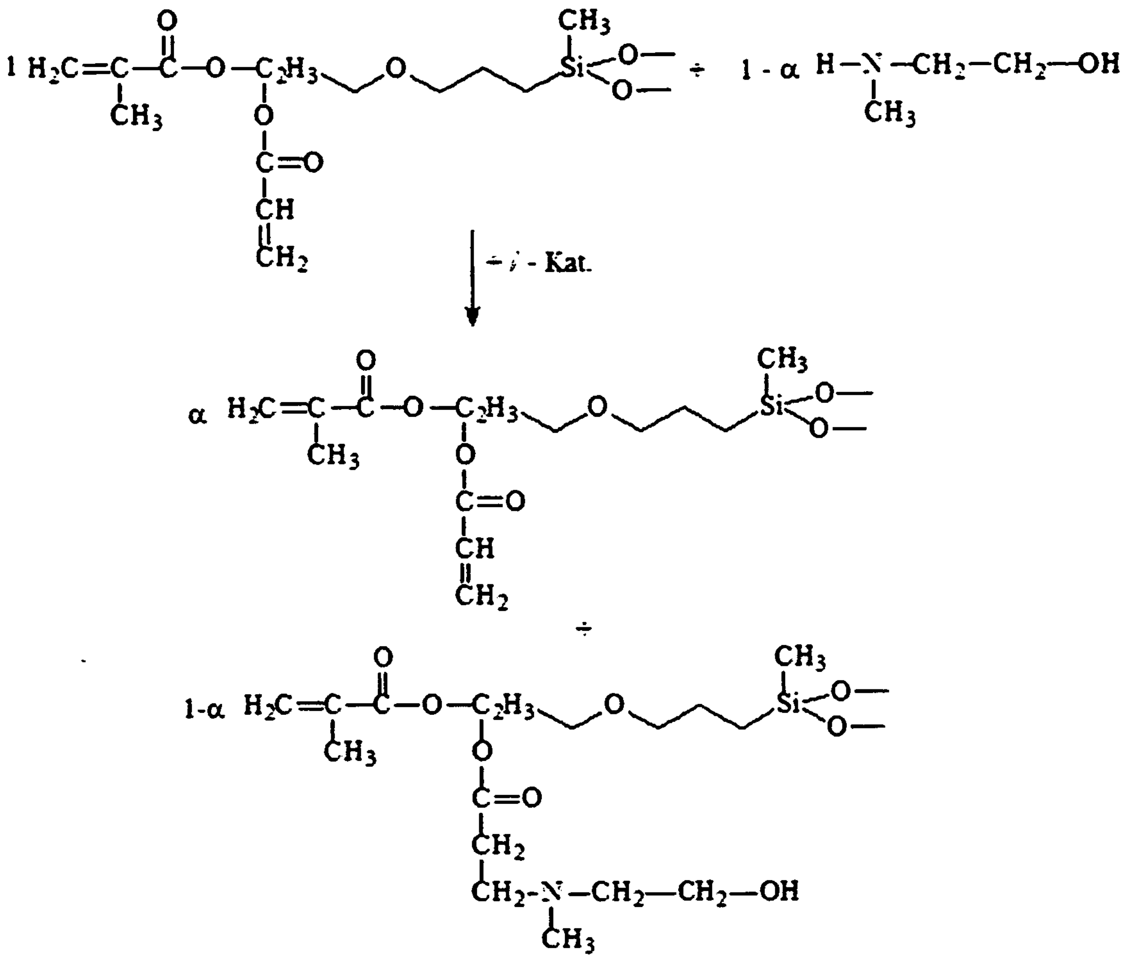


Der Unterschied zum voranstehenden Beispiel liegt nur in der Art der Kopplungsgruppe (hier einem tertiären Amin anstelle einer Thioether-Brücke), was, wie oben erläutert, funktionell ohne Bedeutung ist (allerdings lässt sich der Brechungsindex durch das Vorsehen bzw. Weglassen der Thioether-Gruppe variierten), der Verwendung eines um eine $CH_2$-Gruppe kürzeren Moleküls und im Vorhandensein von nur einer Hydroxygruppe (a = 1) (siehe auch Ausführungsbeispiel 7a).

Auch bei dieser Reaktion kann a nicht nur 1, sondern stattdessen 2 (oder gegebenenfalls 3 oder 4 oder darüber) bedeuten, wie das nachfolgende Beispiel zeigt:

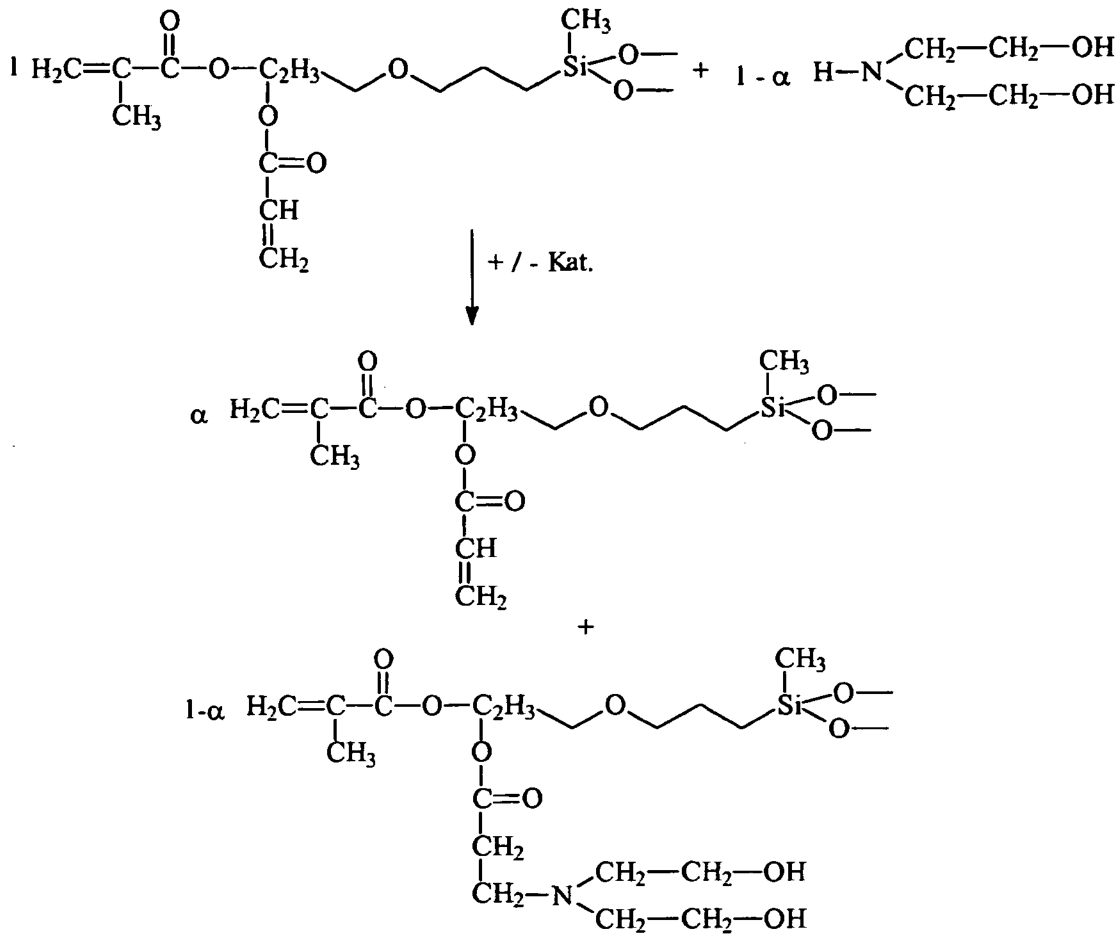


(Die obige Umsetzung ist konkret im Ausführungsbeispiel 9a beschrieben). Die Polarität/Hydrophilie ist also beispielsweise über den OH-Gehalt der Aminverbindung einstellbar. Diese kann über einen weiten Bereich hinweg frei unter primären und sekundären Aminogruppen mit einer, zwei oder noch mehr Hydroxy- oder sonstigen Gruppen Z wie oben definiert ausgewählt werden.

Die erste Reaktion muss nicht notwendigerweise an bereits hydrolytisch kondensierten Silanen erfolgen, wie voranstehend dargestellt. Stattdessen kann sie selbstverständlich an monomeren Silanen durchgeführt werden.

Das Endprodukt der ersten Reaktion kann beispielsweise eine ungesättigte, organisch polymerisierbare Gruppe sowie eine oder zwei, ggf. auch noch mehr Hydroxygruppen aufweisen. Anstelle der Hydroxygruppen können natürlich auch Carbonsäurereste -COOH, Carbonsäuresalze oder Carbonsäureester vorhanden sein, wenn eine Verbindung (I) mit entsprechenden Gruppen Z verwendet wird.

Die in der ersten Reaktion eingeführten funktionellen Gruppen können ganz prinzipiell zu verschiedenen Zwecken genutzt werden:

(1) Die Einführung einer oder mehrerer Säuregruppen führt zu einer Verbesserung der Haftungs- und/oder der Ätzeigenschaften des erhaltenen Kieselsäurepolykondensats bzw. des entsprechenden Polymers oder Komposits.

(2) Die durch die erste Reaktion eingeführten funktionellen Gruppen (insbesondere OH-Gruppen) können der Variation der Polarität und/oder der Hydrophilie dienen.

(3) Es lassen sich darüber weitere Verbindungen an den Si-C-gebundenen Rest anknüpfen. Damit kann einerseits eine entsprechende funktionelle Gruppe nochmals weiter nach Außen geschoben werden; zum anderen kann über eine solche Reaktion die ursprünglich vorhandene ungesättigte organisch polymerisierbare Gruppe wiederhergestellt werden, die sich dann ebenfalls an einer weiter außenliegenden Position befindet. Zum Dritten lässt sich die derart nach außen geschobene Gruppe wiederum beliebig umsetzen, z.B. im Falle einer Hydroxygruppe mit Phosphorpentoxid oder Phosphoroxychlorid unter Ausbildung eines Phosphorsäureesters. Damit erhält man eine weit außen liegende neue Haftgruppe.

Das Produkt (2) der ersten Reaktion kann das Endprodukt der Erfindung sein; die Vorteile dieses Produkts sind im voranstehenden Absatz unter (1) und (2) aufgeführt.

Sofern für die erste Reaktion eine Verbindung der Formel (I) eingesetzt wurde, worin Z eine Hydroxy- oder eine Carbonsäuregruppe bzw. ein Salz oder Ester des Carbonsäurerestes bedeutet, also kein Silylrest ist, oder sofern für die erste Reaktion ein Si-C-gebundener Rest $R^3$ eingesetzt wird, in dem $R^2$ eine OH-Gruppe bedeutet, lassen sich die Produkte (2) der ersten Reaktion erfindungsgemäß in einer zweiten Reaktion weiter umsetzen. Diese zweite Reaktion kann gemäß drei unterschiedlichen Varianten erfolgen. Dies soll nachstehend näher erläutert werden:

Erste Variante der zweiten Reaktion:

In der ersten Variante wird das Silan oder das Kieselsäurepolykondensat mit der Struktur (2), worin Z = OH oder COOH bedeutet, mit einer Verbindung der Formel (II) umgesetzt:

$$Y\text{-}(W)_k\text{-}(R^1)_b \qquad (II),$$

worin Y NCO, Epoxy oder - nur für den Fall, dass Z eine Hydroxygruppe ist - COA' ist, wobei W wie in Verbindung (I) definiert ist, $R^1$ eine ungesättigte organisch polymerisierbare Gruppe wie in Zusammenhang mit der Formel (1) definiert ist, A' Hydroxy, ein Halogenid oder $-OC(O)R^4$ mit $R^4$ gleich unsubstituierter oder substituierter Kohlenwasserstoff, z.B. Alkyl oder Alkylen, bedeutet, k = 0 oder 1 ist, wobei k = 0 nur für den Fall möglich ist, dass Y COA' bedeutet, und b = 1 oder größer 1, beispielsweise 2, 3 oder 4 ist. Mit anderen Worten: Die Verbindung oder das Kondensat mit der Struktur (2) wird mit einem Isocyanat, einer epoxygruppenhaltigen Verbindung oder einer (aktivierten) Carbonsäure umgesetzt. Dadurch wird über eine Kopplungsgruppe B, die je nachdem ob Y an einer Hydroxy- oder einer Carboxylgruppe angreift, eine Ester-, Ether-, Säureamid- oder Urethangruppe ist, ein weiterer Rest $W\text{-}(R^1)_b$ an den Si-C-gebundenen Rest des Silans oder Kieselsäurepolykondensats angebunden:

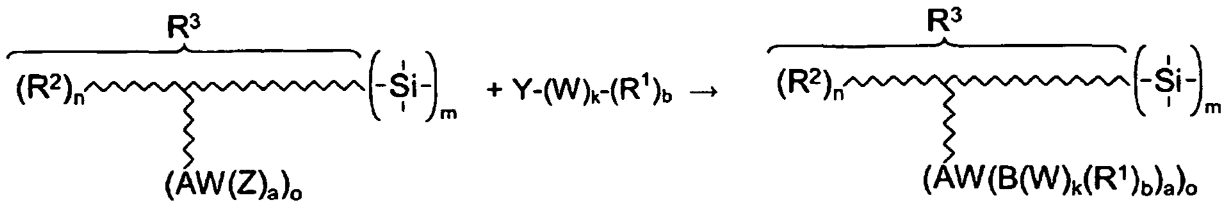

(2) (II) (3)

Dabei kann die die Verbindung (II) mehrere Reste $R^1$ tragen (d.h. b kann 1, 2 oder noch größer sein), so dass die Anzahl der Doppelbindungen pro Si-C-gebundenem Rest vergrößert werden kann. In Kombination mit einer ersten Reaktion, bei der die Verbindung (I) 2 oder sogar mehr Reste Z trägt, kann so eine dendrimerartige Struktur angelegt werden.

Das Produkt der ersten Variante der zweiten Reaktion ist also wiederum eine Verbindung oder eine Kondensat mit mindestens einem Rest $R^1$ und mindestens einem Rest $R^2$ an dem Si-C-gebundenen Rest $R^3$, wobei der Rest $R^1$ gegenüber dem Rest $R^1$ im Ausgangsmaterial jedoch einen Abstand zum Siliciumatom aufweist, der durch die beiden Reaktionen um A-W-B-W-verlängert ist und gegenüber der ursprünglichen Anzahl o im Ausgangsmaterial b mal a-fach vorliegt. Das Vorhandensein einer größeren Zahl von über längere Ketten relativ gut beweglichen Doppelbindungen, die sich im Wesentlichen im Außenbereich des Silanmoleküls bzw. des Siloxans befinden, kann zu einer Verringerung der Schrumpfung beim späteren Vernetzen führen, was insbesondere im Dentalbereich von großem Vorteil sein kann. Außerdem kann Rest der $R^3$ ggf. zusätzliche Funktionalitäten aufweisen, z.B. durch die Verwendung einer Verbindung der Formel (I), die mindestens zwei Hydroxygruppen aufweist, und/oder einer Verbindung der Formel (II), die mehr als einen ungesättigten, organisch polymerisierbaren Rest aufweist.

Die erste Variante der zweiten Reaktion soll nachstehend anhand von Beispielen näher erläutert werden. Die ersten beiden dieser Beispiele gehen aus von dem Produkt des obigen ersten Beispiels für die erste Reaktion, das dritte Beispiel geht aus von dem Produkt des obigen zweiten Beispiels für die erste Reaktion:

Erstes Beispiel für die zweite Reaktion (Umsetzung einer hydroxygruppenhaltigen Verbindung mit einem Isocyanat, hier einem Isocyanat(meth)acrylat (Variante 1)

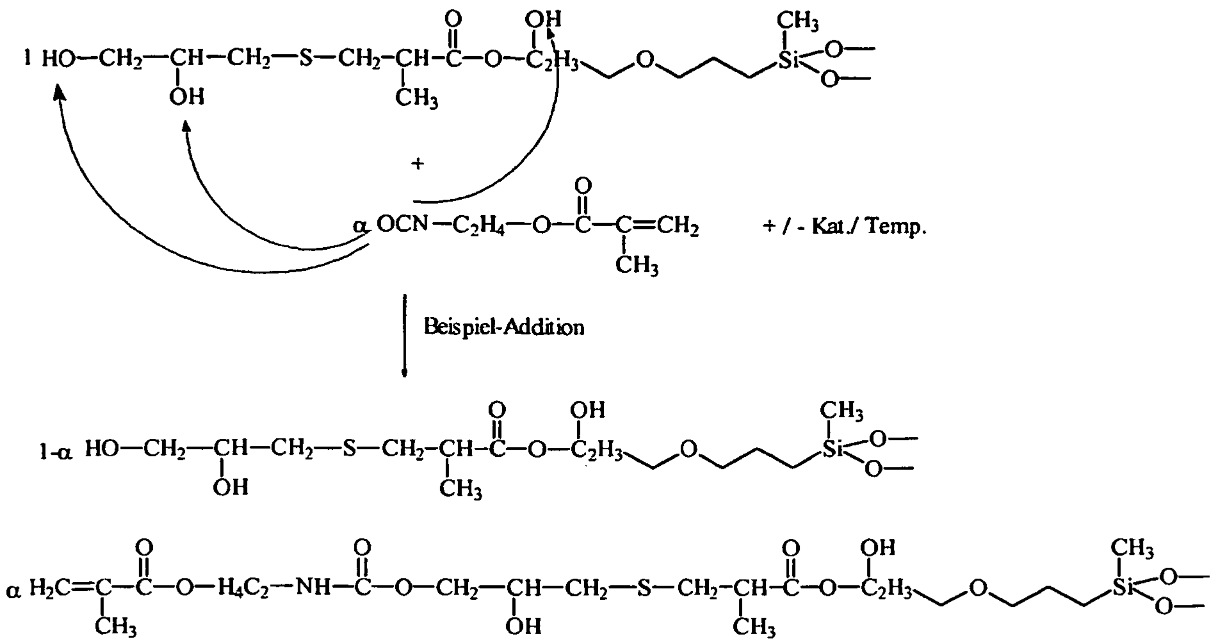


Das Produkt wird mit (3-1) bezeichnet. Der bevorzugte, aber nicht ausschließliche Angriffspunkt des Isocyanat-Methacrylats als Verbindung (II) ist die primäre Hydroxygruppe am Si-C-gebundenen Rest. Es entsteht daher eine Mischung mit vorwiegend einer Silyl-Methacrylat-Struktur, in der die Methacrylatgruppe gegenüber derjenigen der Ausgangsverbindung (1) um die Gruppierung $H_4C_2$-NH-C(O)O-$CH_2$-CH(OH)-$CH_2$-S nach außen verschoben wurde. Aufgrund der Tatsache, dass das Ausgangsmaterial für diese Reaktion nicht das reine Reaktionsprodukt der ersten Reaktion sein muss, sondern im Gemisch mit unumgesetztem Material der ersten Reaktion vorliegen kann, lässt sich ein fein abgestuftes Spektrum an Produkten mit stark, aber unterschiedlich verbesserten physikalische Eigenschaften wie Bruchfestigkeit, E-Modul oder Durchbiegung erzeugen, während die Härtungsschrumpfung überraschend nicht weiter steigt (siehe Ausführungsbeispiele 2b bis 2e mit den entsprechenden Werten für diese Parameter).

In diesem Beispiel kann wiederum ein Unterschuss an Verbindung (II) eingesetzt werden, so dass ein Teil des Ausgangsmaterials unumgesetzt bleibt, wie voranstehend für die erste Reaktion beschrieben (siehe Beispiel 6a). In diesem Beispiel kann jedoch stattdessen auch mehr als ein Mol-Äquivalent (II) eingesetzt werden, da insgesamt drei Hydroxygruppen am Si-C-gebundenen Rest vorhanden sind, die gegebenenfalls ebenfalls mit dem Isocyanat (II) reagieren können, siehe Ausführungsbeispiel 6b. Je nach eingesetzter Menge Verbindung (II), die bis zu 3 Moläquivalente betragen kann, entsteht entweder ein Gemisch mit teilweise umgesetzten sekundären Hydroxygruppen oder ein Si-C-gebundener Rest mit drei Methacrylatgruppen.

Erfolgt die Reaktion beispielsweise mit 3 Mol Verbindung (II) (d.h. $\alpha = 3$ im obigen Formelschema), erhält man ein Produkt mit der Struktur (3), worin alle drei Hydroxygruppen durch Methacrylatgruppen ersetzt sind. Ausgehend von einer Struktur mit einer C=C-Doppelbindung und einer Hydroxygruppe als den beiden funktionellen Gruppen des Ausgangsmaterials gelangt man also durch die Kombination der ersten und zweiten Reaktion z.B. zu Strukturen mit drei weit auseinanderliegenden Methacrylatgruppen, die jeweils an Seitenketten des Si-C-gebundenen Restes hängen (das Reaktionsschema ist weiter unten abgebildet; Struktur 3-2).

Natürlich kann die erste Variante der zweiten Reaktion auch mit Verbindungen (II) durchgeführt werden, in denen b größer 1 ist. Ein Beispiel für eine Umsetzung (II) mit b = 2 wird nachstehend gezeigt, die entstehende Struktur wird mit (3-3) bezeichnet:

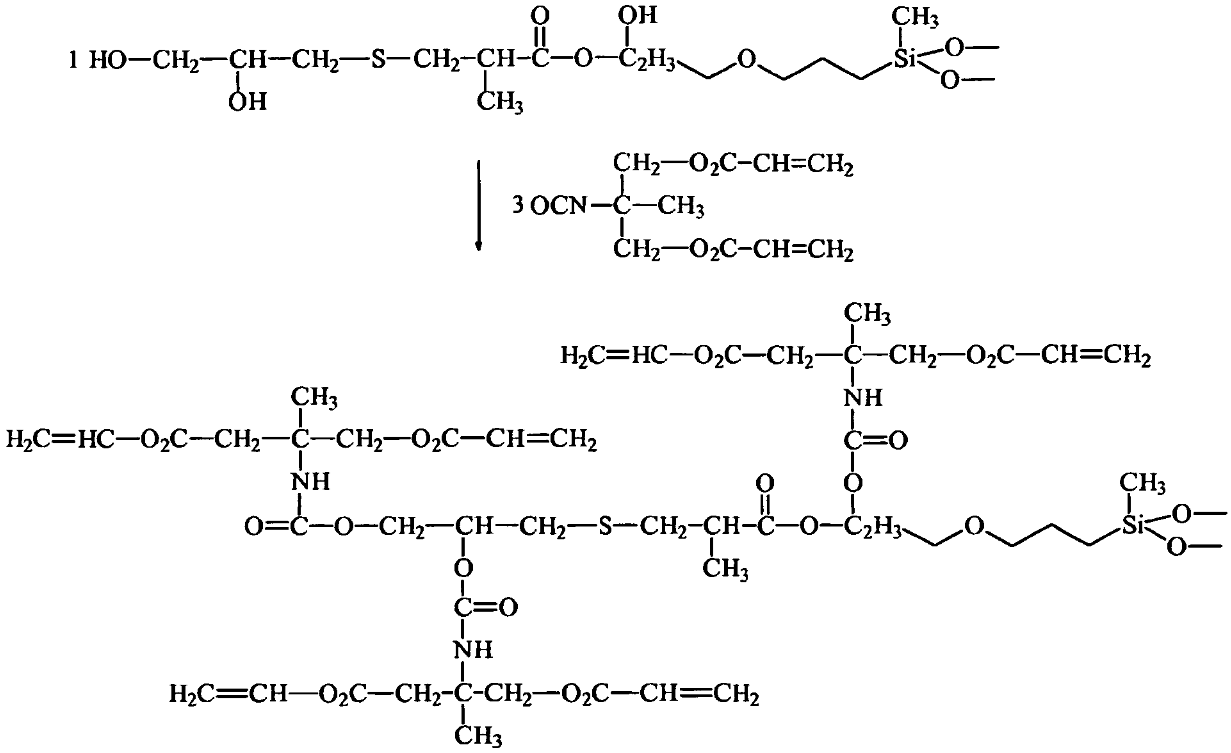

In dieser Struktur (3-3) ist der ursprüngliche Rest $R^2$ ebenfalls umgesetzt und hat daher seine Bedeutung gegenüber der Definition in Struktur (1) verändert in B-$(W)_k$-$(R^1)_b$. Dies gilt selbstverständlich auch für alle vergleichbaren Reaktionen: Wenn $R^2$ in einer Struktur (2) die Bedeutung Z (gleich oder verschieden von den restlichen Gruppen Z der Struktur (2)) besitzt, kann dieser Rest grundsätzlich an den nachfolgenden Reaktionen beteiligt sein und seinerseits zur Verschiebung von Resten nach außen bzw. der Dendrimerisierung beitragen.

Die Reaktionen erfolgen analog, wenn das Edukt anstelle von Hydroxygruppen carboxylgruppenhaltige Gruppen trägt; es entstehen dann Säureamidgruppen.

Zweites Beispiel für die zweite Reaktion (Variante 1):

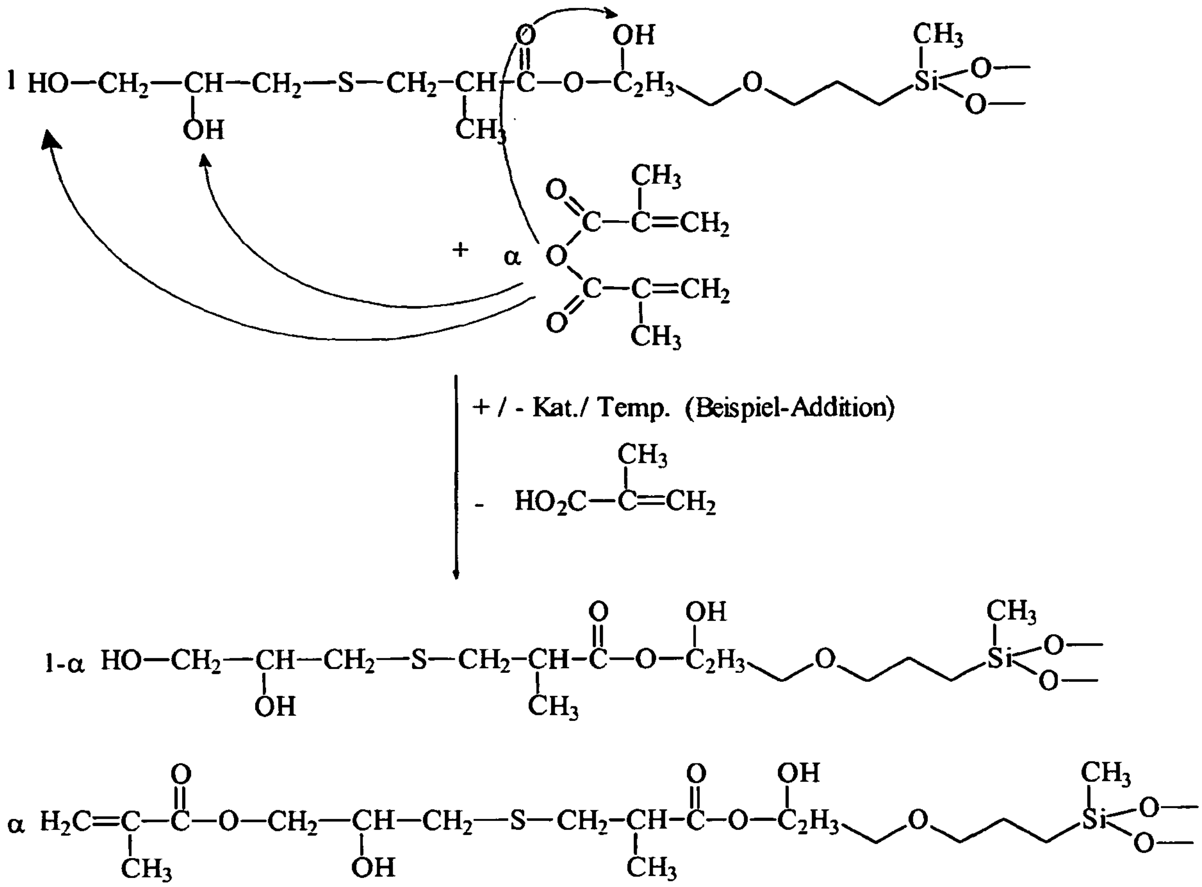


Dieses Beispiel unterscheidet sich vom vorhergehenden dadurch, dass anstelle eines Isocyanats ein Anhydrid (hier das Anhydrid der Methacrylsäure) verwendet wird; das Produkt ist um eine Ethylurethaneinheit kürzer als dasjenige des ersten Beispiels für diese Reaktion. Dasselbe Produkt ließe sich mit einer anderen aktivierten Methacrylsäure erhalten, z.B. mit Methacrylsäurechlorid. Auch hier lässt sich eine extreme Steigerung der Festigkeit und des E-Moduls im Vergleich zum Ausgangsmaterial beobachten (siehe auch Ausführungsbeispiel 3).

Hinsichtlich der molaren Verhältnisse gilt jeweils dasselbe wie für das voranstehende Beispiel beschrieben.

Drittes Beispiel für die zweite Reaktion (Variante 1):

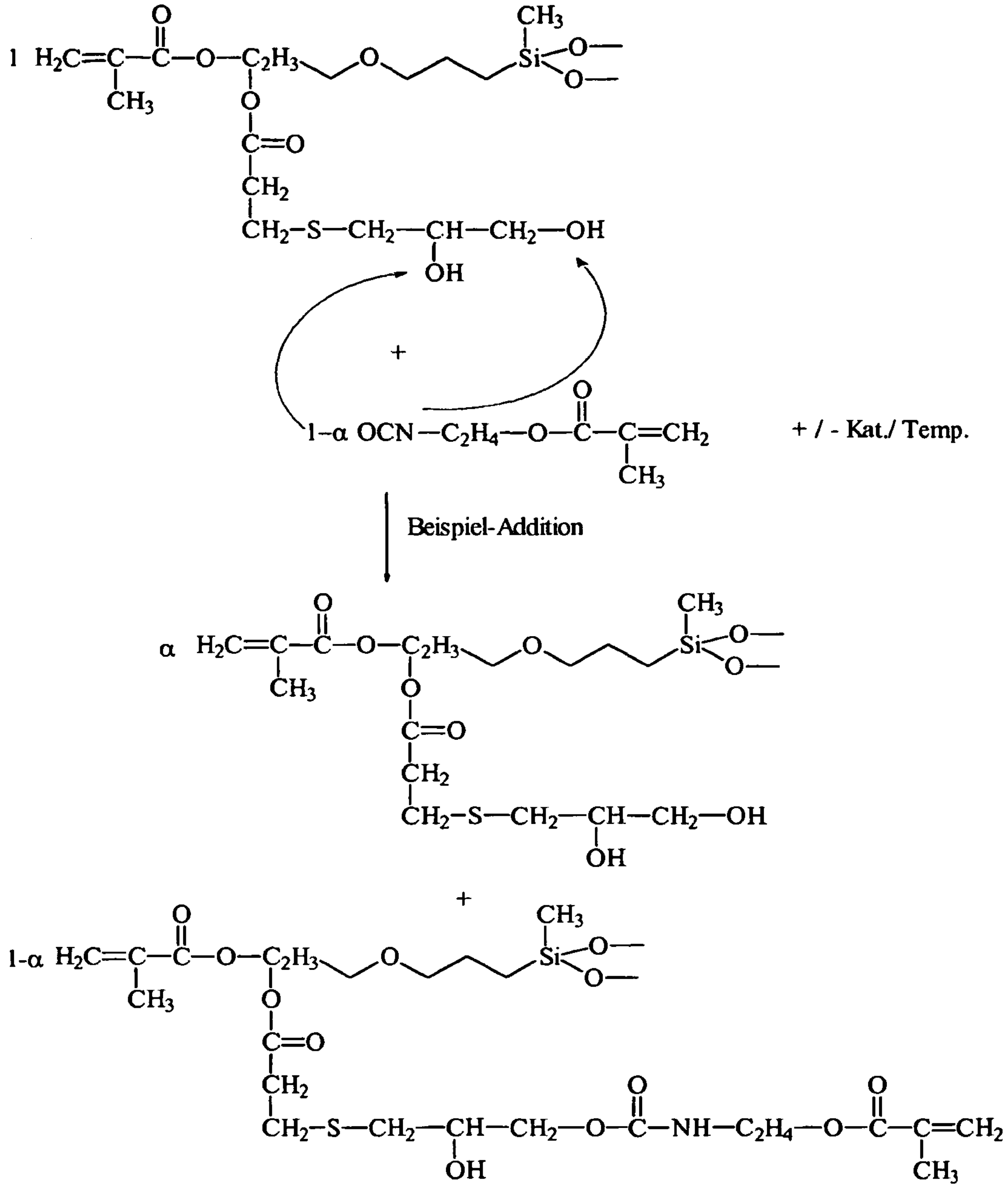


Auch hier können wiederum entweder (knapp) ein Mol Isocyanat der Formel (II) oder aber bis zu zwei Mol Isocyanat eingesetzt werden; man erhält dementsprechend ein Produkt, bei dem die Methacrylatgruppe im Vergleich zum Ausgangsmaterial deutlich nach außen verschoben ist und das entweder eine zweite Methacrylatgruppe oder aber eine zusätzliche Hydroxygruppe trägt. Hinsichtlich der letzteren Variante sei auch auf die Ausführungsbeispiele 6a und 6b verwiesen: Die Addition des Isocyanatmethacrylats führt zu einer extremen Steigerung der Bruchfestigkeit, des E-Moduls bei hoher Durchbiegung.

Anstelle eines Produkts der ersten Reaktion, das durch Umsetzung mit einer Mercapto-Verbindung erhalten wurde, kann z.B. ein mit einem Amin erhaltenes Produkt als Ausgangsmaterial eingesetzt werden, z.B. das oben gezeigte Produkt der Umsetzung einer Struktur mit der Formel (D) mit einem Hydroxyamin, das hier mit Isocyanat-Methacrylat umgesetzt wird:

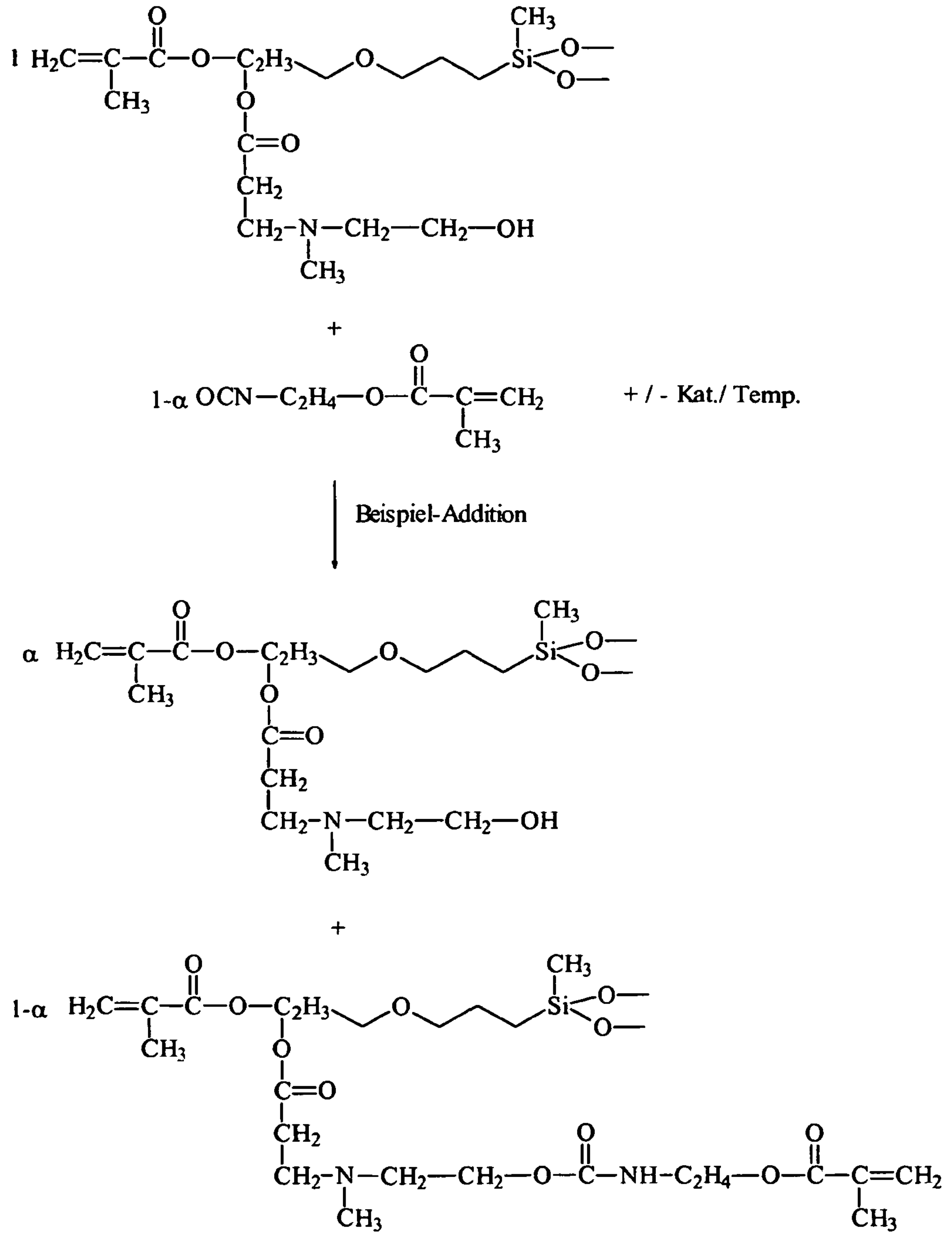


Wird anstelle des Produkts der Umsetzung der oben gezeigten Struktur mit der Formel (D) dasjenige mit Di(2-hydroxyethyl)amin verwendet, erhält man ein Gemisch, siehe z.B. das Ausführungsbeispiel 10a. Je nach eingesetzten Mengen an Verbindung (I) bzw. Verbindung (II) relativ zum Basisharz variieren die Eigenschaften des Produkts, siehe Ausführungsbeispiele 8a bis 8c.

Die Produkte (3) der ersten Variante der zweiten Reaktion enthalten doppelbindungshaltige, organisch polymerisierbare Gruppen, die im Vergleich zum Ausgangsmaterial in einem größeren Abstand zum Si-Atom auf den Si-C-gebundenen Resten angeordnet sind. Dies ist ein Ziel der vorliegenden Erfindung. In dieser Form können sie weiterverwendet werden.

In einer Weiterbildung der Erfindung können sie jedoch wiederum als Ausgangsmaterial für einen weiteren Zyklus aus erster und ggf. zweiter Reaktion dienen. Dadurch lassen sie u.a. die ungesättigten, organisch polymerisierbaren Gruppen noch weiter nach außen verschieben; stattdessen können Produkte mit zusätzlichen reaktiven Gruppen wie oben beschrieben erhalten werden. Wenn dabei weitere funktionelle Gruppen eingeführt werden, die bei den oben beschriebenen Umsetzungen ebenfalls angegriffen werden können, kann man dendrimerartige Strukturen erhalten. Bevor dies näher ausgeführt wird, sei jedoch die zweite Variante der zweiten Reaktion dargestellt:

In der zweiten Variante der zweiten Reaktion wird das Silan oder das Kieselsäurepolykondensat mit der Struktur (2), worin Z = OH oder COOH bzw. ein Carbonsäuresalz bedeutet, mit einer Verbindung der Formel (III) umgesetzt:

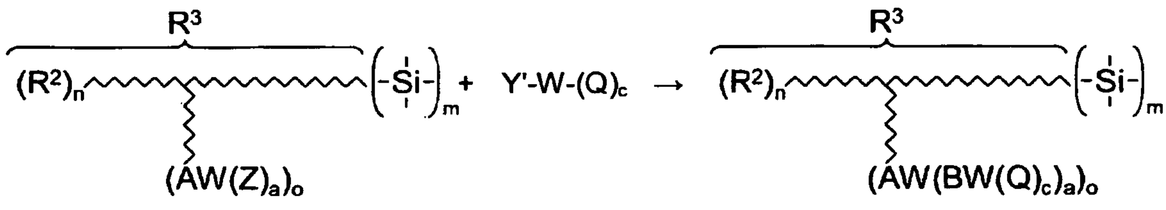

(2) (III) (4)

worin Y' entweder wie Y für die Verbindung (II) definiert ist oder, im Falle von Z gleich COOH, ein Ester oder ein Salz davon, statt dessen die Bedeutung $NHR^4$, $NH_2$, oder OH mit $R^4$ gleich unsubstituierter oder substituierter Kohlenwasserstoff, insbesondere Alkyl oder Aryl, haben kann und im Falle von Z gleich OH die Bedeutung COOH, ein Ester oder ein Salz davon haben kann, W wie für die Verbindung (II) definiert ist und Q OH, $NR^7_2$, $NR^7_3{}^+$, $CO_2H$, $SO_3H$, $PO(OH)_2$ $PO(OR^4)_2$, $OPO(OH)_2$, $OPO(OR^4)_2$ oder ein Salz der vorgenannten Säuren ist, oder worin Y' und Q zusammen die Gruppe -C(O)O(O)C- bilden und W eine geradkettige, verzweigte oder cyclische Alkylen- oder Alkenylengruppe mit vorzugsweise 2 bis 12 Kohlenstoffatomen oder eine Arylengruppe mit vorzugsweise 6 bis 12 Kohlenstoffatomen ist (mithin die Verbindung ein Anhydrid ist). c bedeutet 1, 2, 3 oder 4 oder eine höhere ganze Zahl. $R^7$ kann dieselbe Bedeutung wie $R^4$ haben. Zwei Reste $R^7$ können zusätzlich zu dieser Bedeutung zusammen auch eine zweibindige, gegebenenfalls beliebig substituierte, gegebenenfalls ungesättigte (auch aromatische) Kohlenwasserstoffgruppe bedeuten; demnach können $NR^7_2$ und $NR^7_3{}^+$ z.B. auch ein Pyridin-Rest oder der Rest einer cyclischen Ammoniumverbindung oder eines Pyridinium-Derivats oder dgl. sein. Reste Q mit der Bedeutung $NR^7_2$ oder $NR^7_3{}^+$ können wichtige zusätzliche Funktionen in einem erfindungsgemäß hergestellten Harz haben. So entsteht im Falle Z gleich von $NR^7_2$ ein Aktivatormolekül, das für eine Redox-Härtung wie oben angesprochen genutzt werden kann. Verbindungen bzw. Harze mit $NR^7_3{}^+$-Resten zeigen eine antimikrobielle Wirkung.

Umsetzungen von Aminosulfonsäuren wie z.B. 2-Aminoethansulfonsäure sind im Prinzip bekannt und z.B. in der (am Prioritätstag der vorliegenden Anmeldung noch nicht veröffentlichten) Anmeldung DE 10 2011 050 672.1 beschrieben.

Sofern es sich bei dem Rest $R^2$ um einen ungesättigten, organisch polymerisierbaren Rest oder COOH handelt und Y' $NHR^4$ oder $NH_2$ ist, kann natürlich je nach Reaktionsbedingungen in manchen Fällen nicht ausgeschlossen werden, dass auch $R^2$ von der Aminogruppe der Verbindung (III) angegriffen wird. In solchen Fällen erhält man Gemische, die ebenfalls von der Erfindung umfasst sind.

Ein erstes Beispiel für die zweite Variante der zweiten Reaktion - hier in Kombination mit der ersten Reaktion - ist nachstehend gezeigt:

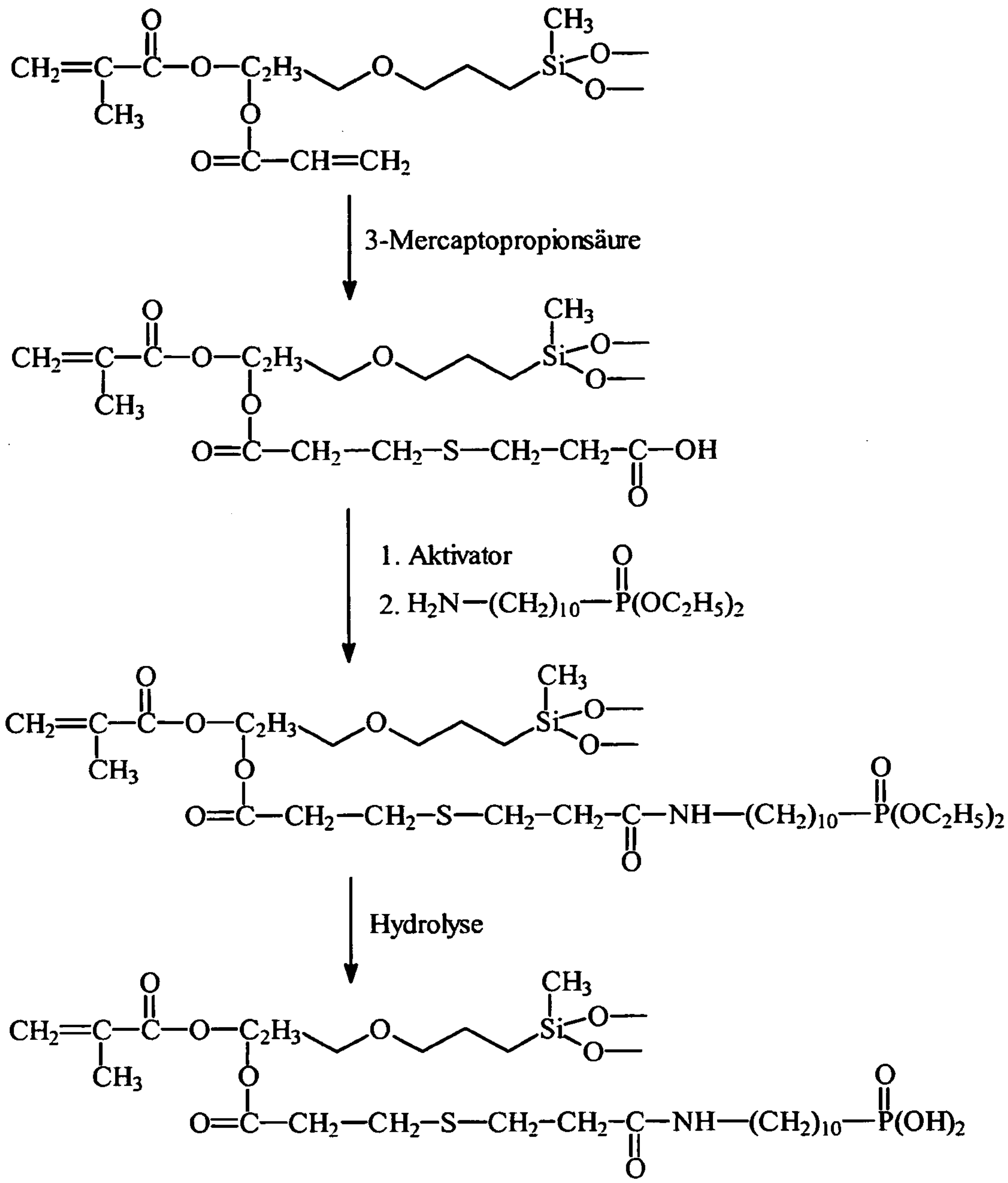


Ausgehend von einer Struktur der Formel (1), worin $R^1$ und $R^2$ jeweils eine ungesättigte, organisch polymerisierbare Gruppe, hier eine Acrylat- und eine Methacrylatgruppe, sind und m und n jeweils 1 bedeuten, wird durch Umsetzung mit Mercaptopropionsäure (Verbindung der Formel (I) mit X = SH, Z = -COOH und a = 1) erst einmal eine Struktur mit der Formel (2) erzeugt, worin die Kupplungsgruppe A = S ist. Diese bildet sich insbesondere bei Verwendung (höchstens) eines Mols Mercaptopropionsäure pro Mol Silan, weil die SH-Addition bevorzugt an der Acrylatgruppe abläuft. Damit ist die Bildung des obigen Produkts begünstigt. Dieses Produkt wird sodann mit einer Verbindung mit der Formel (III) umgesetzt, worin Y' $NH_2$ bedeutet und Q - $P(O)(C_2H_5)_2$ ist. Es entsteht eine Struktur der Formel (4), worin die Kupplungsgruppe B eine Säureamidgruppe ist. Durch Hydrolyse lässt sich darin die Gruppe Q in $-P(O)(OH)_2$ umwandeln.

Ein zweites Beispiel für diese Reaktion sei anhand der Umsetzung mit einer Verbindung (III) dargestellt, worin Y' und Q zusammen die Gruppe-C(O)O(O)C- bilden und W eine Ethylengruppe ist (d.h. mit Bernsteinsäureanhydrid):

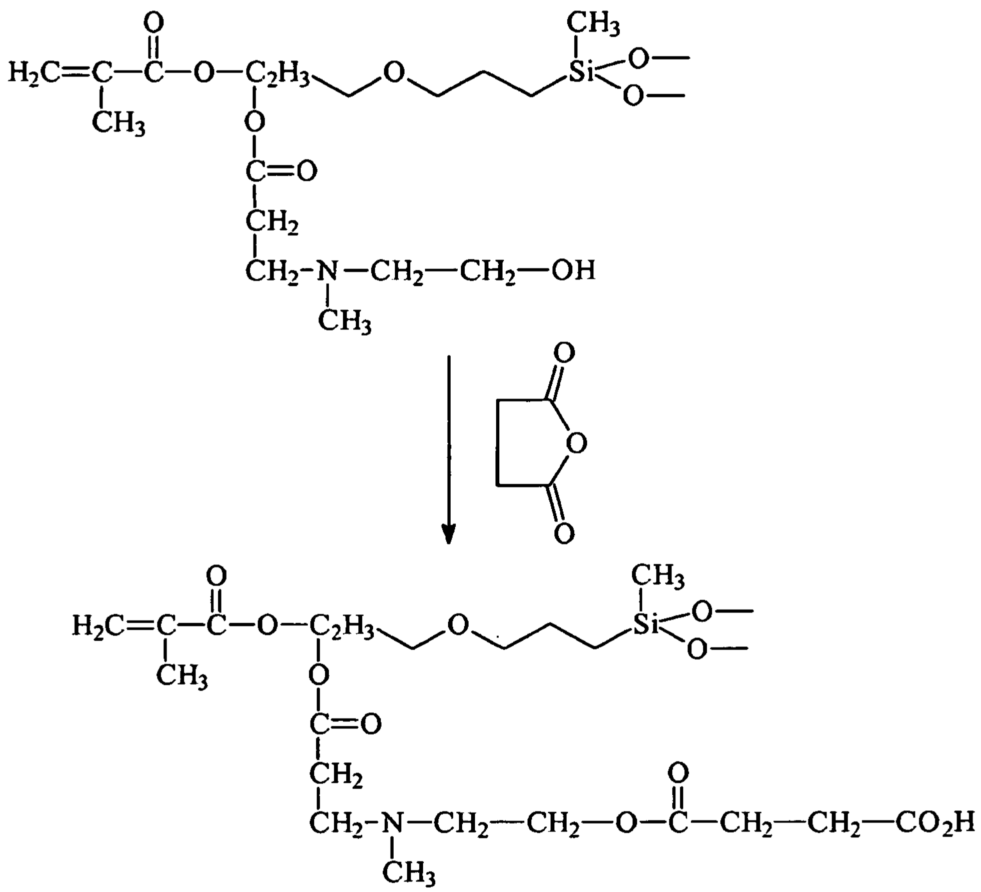

Es entsteht eine Struktur der Formel (4) mit einer Kopplungsgruppe A = $NR^4$ mit $R^4$ =$CH_3$ und einer Kopplungsgruppe B = OC(O) (einer Estergruppe). Die verlängerte Kette trägt an ihrem Ende eine freie Carbonsäuregruppe, die aus dem Bernsteinsäureanhydrid stammt. Dabei ist darauf hinzuweisen, dass sich diese Umsetzung durch die obige Reaktionsgleichung (2) + (III) $\rightarrow$ (4) nicht ganz korrekt darstellen lässt, denn Q in (III) ist in diesem Falle nicht identisch mit Q in (4).

Gemäß der dritten Variante der zweiten Reaktion wird das Produkt der ersten Reaktion, worin Z gleich OH ist, mit Phosphorpentoxid ($P_2O_5$) oder Phorphoroxychlorid ($POCl_3$) umgesetzt. Es entsteht ein Produkt mit der Formel (9):

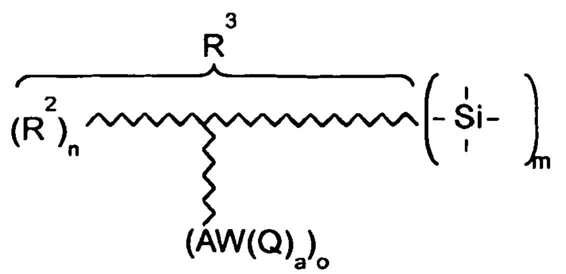

(9)

worin Q die Bedeutung -O-P(O)$(OH)_2$ besitzt, während alle anderen Reste und Indices wie in Formel (2) definiert sind.

Das Produkt (4) der zweiten Variante der zweiten Reaktion kann das Endprodukt dieser Ausführungsform der Erfindung sein; gegenüber der Anzahl der Reste $R^1$ im Ausgangsmaterial findet sich darin die mit c multiplizierte a-fache Anzahl an reaktiven Gruppen Q in einem Abstand zum Siliciumatom, der gegenüber dem ursprünglichen Rest $R^1$ um A-W-B-W- nach außen geschoben ist. Das Produkt (9) der dritten Variante entspricht dem Produkt (4) für den Fall, dass Q die Bedeutung -O-P(O)$(OH)_2$ besitzt mit der Änderung, dass Q gegenüber dem ursprünglichen Rest $R^1$ nur um -A-W- nach außen geschoben ist. Die Eigenschaften, die durch die Anbindung dieser funktionellen Reste entstehen, wurden teilweise bereits voranstehend erläutert. Weitere Vorteile liegen darin, dass im Produkt (4) die funktionellen Gruppen relativ zum Silicium weit außen im Molekül liegen und aufgrund der langen Ketten gut beweglich sind. Dies ist wichtig für mögliche zusätzliche Wirkungen wie den oben erläuterten antibakteriellen Effekt oder die Komplexierungs- oder

Haftungseigenschaften von z.B. Carbonsäure-, Phosphonsäure- oder Phosphorsäuregruppen, die wegen des außenliegenden Sitzes der entsprechenden Gruppen extrem verbessert sind (z.B. viele effektive "Greifstellen" bilden).

Wie bereits oben erläutert, kann das Produkt (3), das gemäß der ersten Variante der zweiten Reaktion gebildet wird, einer weiteren Umsetzung oder einem weiteren Zyklus von Umsetzungen unterworfen werden. Die nächste, nämlich die dritte Reaktion kann wiederum in zwei Varianten erfolgen:

In der ersten Variante wird das Produkt (3) analog zur ersten Reaktion mit einer Verbindung der Formel (I) umgesetzt, wobei die Reste und Indices die vorgenannten Bedeutungen haben:

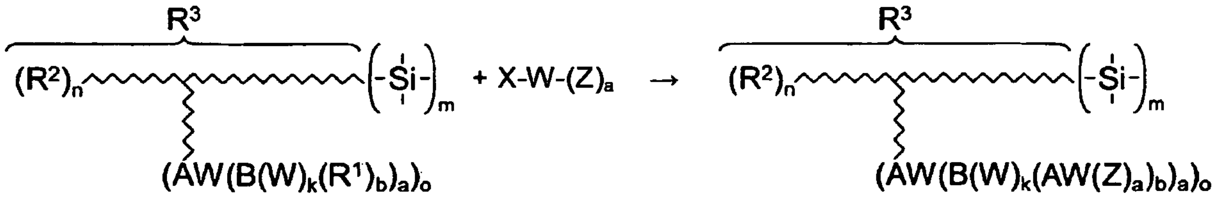

(3) (I) (5)

Es entsteht ein Produkt, in dem der Rest Z in einer Anzahl am Si-C-gebundenen Rest vorhanden ist, der dem $a^2$b-fachen von o entspricht; mit anderen Worten, anstelle des oder jedes der ursprünglich vorhandenen Reste $R^1$ im Ausgangsmaterial (1) finden sich a a b Reste Z in der Struktur (5). Wenn z.B. als Verbindung mit der Formel (I) eine Dihydroxyverbindung verwendet wurde, wie in den obigen Beispielen gezeigt, während als Verbindung (II) ein (Mono-)Methacrylat verwendet wurde, enthält das Produkt (5) vier organisch polymerisierbare doppelbindungshaltige Reste anstelle jedes ursprünglichen Restes $R^1$ an einem Si-C-gebundenen Rest (dessen Anzahl entspricht dem Index c). Enthält die Verbindung mit der Formel (I) nur eine Hydroxygruppe, ist es nur ein solcher Rest. Entsprechendes gilt für den Fall, dass der Index b in der Verbindung (II) größer 1 ist. Das Entstehen dendrimerartiger Strukturen ist ersichtlich. Die Reste Z sind darüber hinaus im Vergleich zum Ausgangsmaterial (1) um die Gruppierung A-W-B-W-A-W nach außen geschoben.

Ein Beispiel für die erste Variante der dritten Reaktion ist nachstehend gezeigt:

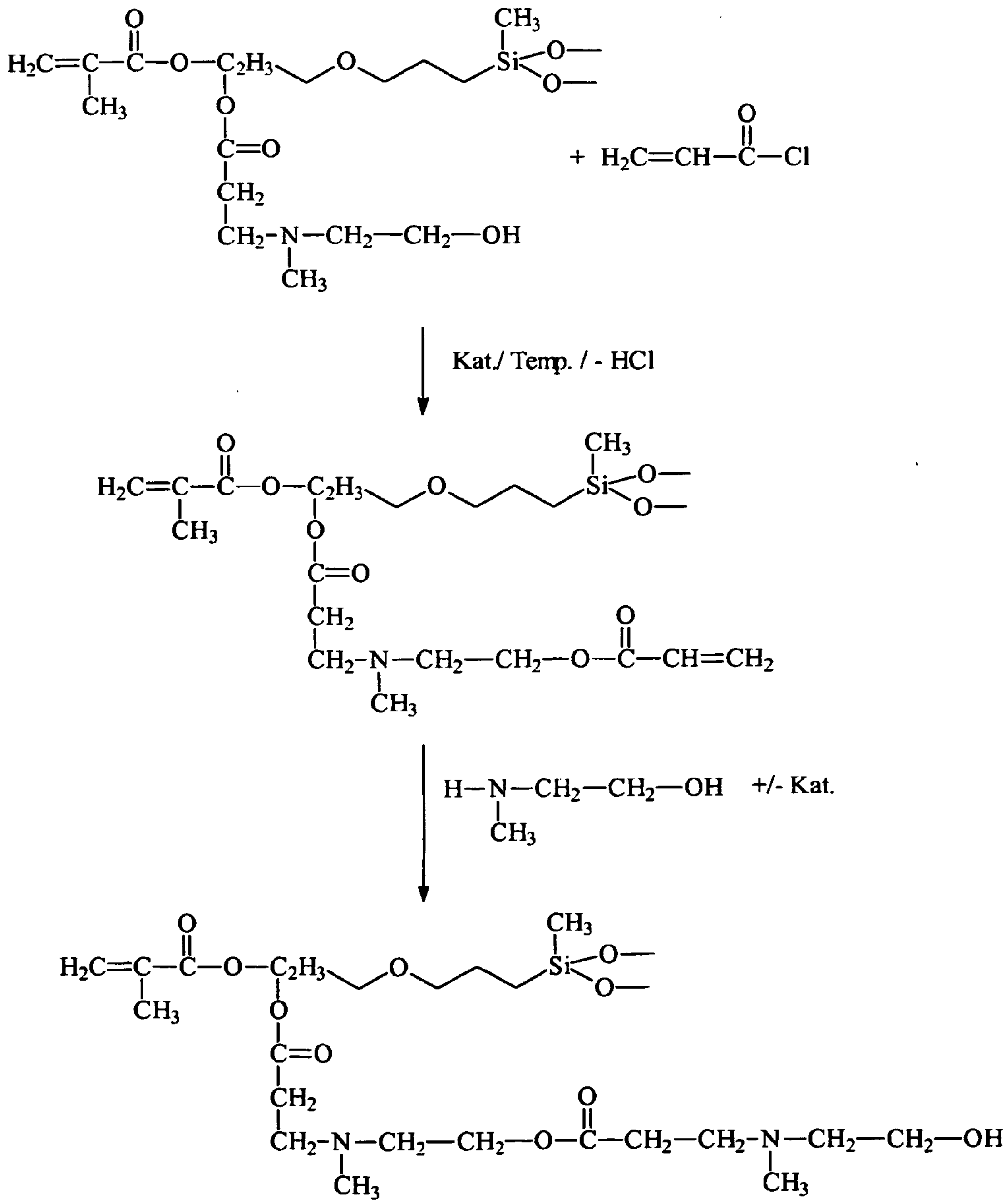


Ausgehend vom Produkt des oben gezeigten dritten Beispiels der ersten Reaktion wird durch Umsetzung mit einer Verbindung (II), worin Y = COA', hier mit A' = Chlorid, $R^1$ = Vinyl, b = 1 und k = 0 ist, eine Struktur (3) mit A = $NR^4$, $R^4$ = $CH_3$, B = Estergruppe gebildet (a und o sind hier ebenfalls jeweils 1). Diese wird wiederum mit einer Verbindung der Formel (I) umgesetzt, worin X = $NHR^4$ mit $R^4$ = $CH_3$, Z = OH und a = 1 ist. Es entsteht eine Struktur (5), in der die zweite Kupplungsgruppe A wiederum $NR^4$ mit $R^4$ = $CH_3$ ist. Die anderen Gruppen, Reste und Indices ergeben sich aus den obigen Erläuterungen zu den Reaktionen und Verbindungen. Diese wird als Struktur (5-1) bezeichnet.

Geht man stattdessen von der oben erläuterten Struktur (3-2) aus, die - in der zweiten Reaktion - durch Umsetzung einer Struktur (2), die drei Hydroxygruppen enthält, mit 3 Äquivalenten Verbindung (II) erhalten wurde:

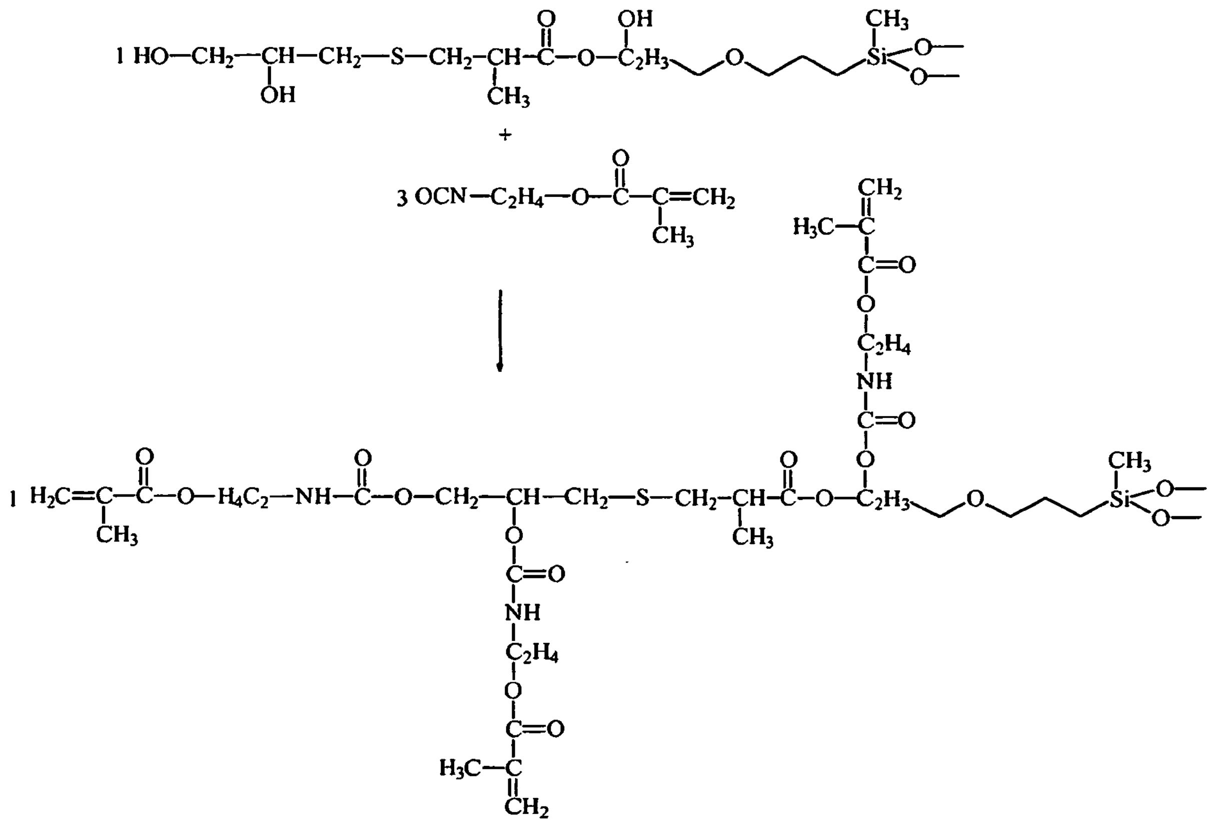

und setzt diese mit einer den Resten $R^1$ äquimolaren Menge an Verbindung (I) um, gelangt man zu einer dendrimerartgen Struktur der Formel (5), hier als (5-2) bezeichnet (Man erkennt, dass die dabei entstandenen reaktiven Gruppen Z, hier Hydroxygruppen, jeweils paarweise weit außen an drei langen Seitenketten des Si-C-gebundenen Restes hängen und damit eine dendrimerartige Struktur ausbilden):

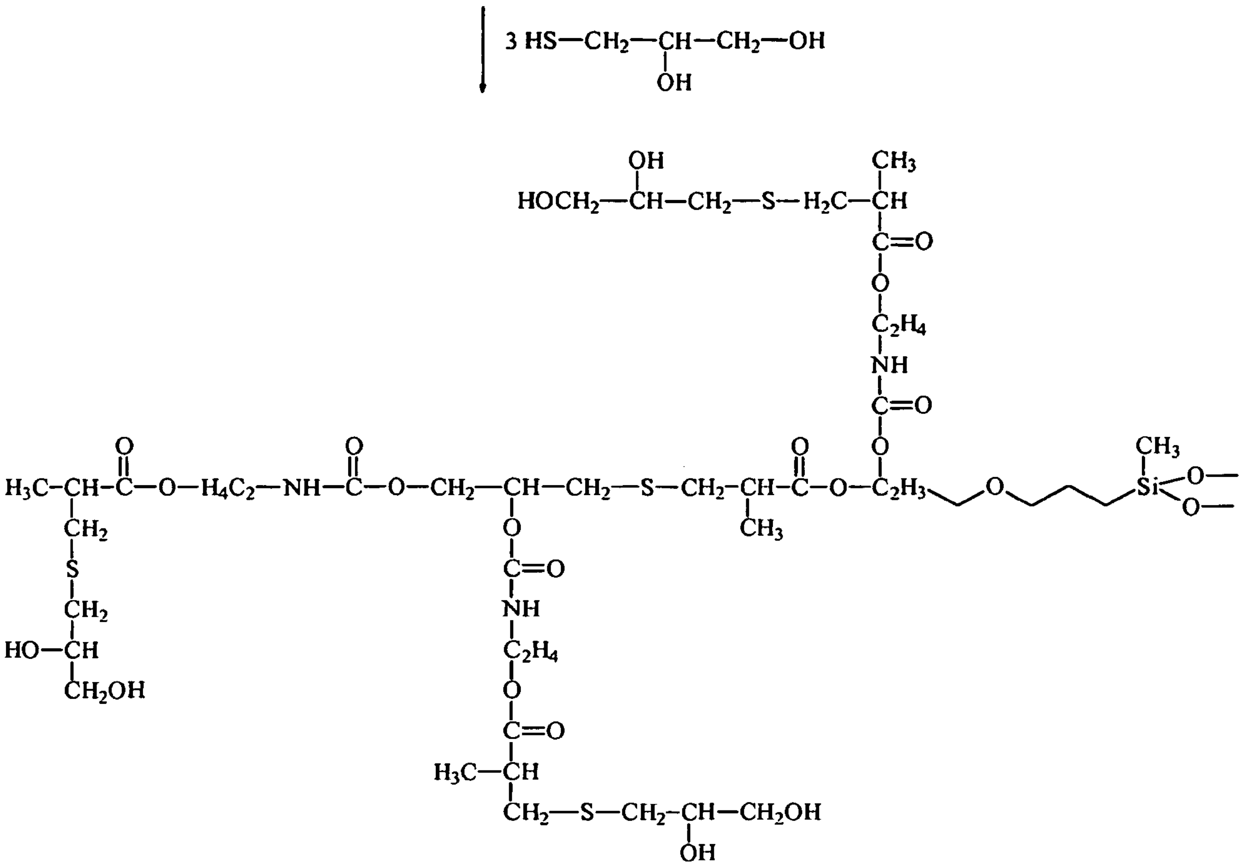

Da in der Struktur (3-2) wie in Struktur (3-3) der Rest $R^2$ ebenfalls seine Bedeutung gegenüber der Definition in Struktur (1) verändert hat in $B\text{-}(W)_k\text{-}(R^1)_b$, und dieser Rest seinerseits mit umgesetzt wurde, hat in der Struktur (5-2) der ehemalige Rest $R^2$ nun die Bedeutung $B(W)_k\text{-}AW(Z)_a)_b$.

Geht man statt dessen von der oben erläuterten Struktur (3-3) aus, wie oben beschrieben, und setzt diese ebenfalls äquimolar (bezogen auf die Reste $R^1$) mit einer Verbindung (I) um, in der a = 2 ist, erhält man ein Produkt (5-3) mit 12 Hydroxyresten:

(3-3)

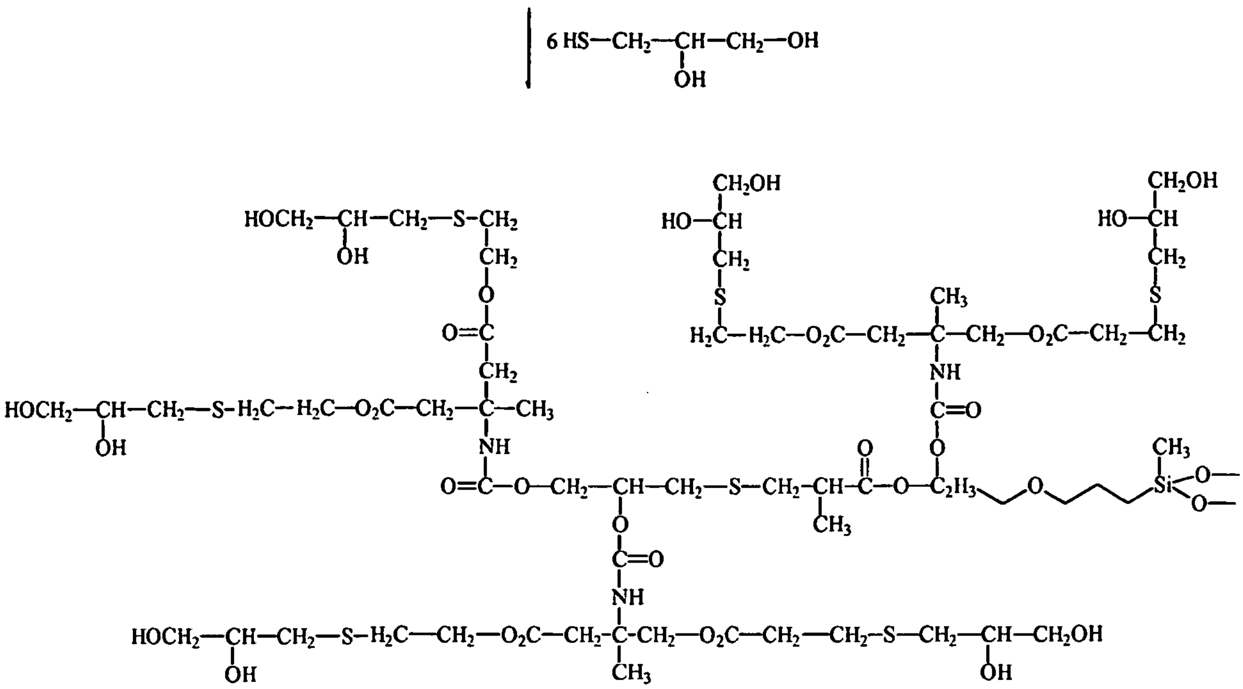

Man erkennt, dass der Si-C-gebundene Rest in (5-3) 6-fach verzweigt ist, wobei an jedem der Zweige zwei OH-Gruppen paarweise relativ dicht beieinander angeordnet sind.

In der zweiten Variante der dritten Reaktion wird das Produkt (3) ähnlich der 2. Variante der zweiten Reaktion umgesetzt, und zwar mit einer Verbindung mit der Formel (IV), worin die Reste und Indices die für die Formeln (I) und (III) angegeben Bedeutung besitzen:

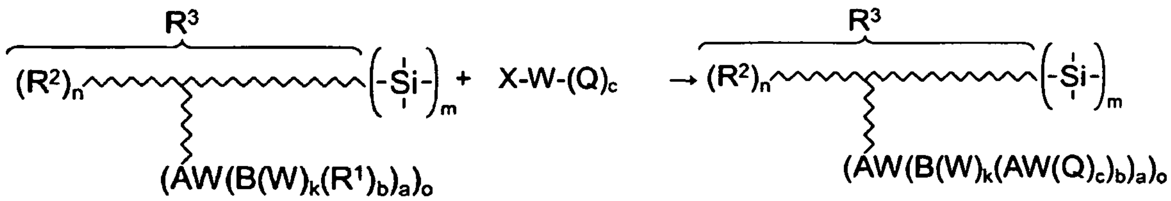

(3) (IV) (6)

Struktur (6) ist mit Struktur (4) vergleichbar, wobei jedoch die Zahl der Reste Q gegenüber (4) noch um den Faktor b (aufgrund der Reaktion mit der Verbindung (II)) vergrößert ist und diese Reste sich um eine Gruppierung A-W weiter vom Si-Atom entfernt angeordnet befinden. Die Wirkungen sind dementsprechend gegenüber den für (4) geschilderten nochmals verstärkt Ein Beispiel, das wie zuvor gezeigt von einer Struktur (3) mit drei weit auseinanderliegenden doppelbindungshaltigen Gruppen ausgeht, ist nachstehend dargestellt. In der Verbindung (IV) ist in diesem Beispiel X eine SH-Gruppe, Gel eine Carbonsäuregruppe und W eine 2 C-Atome enthaltende Kohlenwasserstoffgruppe. c bedeutet in dieser Formel 2:

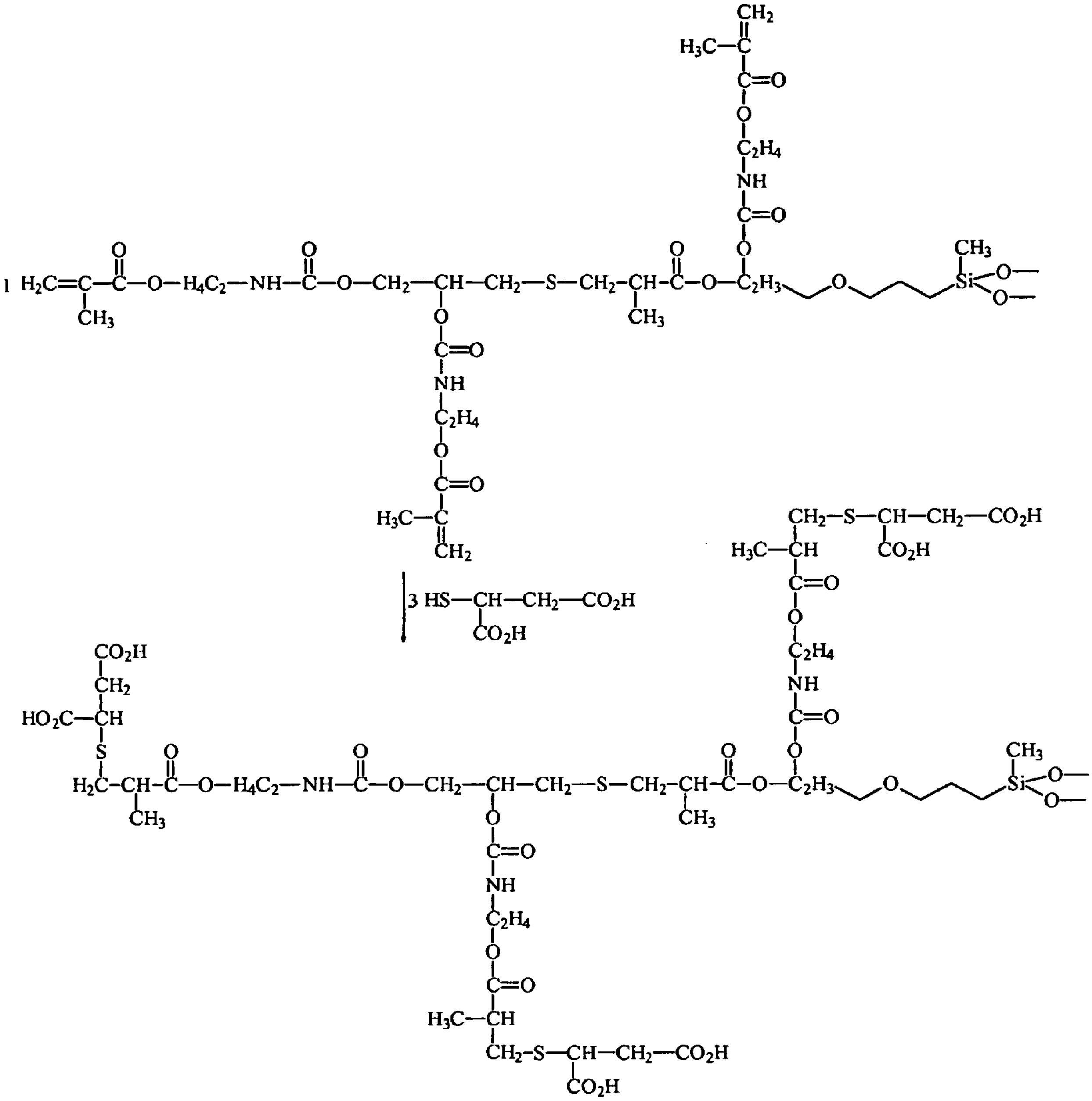

Diese Struktur (als 6-1 bezeichnet) ähnelt der obigen Struktur (5-2), enthält jedoch anstelle der sechs reaktiven Gruppen Z = OH sechs COOH-Gruppen.

Das Produkt (5) der ersten Variante der dritten Reaktion kann seinerseits wiederum in zwei Varianten einer vierten Reaktion unterworfen werden, und zwar wiederum mit einer Verbindung mit der Formel (II) bzw. mit der Formel (III). Die Produkte lassen sich wie folgt darstellen, wobei die Reste und Indices die vorgenannten Bedeutungen besitzen:

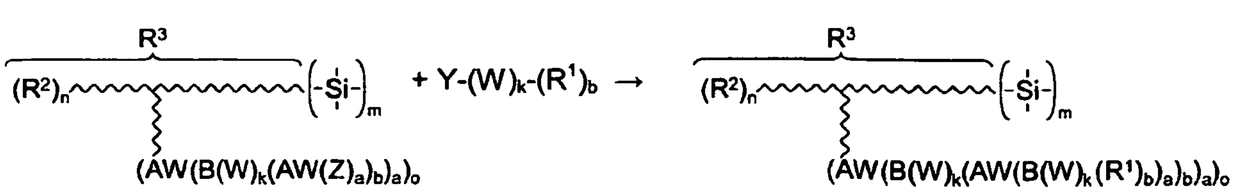

(5) (II) (7)

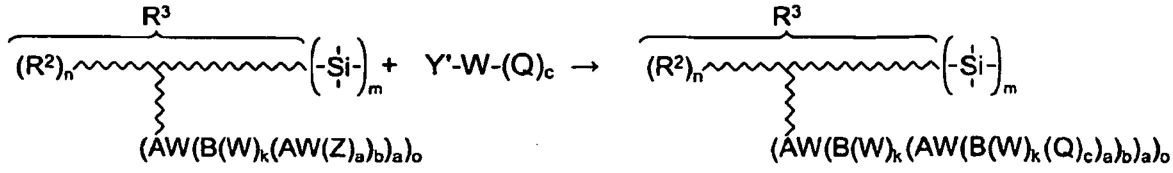

(5) (III) (8)

Die dabei entstehenden Produkte sind jeweils mit den Produkten der beiden Varianten der dritten Reaktion vergleichbar, wobei die Anzahl der Reste $R^1$ jedoch b-fach, die Anzahl der Reste Q jedoch a-fach im Vergleich mit den Produkten (5) und (6) vorhanden sind, und zwar mit einem nochmals vergrößerten Abstand zum Si-Atom. Die Vorteile entsprechen demnach den zu den Produkten (3) und (4) beschriebenen, sind dabei jedoch nochmals verstärkt. Entsprechend können die Reste $R^2$ in (7) und (8) die Bedeutung $B(W)_k(AW(B(W)_k(R^1)_b)_a)_b$ bzw. $B(W)_k(AW(BW)_k(Q)_c)_a)_b$ haben.

Ein Beispiel für die Verlängerung der Struktur (5) gemäß der ersten Variante der vierten Reaktion mit einer Verbindung der Formel (II) unter Entstehung der Struktur (7) sei nachstehend gezeigt; darin wird vom Produkt der ersten Variante der dritten Reaktion (5-1) ausgegangen, dessen Herstellung oben beispielhaft gezeigt wurde:

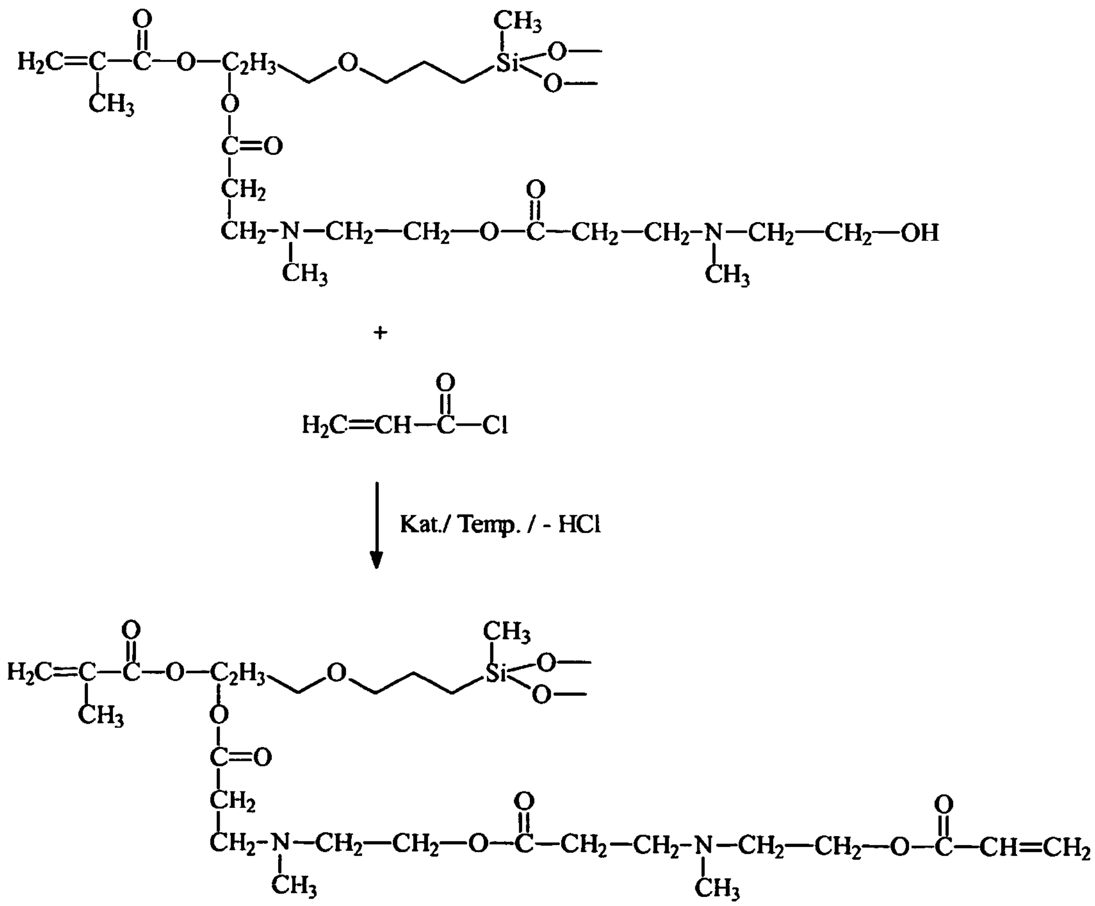


Die Umsetzung erfolgt wiederum mit einer Verbindung (II) mit $Y = CO_{A'}$ mit A' = Chlorid, $R^1$ = Vinyl, b = 1 und k = 0. Das Produkt (7) enthält dementsprechend zwei Kupplungsgruppen $A = NR^4$ mit $R^4 = CH_3$ sowie zwei Kupplungsgruppen B = Estergruppe.

Setzt man allerdings als Ausgangsmaterial (5) ein solches mit Strukturen ein, die eine höhere Anzahl von reaktiven Gruppen Z enthalten, z.B. die oben gezeigte Struktur (5-2) mit 6 Hydroxygruppen, erhält man bei dieser Umsetzung ein Produkt mit einer Struktur (7) (Struktur(7-1)) mit einer entsprechend hohen Anzahl (nämlich 6) der doppelbindungshaltigen Reste $R^1$, wobei nun auch die paarweise angeordneten doppelbindungshaltigen Reste, hier Methacrylatgruppen, einen deutlichen Abstand zueinander aufweisen:

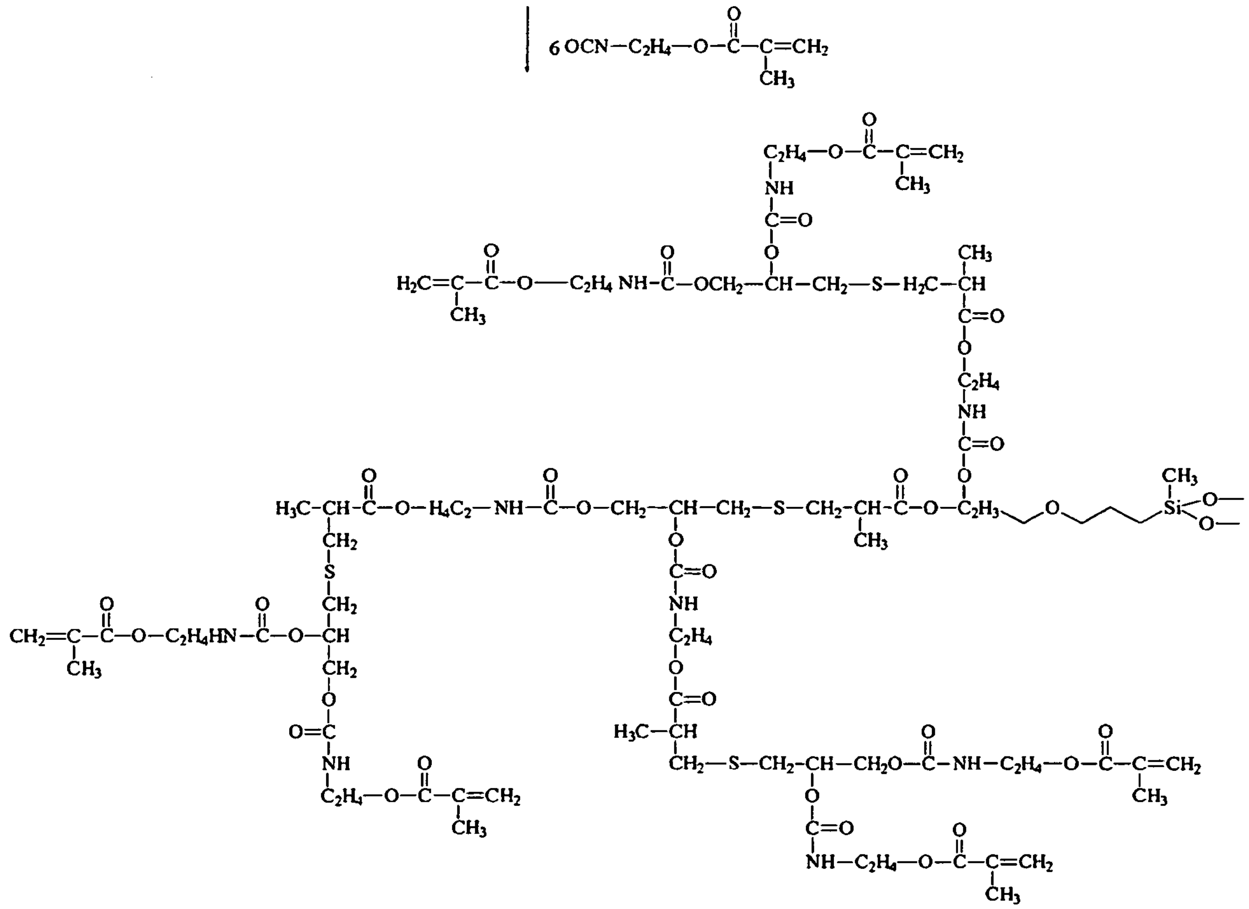

Ein Beispiel für eine vergleichbare Reaktion von (5) mit (II) nach (7) ist die Umsetzung der Struktur (5-3) mit der folgenden Verbindung (II):

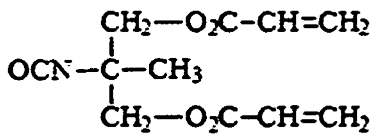

Das Produkt hat die Struktur (7) und besitzt 12 doppelbindungshaltige Gruppen (Struktur (7-2)).

Ausgehend von (5-2) erhält man bei der Umsetzung mit dem Molekül (III) (hier Bernsteinsäureanhydrid) eine Struktur (8) mit 6 Carbonsäuregruppen, die vergleichbar angeordnet sind:

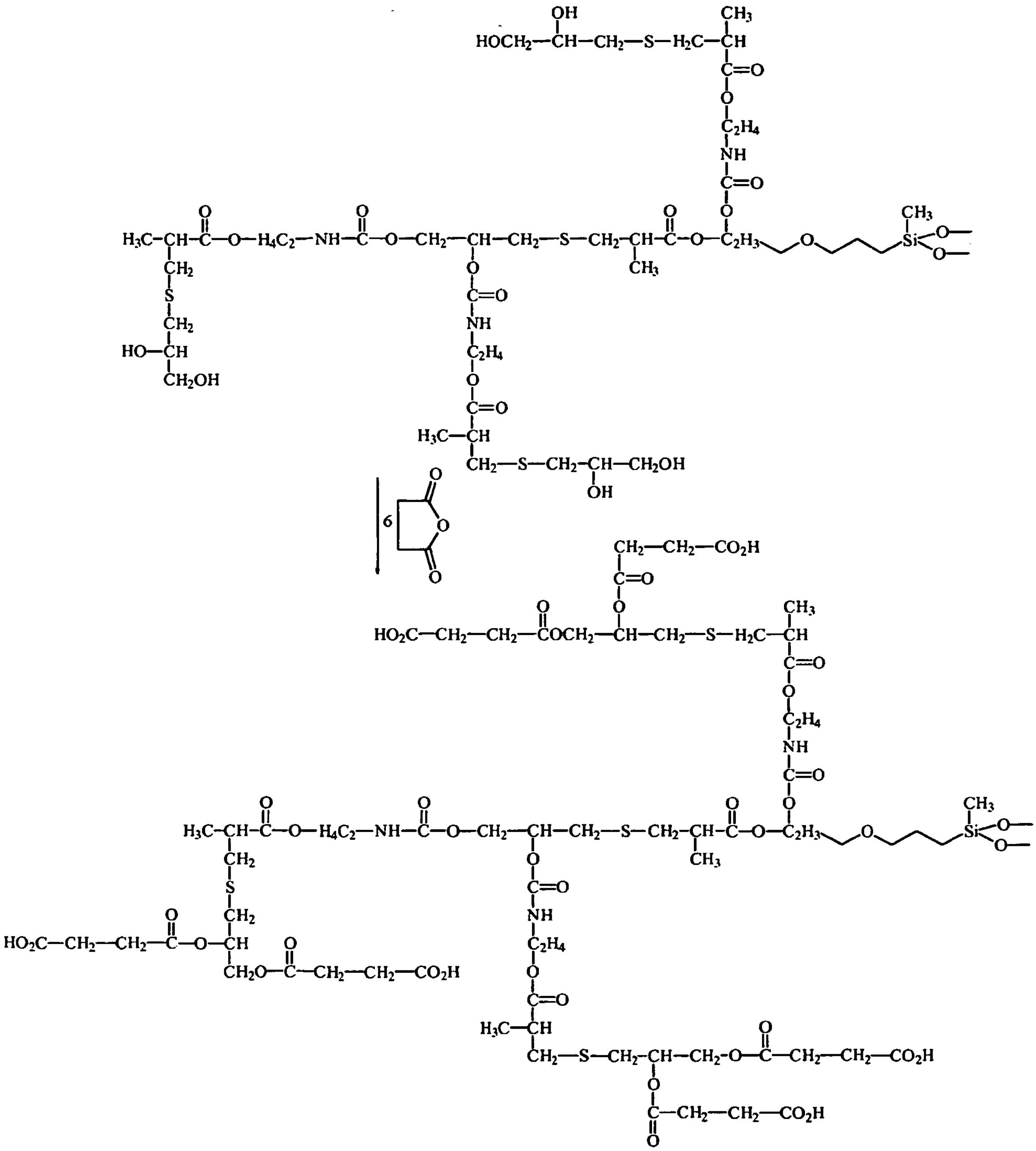

Das Prinzip der Reaktionsabfolge lässt sich dem Grunde nach weiter fortsetzen; da die Produkte zumindest in den Fällen, in denen X gleich SH ist oder Y gleich NCO ist, und dabei insbesondere dann, wenn die Verbindungen (I) bis (IV) im Unterschuss eingesetzt werden, bezogen auf die jeweils umsetzbaren Reste, nicht isoliert oder aufgereinigt werden müssen, lassen sich auf diesem Wege Strukturen mit einer beliebigen Anzahl von weit außen sitzenden, reaktiven Gruppen Q bzw. organisch polymerisierbaren Resten $R^1$ an jeweils einem Si-C-gebundenen Rest erzeugen, die ggf. dendrimerartig verzweigt sind.

Sofern die Produkte der Struktur (3) freie reaktive Gruppen Z, z.B. OH-Gruppen aufweisen, weil z.B. die erste Umsetzung mit einer Verbindung (I) erfolgte, in der a >1 ist und die nachfolgende Reaktion des Produkts (2) mit der Verbindung (II) im Unterschuss erfolgte, bietet sich als Alternative zu einer weiteren Umsetzung mit einer Verbindung der Formel (I) und gegebenenfalls anschließend der Formel (II) eine weitere Umsetzung dieser Gruppen an. Hierfür muss eine Verbindung eingesetzt werden, die zwar mit Z reagiert, jedoch nicht mit $R^1$. Für den Fall, dass die freien Gruppen Z Hydroxygruppen sind, kann hierfür z.B. ein Anhydrid eingesetzt werden, wie das folgende Beispiel zeigt:

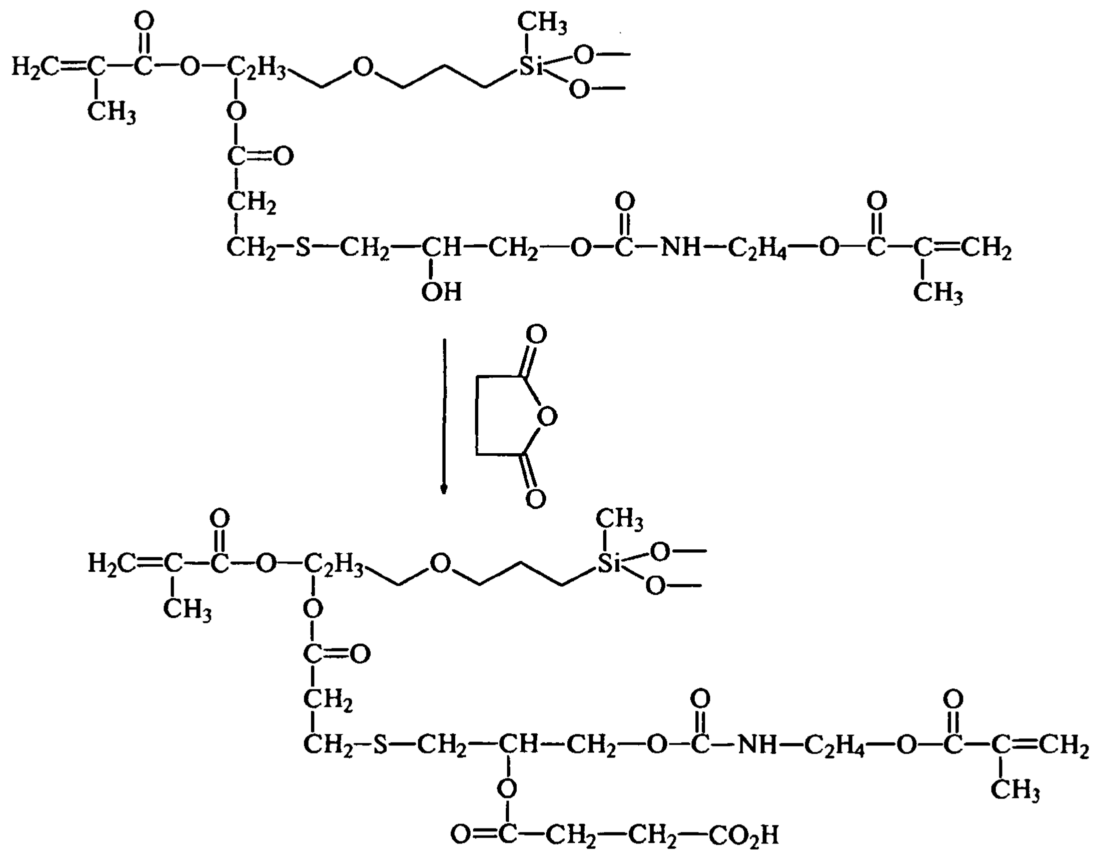

Stattdessen kann diese weitere Umsetzung mit einer Verbindung (V) mit der Formel $Y''W(Q)_c$, durchgeführt werden, worin Y" die Bedeutung NCO, Epoxy oder COA' mit A' = Hydroxy, einem Halogenid oder $-OC(O)R^4$ mit $R^4$ = unsubstituiertem oder substituiertem Kohlenwasserstoffrest hat und W, Q und c wie für Verbindung (III) oben definiert sind.

Mit dieser Umsetzung erfolgt ebenfalls wiederum eine Verschiebung einer reaktiven Gruppe an einen weiter außen liegenden Platz im Molekül, wobei jedoch die Gruppe $R^1$ unangetastet bleibt.

Die erfindungsgemäßen Kieselsäurepolykondensate lassen sich auf verschiedene Weise härten. So können die vorhandenen C=C-Doppelbindungen durch eine Polyaddition mit Thiolen oder Aminen oder eine Polymerisationsreaktion unter Ausbildung propagierender Kohlenstoffketten einer Vernetzung zugeführt werden, was eine Härtung des Materials bewirkt. Die Kondensate können auch durch andere Vernetzungsreaktionen zur Härtung gebracht werden, beispielsweise durch Umsetzung mit Di-, Tri- oder Tetra-Isocyanaten, die an freien Carbonsäure- bzw. Hydroxygruppen angreifen, oder entsprechenden mehrfunktionellen Anhydriden zur Umsetzung von hydroxygruppenhaltigen Kondensaten, wodurch ebenfalls ein weiteres, rein organisches Netzwerk entsteht.

Die Harzsysteme (d.h. die Kieselsäurepolykondensate) der vorliegenden Erfindungen bzw. deren gehärtete Produkte lassen sich für eine Vielzahl von Anwendungen einsetzen, darunter insbesondere für dentale Zwecke, bevorzugt für direkte/indirekte Restaurationen, Prophylaxe (z.B. durch Fissurenversiegelung), Prothetik und Zahnersatz.

Nachstehend soll die Erfindung anhand von konkreten Reaktionsbeispielen näher erläutert werden:

Beispiel 1 Synthese des Basisharzsystems I (Stand der Technik):

Zur Vorlage von 125,0 g (0,503 mol) 3-Glycidyloxypropyltrimethoxysilan werden unter trockener Atmosphäre Triphenylphosphin als Kat., BHT als Stabilisator und anschließend 47,35 g (0,550 mol) Methacrylsäure zugetropft und bei 80°C gerührt (ca. 24 h). Die Umsetzung kann über die Abnahme der Carbonsäurekonzentration mittels Säuretitration sowie dem Epoxidumsatz mittels Ramanspektroskopie/Epoxidtitration verfolgt werden. Die für die Epoxidgruppe vom Epoxysilan charakteristische Bande erscheint im Ramanspektrum bei 1256 $cm^{-1}$. Der Epoxid- bzw. Carbonsäureumsatz liegt bei ≥ 99 % bzw 89 % (→ da 1 : 1,1 Carbonsäureüberschuss). Nach Zugabe von Essigester (1000 ml/mol Silan) und $H_2O$ zur Hydrolyse mit HCl als Kat. wird bei 30°C gerührt. Der Verlauf der Hydrolyse wird jeweils durch Wassertitration verfolgt. Die Aufarbeitung erfolgt nach ca. mehrtägigem Rühren durch mehrmaliges Ausschütteln mit wässriger NaOH und mit Wasser und Filtration über hydrophobierten Filter. Es wird zunächst abrotiert und anschließend mit Ölpumpenvakuum abgezogen. Es resultiert ein flüssiges Harz ohne Einsatz von Reaktiwerdünnern (Monomeren) mit einer sehr

geringen Viskosität von ca. 3 - 6 Pa·s bei 25°C (stark abhängig von den genauen Hydrolyse- und Aufarbeitungsbedingungen) und 0,00 mmol $CO_2H$/g (keine freien Carboxylgruppen) sowie einer Brechzahl $n_D$ von ca. 1,480.

Beispiel 1 a:

Zur Vorlage von 48,3 g (0,18 mol) von Basisharzsystem I und ggf. 0,10 g Triethylamin werden unter Rühren 5,50 g (0,051 mol) Thioglycerin (3-Mercaptopropan-1,2-diol) zugetropft. Die Umsetzung kann mittels NMR sowie über die Abnahme der HS-Bande mittels Raman-Spektroskopie verfolgt werden. Die für die HS-Gruppe charakteristische Bande erscheint im Raman-Spektrum bei 2566 $cm^{-1}$. Es resultiert ein flüssiges Harz mit einer Viskosität von ca. 16 - 18 Pa·s bei 25°C (abhängig von den genauen Synthese- und Aufarbeitungsbedingungen der Vorstufen) und einer Brechzahl $n_D$ von ca. 1,489. Eine weitere Aufarbeitung ist in der Regel nicht erforderlich. Das molare Verhältnis von eingesetztem Basisharzsystem I zu dem Produkt der Reaktion mit Thioglycerin im erhaltenen Harz liegt bei 1 : 0,282.

Beispiel 1b:

Zur Vorlage von 37,2 g (0,14 mol) von Basisharzsystem I und ggf. 0,16 g Triethylamin werden unter Rühren 8,54 g (0,079 mol) Thioglycerin (3-Mercaptopropan-1,2-diol) zugetropft. Es resultiert ein flüssiges Harz mit einer Viskosität von ca. 39 Pa·s bei 25 °C und einer Brechzahl $n_D$ von ca.1,497. Eine weitere Aufarbeitung ist in der Regel nicht erforderlich (s. Anmerkung zu Beispiel 2a). Das molare Verhältnis von eingesetztem Basisharzsystem I zu dem Produkt der Reaktion mit Thioglycerin im erhaltenen Harz liegt bei 1 : 0,56.

- Die Brechzahl dieses Produkts ist fein einstellbar über den Thiolanteil (s. leichter Anstieg gegenüber Basishazsystem-1)
- Die Polarität/Hydrophilie ist einstellbar über den OH-Gehalt, der über die Thiolverbindung wie hier über das Thioglycerin eingeführt wird (d. h. starke, abgestufte Zunahme im Vergleich zum Basisharzsystem-1)

Beispiel 2a:

Zur Vorlage von 13,09 g (0,040 mol) eines Harzes aus Beispiel 1 b und ggf. 0,028 g BHT werden unter trockener Atmosphäre bei 30°C unter Rühren 3,48 g (0,0224 mol) Methacrylsäureisocyanatoethylester zugetropft und bei 30°C weitergerührt. Die Umsetzung kann über die Abnahme der OCN-Bande mittels IR-Spektrum verfolgt werden. Die für die OCN-Gruppe charakteristische Bande erscheint im IR-Spektrum bei 2272 $cm^{-1}$. Es resultiert ein flüssiges Harz mit einer Viskosität von ca. 85 Pa·s bei 25°C (stark abhängig von den genauen Synthese- und Aufarbeitungsbedingungen insbesondere auch der Vorstufen).

Beispiel 2b:

Zur Vorlage von 13,09 g (0,040 mol) eines Harzes aus Beispiel 1 b und ggf. 0,035 g BHT werden unter trockener Atmosphäre bei 30°C unter Rühren 6,59 g (0,0448 mol) Methacrylsäureisocyanatoethylester zugetropft und bei 30°C weitergerührt. Es resultiert ein flüssiges Harz mit einer Viskosität von ca. 207 Pa·s bei 25°C (s. Anmerkung zu 2a)

Beispiel 2c:

Zur Vorlage von 9,82 g (0,030 mol) eines Harzes aus Beispiel 1 b und ggf. 0,030 g BHT werden unter trockener Atmosphäre bei 30°C unter Rühren 7,08 g (0,0456 mol) Methacrylsäureisocyanatoethylester zugetropft und bei 30°C weitergerührt. Es resultiert ein flüssiges Harz mit einer Viskosität von ca. 207 Pa·s bei 25°C (s. Anmerkung zu 2a).

Beispiel 2d:

Zur Vorlage von 14,87 g (0,050 mol) eines Harzes aus Beispiel 1a und ggf. 0,030 g BHT werden unter trockener Atmosphäre bei 30°C unter Rühren 4,38 g (0,0282 mol) Methacrylsäureisocyanatoethylester zugetropft und bei 30°C weitergerührt. Es resultiert ein flüssiges Harz mit einer Viskosität von ca. 43 Pa·s bei 25°C (s. Anmerkung zu 2a).

Beispiel 2e:

Zur Vorlage von 14,87 g (0,050 mol) eines Harzes aus Beispiel 1a und ggf. 0,040 g BHT werden unter trockener Atmosphäre bei 30°C unter Rühren 9,81 g (0,0632 mol) Methacrylsäureisocyanatoethylester zugetropft und bei 30°C weitergerührt. Es resultiert ein flüssiges Harz mit einer Viskosität von ca. 167 Pa·s bei 25°C (s. Anmerkung zu 2a).

Beispiel 3:

Zur Vorlage von 20,81 g (0,070 mol) eines Harzes aus Beispiel 1a werden unter trockener Atmosphäre bei 65°C unter Rühren 16,83 g (0,109 mol) Methacrylsäureanhydrid zugetropft und bei 65°C weitergerührt. Die Umsetzung kann mittels NMR sowie über die Abnahme der Anhydrid-Bande mittels IR-Spektrum verfolgt werden. Die für die Anhydrid-Gruppe charakteristische Bande erscheint im IR-Spektrum bei 1785/1722 $cm^{-1}$. Nach üblicher Aufarbeitung zur Abtrennung der bei der Addition freigesetzten Methacrylsäure sowie abziehen der flüchtigen Bestandteile mit Olpumpenvakuum resultiert ein flüssiges Harz mit einer Viskosität von ca. 8 Pa·s bei 25°C (stark abhängig von den genauen Synthese- und Aufarbeitungsbedingungen insbesondere auch der Vorstufen).

**Tabelle 1**

| Harzsystem | Bruchfestigkeit [MPa] | E-Modul [GPa] | Durchbiegung [mm] | Schrumpfung (15 min/1 Tg) [Vol.-%] |
|---|---|---|---|---|
| **Basisharzsystem I (Vergleich)** | 83 | 1,5 | 2,9 | 5,2 / 5,8 |
| 2b | 120 | 2,60 | 3,20 | |
| 2c | 127 | 2,82 | 2,60 | |
| 2d | 107 | 2,30 | 3,26 | |
| 2e | 136 | 2,85 | 2,92 | 4,8/5,8 |
| 2f | 138 | 3,07 | 2,14 | |
| 3 | 103 | 2,32 | 2,35 | |

Beispiel 4:

Zur Vorlage von 20,81 g (0,070 mol) eines Harzes aus Beispiel 1a und 5,45 g Triethylamin (0,0501 mol) in 70 ml THF als Lösungsmittel werden unter trockener Atmosphäre und Kühlung mittels Eisbad unter Rühren 5,12 g (0,0455 mol) Methacrylsäurechlorid zugetropft und bei RT weitergerührt. Die Umsetzung kann mittels NMR sowie über die Abnahme der Säurechlorid-Bande mittels IR-Spektrum verfolgt werden. Nach üblicher Aufarbeitung zur Abtrennung des bei der Addition entstehenden Aminhydrochlorids sowie abziehen der flüchtigen Bestandteile mit Ölpumpenvakuum resultiert ein flüssiges Harz mit einer Viskosität von ca. 6,9 Pa·s bei 25°C.

Beispiel 5: Synthese des Basisharzsystems II (Stand der Technik)

Zur Vorlage von 120,1 g (0,45 mol) Basisharzsystem I (Beispiel 1) und 35,1 g Triethylamin (0,347 mol) in 450 ml THF als Lösungsmittel werden unter trockener Atmosphäre und Kühlung mittels Eisbad unter Rühren 28,51 g (0,315 mol) Acrylsäurechlorid zugetropft und bei RT weitergerührt. Die Umsetzung kann mittels NMR sowie über die Abnahme der Säurechlorid-Bande mittels IR-Spektrum verfolgt werden. Nach üblicher Aufarbeitung zur Abtrennung des bei der Addition entstehenden Aminhydrochlorids sowie abziehen der flüchtigen Bestandteile mit Ölpumpenvakuum resultiert ein flüssiges Harz mit einer Viskosität von ca. 1,5 Pa·s bei 25°C (stark abhängig von den genauen Synthese- und Aufarbeitungsbedingungen insbesondere auch der Vorstufen).

Beispiel 5a:

Zur Vorlage von 39,13 g (0,13 mol) von Basisharzsystem II und ggf. 0,17 g Triethylamin werden unter Rühren 9,00 g (0,0832 mol) Thioglycerin (3-Mercaptopropan-1,2-diol) zugetropft. Die Umsetzung kann mittels NMR sowie über die Abnahme der HS-Bande mittels Raman-Spektroskopie verfolgt werden. Die für die HS-Gruppe charakteristische Bande erscheint im Raman-Spektrum bei 2566 $cm^{-1}$. Es resultiert ein flüssiges Harz mit einer Viskosität von ca. 23 Pa·s bei 25°C (abhängig von den genauen Synthese- und Aufarbeitungsbedingungen insbesondere der Vorstufen). Eine weitere Aufarbeitung ist in der Regel nicht erforderlich.

Beispiel 6a:

Zur Vorlage von 16,47 g (0,045 mol) eines Harzes aus Beispiel 5a (molares Verhältnis = 1 : 0,6) und ggf. 0,021 g BHT werden unter trockener Atmosphäre bei 30°C unter Rühren 4,19 g (0,027 mol) Methacrylsäureisocyanatoethylester

zugetropft und bei 30°C weitergerührt. Die Umsetzung kann über die Abnahme der OCN-Bande mittels IR-Spektrum verfolgt werden. Die für die OCN-Gruppe charakteristische Bande erscheint im IR-Spektrum bei 2272 $cm^{-1}$. Es resultiert ein flüssiges Harz mit einer Viskosität von ca. 62 Pa·s bei 25°C (stark abhängig von den genauen Synthese- und Aufarbeitungsbedingungen insbesondere auch der Vorstufen). Eine weitere Aufarbeitung ist in der Regel nicht erforderlich.

Beispiel 6b:

Zur Vorlage von 16,47 g (0,045 mol) eines Harzes aus Beispiel 5a (molares Verhältnis = 1 : 0,6) und ggf. 0,030 g BHT werden unter trockener Atmosphäre bei 30 C unter Rühren 8,38 g (0,054 mol) Methacrylsäureisocyanatoethylester zugetropft und bei 30°C weitergerührt. Es resultiert ein flüssiges Harz mit einer Viskosität von ca.164 Pa·s bei 25°C (s. Anmerkung zu 6a).

Tabelle 2

| Harzsystem | Bruchfestigkeit [MPa] | E-Modul [GPa] | Durchbiegung [mm] |
|---|---|---|---|
| Basisharzsystem II (Vergleich) | 79 | 1,74 | 1,98 |
| Nach Thioladdition → Drastische Steigerung des OH-Gehaltes | | | |
| 5a | 48 | 0,91 | 2,70 |
| Nach Addition des Isocyanatmethacrylat | | | |
| 6a | 122 | 2,53 | 2,90 |
| 6b | 132 | 2,95 | 2,40 |

Beispiel 7a:

Zur Vorlage von 36,04 g (0,12 mol) von Basisharzsystem II werden unter Rühren 5,41 g (0,072 mol) 2-Methylamino-ethanoi langsam (exotherme Reaktion) zugetropft. Die Umsetzung kann mittels NMR verfolgt werden. Es resultiert ein flüssiges Harz mit einer Viskosität von ca. 5 Pa·s bei 25 °C (abhängig von den genauen Synthese- und Aufarbeitungsbedingungen insbesondere der Vorstufen). Eine weitere Aufarbeitung ist in der Regel nicht erforderlich.

Beispiel 8a:

Zur Vorlage von 12,44 g (0,036 mol) des Harzes aus Beispiel 7a (molares Verhältnis = 1 : 0,5) und ggf. 0,031 g BHT werden unter trockener Atmosphäre bei 30°C unter Rühren 2,79 g (0,018 mol) Methacrylsäureisocyanatoethylester zugetropft und bei 30°C weitergerührt. Die Umsetzung kann über die Abnahme der OCN-Bande mittels IR-Spektrum verfolgt werden. Die für die OCN-Gruppe charakteristische Bande erscheint im IR-Spektrum bei 2272 $cm^{-1}$. Es resultiert ein flüssiges Harz mit einer Viskosität von ca. 15 Pa·s bei 25°C (stark abhängig von den genauen Synthese- und Aufarbeitungsbedingungen insbesondere auch der Vorstufen). Eine weitere Aufarbeitung ist in der Regel nicht erforderlich.

Beispiel 8b:

Zur Vorlage von 11,74 g (0,034 mol) des Harzes aus Beispiel 7a (molares Verhältnis = 1 : 0,7) und ggf. 0,031 g BHT werden unter trockener Atmosphäre bei 30°C unter Rühren 3,69 g (0,0238 mol) Methacrylsäureisocyanatoethylester zugetropft und bei 30°C weitergerührt. Es resultiert ein flüssiges Harz mit einer Viskosität von ca. 20 Pa·s bei 25°C. Eine weitere Aufarbeitung ist in der Regel nicht erforderlich (s. Anmerkung zu 8a).

Beispiel 8c:

Zur Vorlage von 5,00 g (0,0145 mol) des Harzes aus Beispiel 7a (molares Verhältnis = 1 : 0,9) und ggf. 0,014 g BHT werden unter trockener Atmosphäre bei 30°C unter Rühren 2,02 g (0,0130 mol) Methacrylsäureisocyanatoethylester zugetropft und bei 30°C weitergerührt. Es resultiert ein flüssiges Harz. Eine weitere Aufarbeitung ist in der Regel nicht erforderlich (s. Anmerkung zu 8a)

Beispiel 9a

Zur Vorlage von 60,1 g (0,20 mol) von Basisharzsystems werden unter Rühren 10,5 g (0,10 mol) Diethanolamin langsam (exotherme Reaktion) zugetropft. Die Umsetzung kann mittels NMR verfolgt werden. Es resultiert ein flüssiges Harz mit einer Viskosität von ca. 9 - 12 Pa·s bei 25°C (abhängig von den genauen Synthese- und Aufarbeitungsbedingungen insbesondere der Vorstufen). Eine weitere Aufarbeitung ist in der Regel nicht erforderlich. Mit 3,8/4,2 Vol.% (15 min/1 Tg) zeigt das monomerfreie Harzsystem eine überraschend geringe Härtungsschrumpfung.

Beispiel 10a

Zur Vorlage von 10,59 g (0,030 mol) des Harzes aus Beispiel 9a und ggf. 0,029 g BHT werden unter trockener Atmosphäre bei 30°C unter Rühren 3,72 g (0,024 mol) Methacrylsäureisocyanatoethylester zugetropft und bei 30°C weitergerührt. Die Umsetzung kann über die Abnahme der OCN-Bande mittels IR-Spektrum verfolgt werden. Die für die OCN-Gruppe charakteristische Bande erscheint im IR-Spektrum bei 2272 $cm^{-1}$. Es resultiert ein flüssiges Harz mit einer Viskosität von ca. 39 - 45 Pa·s bei 25°C (stark abhängig von den genauen Synthese- und Aufarbeitungsbedingungen insbesondere auch der Vorstufen). Eine weitere Aufarbeitung ist in der Regel nicht erforderlich. Mit 4,0/4,8 Vol.% (15 min/1 Tg) zeigt das monomerfreie Harzsystem eine sehr geringe Härtungsschrumpfung.
Bestimmung der mechanischen Daten sowie der Härtungsschrumpfung:

Polymerisation/Härtung verschiedener Harzsysteme im Vergleich zu den zugrunde liegenden Basisharzen:

Das jeweilige Harz aus den Beispielreihen bzw. der Basisharzsysteme 1/2 mit 1% Lucirin TPO wird in eine Stäbchenform (2 x 2 x 25 $mm^3$) gegeben. Die (Meth)acrylatgruppen werden im Rahmen einer photoinduzierten radikalischen Polymerisation umgesetzt, wobei das Harz aushärtet. Mittels 3-Punktbiegeversuch wird nach 1,5 Tagen Lagerung bei 40°C der E-Modul, die Bruchfestigkeit sowie die Durchbiegung bis zum Bruch der resultierenden Stäbchen bestimmt.
Die Schrumpfungswerte werden mittels Auftriebsmethode im Rahmen der photoinduzierten radikalischen Polymerisation erhalten (15 min/1 Tg nach Belichtung).
Aus den Beispielen lässt sich also ersehen, dass auf einer einzigen Materialbasis ein allgemein sehr breites E-Modul-Spektrum einstellbar ist sowie deutlich verbesserte mechanische Daten (erhöhte Festigkeiten) im Vergleich zu den zugrunde liegenden Basisharzen (Stand der Technik) beobachtet werden. Die Systeme sind ohne den Einsatz von dentalen Monomeren realisierbar, was angesichts der zunehmenden Allergiediskussion im Dentalbereich wesentlich ist. Die Erfindung ermöglicht weiterhin eine zusätzliche Funktionalisierung über die Einführung weiterer OH-, oder sonstiger Gruppen. Die so erhaltenen Produkte besitzen überraschend geringe Schrumpfungswerte.

**Patentansprüche**

1. Verfahren zur Kettenverlängerung von mindestens zwei funktionelle Gruppen aufweisenden Si-C-gebundenen Resten von Silanen oder Siloxanen unter Aufrechterhaltung oder Vergrößerung der Anzahl an funktionellen Gruppen an den jeweiligen Si-C-gebunden Resten
**dadurch gekennzeichnet, dass**
ein Silan oder Siloxan mit einem über ein Kohlenstoff an ein Siliciumatom gebundenen Rest, der mindestens zwei funktionelle Gruppen trägt,
wobei eine erste der funktionellen Gruppen eine ungesättigte, organisch polymerisierbare Gruppe ist und eine zweite der funktionellen Gruppen ausgewählt ist unter

(a) weiteren ungesättigten, organisch polymerisierbaren Gruppen,
(b) $COOR^8$ oder $-(O)_bP(O)(R^5)_2$ und
(c) -OH,

mit $R^8$ gleich $R^4$ oder $\mathbf{M^{x+}_{1/x}}$ wobei $M^{x+}$ Wasserstoff oder ein x-fach positiv geladenes Metallkation ist, und b = 0 oder 1,
in einer ersten Reaktion umgesetzt wird
mit einer Verbindung der Formel (I)

$$X\text{-}W\text{-}(Z)_a \qquad (I)$$

worin

X SH, $NH_2$ oder $NHR^4$ ist,
Z OH, der Carbonsäurerest -COOH oder ein Salz oder ein Ester dieses Restes oder ein Silylrest ist,
W ein substituierter oder unsubstituierter Kohlenwasserstoffrest ist, dessen Kette unterbrochen sein kann durch -S-, -O-, -NH-, $-NR^4-$, -C(O)O-, -NHC(O)-. -C(O)NH-, -NHC(O)O-, -C(O)NHC(O)-, -NHC(O)NH-, -S(O)-, -C(S)O-, -C(S)NH-, -NHC(S)-, -NHC(S)O-, und
a 1, 2, 3, 4 oder eine größere ganze Zahl bedeutet,
wobei
$R^4$ ein unsubstituierter oder substituierter Kohlenwasserstoffrest ist,
$R^5$ ein unsubstituierter oder substituierter Kohlenwasserstoffrest oder $OR^6$ ist,
$R^6$ Wasserstoff oder ein unsubstituierter oder substituierter Kohlenwasserstoffrest ist, derart, dass der Rest X an der ersten funktionellen Gruppe angreift.

**2.** Verfahren nach Anspruch 1, worin Z OH, der Carbonsäurerest -COOH oder ein Salz oder ein Ester dieses Restes ist und/oder worin die zweite oder eine zweite der funktionellen Gruppen des am Siliciumatom gebundenen Rests eine OH-Gruppe ist.

**3.** Verfahren nach einem der voranstehenden Ansprüche, worin das molare Verhältnis der oder aller ersten funktionellen Gruppe(n) an den Si-C-gebundenen Resten zu den Resten
Z in der Verbindung mit der Formel (I) >1 zu 1 ist, vorzugsweise bei mindestens 1,05 zu 1 und stärker bevorzugt im Bereich von 1.05 zu 1 bis 1,50 zu 1 liegt.

**4.** Verfahren nach Anspruch 2, worin das Produkt der ersten Reaktion weiterhin in einer zweiten Reaktion mit einer Verbindung (II) umgesetzt wird

$$Y\text{-}(W)_k\text{-}(R^1)_b \qquad (II)$$

worin Y NCO, Epoxy oder - wenn der oder die Reste Z im Produkt der ersten Reaktion (eine) Hydroxygruppe(n) ist/sind - COA' ist
W wie in Anspruch 1 für Verbindung (I) definiert ist,
$R^1$ eine ungesättigte organisch polymerisierbare Gruppe ist,
A' Hydroxy, ein Halogenid oder $-OC(O)R^4$ mit $R^4$ gleich unsubstituierter oder substituierter Kohlenwasserstoffrest ist
k = 0 oder 1 ist, wobei k = 0 nur für den Fall möglich ist, dass Y COA' bedeutet, und
b = 1 oder größer 1 ist,
wobei das molare Verhältnis des Produkts der ersten Reaktion zur Verbindung mit der Formel (II) vorzugsweise größer 1 ist und stärker bevorzugt bei mindestens 1,05 liegt.

**5.** Verfahren nach Anspruch 4, **dadurch gekennzeichnet, dass** die erste Umsetzung mit einer Verbindung (I) erfolgte, worin Z = OH ist, wobei die Verbindung (II) in der zweiten Reaktion im molaren Unterschuss, bezogen auf die im Produkt der ersten Reaktion vorhandenen Reste Z, eingesetzt wird.

**6.** Verfahren nach Anspruch 2, worin das Produkt der ersten Reaktion weiterhin in einer zweiten Reaktion entweder umgesetzt wird mit einer Verbindung (III)

$$Y'\text{-}W\text{-}(Q)_c \qquad (III)$$

worin

Y' entweder wie Y für die Verbindung (II) definiert ist oder, im Falle von Z gleich COOH oder ein Salz davon, stattdessen die Bedeutung $NHR^4$, $NH_2$, oder OH mit $R^4$ = unsubstituierter oder substituierter Kohlenwasserstoff haben kann und im Falle von Z gleich OH die Bedeutung COOH oder ein Salz davon haben kann,
W wie für die Verbindung (II) definiert ist, oder worin
Y' und Q zusammen die Gruppe -C(O)O(O)C- bilden und W eine geradkettige, verzweigte oder cyclische Alkylengruppe oder Alkenylengruppe mit jeweils vorzugsweise 2 bis 12 Kohlenstoffatomen oder eine ggf. alkylsubstituierte oder kondensierte Arylengruppe mit vorzugsweise 6 bis 12 Kohlenstoffatomen ist und
Q OH, $NR^7_2$, $NR^7_3{}^+$, $CO_2H$, $SO_3H$, $PO(OH)_2$ $PO(OR^4)_2$, $OPO(OH)_2$, $OPO(OR^4)_2$ oder ein Salz der vorgenannten Säuren ist, wobei $R^4$ die oben für Formel (I) angegebene Bedeutung hat und $R^7$ entweder dieselbe Bedeutung wie $R^4$ hat oder zwei Reste $R^7$ zusammen eine ggf. substituierte, ggf. ungesättigte Alkylengruppe bedeuten

können, und
c 1, 2, 3, 4 oder eine größere Zahl ist,
oder, für den Fall, dass der oder die Reste Z im Produkt der ersten Reaktion (eine) Hydroxygruppe(n) ist/sind, umgesetzt wird mit $P_2O_5$ oder mit $POCl_3$,
wobei das molare Verhältnis des Produkts der ersten Reaktion zur Verbindung mit der Formel (III) vorzugsweise größer 1 ist und stärker bevorzugt bei mindestens 1,05 liegt.

**7.** Verfahren nach einem der Ansprüche 4 und 6, worin in der Verbindung mit der Formel (II) bzw. (III) Y bzw. Y' COA' und insbesondere (Meth)Acrylsäurechlorid oder -anhydrid ist, oder worin $Y'W(Q)_c$ Bernsteinsäureanhydrid, Glutarsäureanhydrd oder Maleinsäureanhydrid ist.

**8.** Verfahren nach einem der Ansprüche 4 oder 5, worin das Produkt der zweiten Reaktion weiterhin in einer dritten Reaktion mit einer Verbindung (IV) umgesetzt wird

$$X\text{-}W\text{-}(Q)_c \qquad (IV)$$

worin X und W definiert sind wie in Formel (I) gemäß Anspruch 1, und
Q und c die in Anspruch 6 für Formel (III) angegebene Bedeutungen haben,
wobei das molare Verhältnis des Produkts der zweiten Reaktion zur Verbindung mit der Formel (IV) vorzugsweise größer 1 ist und stärker bevorzugt bei mindestens 1,05 liegt.

**9.** Verfahren nach Anspruch 5, weiterhin umfassend die Umsetzung mit einer Verbindung (V), die ausgewählt ist unter dem Anhydrid einer Dicarbonsäure und einer Verbindung der Formel $Y''WC(Q)_c$, worin Y" die Bedeutung NCO, Epoxy oder COA' mit A' = Hydroxy, einem Halogenid oder $-OC(O)R^4$ mit $R^4$ = unsubstituiertem oder substituiertem Kohlenwasserstoffrest hat und W, Q und c wie für Verbindung (III) in Anspruch 6 definiert sind.

**10.** Verfahren nach Anspruch 4, worin das Produkt der zweiten Reaktion weiterhin in einer dritten Reaktion mit einer Verbindung der Formel (I) umgesetzt wird wie in Anspruch 1 definiert, wobei das molare Verhältnis des Produkts der zweiten Reaktion zur Verbindung mit der Formel (I) in der dritten Reaktion größer 1 ist und vorzugsweise bei mindestens 1,05 liegt.

**11.** Verfahren nach Anspruch 10, worin das Produkt der dritten Reaktion weiterhin in einer vierten Reaktion entweder umgesetzt wird mit einer Verbindung (III)

$$Y\text{-}W\text{-}(Q)_C \qquad (III)$$

worin Y und W wie in Verbindung (II) gemäß Anspruch 4 definiert sind, Q OH, $NR^7_2$, $NR^7_3{}^+$, $CO_2H$, $SO_3H$, $PO(OH)_2$, $PO(OR^4)_2$ oder ein Salz der vorgenannten Säuren ist, wobei $R^4$ die in Anspruch 1 für Formel (I) angegebene Bedeutung besitzt, $R^7$ entweder dieselbe Bedeutung wie $R^4$ hat oder zwei Reste $R^7$ zusammen eine ggf. substituierte, ggf. ungesättigte Alkylengruppe bedeuten können, und c 1, 2, 3, 4 oder eine größere Zahl ist, wobei das molare Verhältnis des Produkts der ersten Reaktion zur Verbindung mit der Formel (II) vorzugsweise größer 1 ist und stärker bevorzugt bei mindestens 1,05 liegt, oder, für den Fall dass der/die Rest(e) Z im Produkt der dritten Reaktion (eine) Hydroxygruppe(n) ist/sind, umgesetzt wird mit $P_2O_5$ oder $POCl_3$.

**12.** Verfahren nach Anspruch 10, worin das Produkt der dritten Reaktion weiterhin in einer vierten Reaktion mit einer Verbindung mit der Formel (II) umgesetzt wird wie in Anspruch 7 definiert, wobei das molare Verhältnis des Produkts der dritten Reaktion zur Verbindung mit der Formel (II) vorzugsweise größer 1 ist und stärker bevorzugt bei mindestens 1,05 liegt.

**13.** Verfahren nach einem der Ansprüche 4 und 12, weiterhin umfassend

(a) das Umsetzen des jeweiligen Produkts mit einem ein- oder mehrfunktionellen Thiol oder
(b) das Polymerisieren des jeweiligen Produkts in einer Polyreaktion, bei der ein Teil oder alle der vorhandenen reaktionsfähigen Doppelbindungen unter dem Einfluss von Wärme, Licht, ionisierender Strahlung oder redoxinduziert in eine propagierende Kohlenstoffkette eingebaut werden.

**14.** Verfahren nach einem der Ansprüche 1 bis 12, weiterhin umfassend

(a) das Vernetzen vorhandener Hydroxy- bzw. Carbonsäuregruppen mit einem di- oder polyfunktionellen Isocyanat oder

(b) das Vernetzen vorhandener Hydroxygruppen mit einer di- oder polyfunktionellen, ggf. aktivierten Carbonsäure.

**15.** Verbindung oder Kieselsäure(hetero)polykondensat der Formel (3)

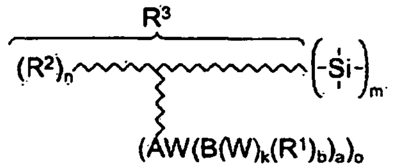

(3)

worin

$R^1$ einen ungesättigten, organisch polymerisierbaren Rest bezeichnet,

$R^2$ dieselbe Bedeutung wie $R^1$ besitzt oder eine Hydroxygruppe, ein phosphorhaltiger Rest, eine freie Carbonsäure oder ein Ester oder ein Salz oder genannten Säuren ist oder die Bedeutung $B\text{-}(W)_k\text{-}(R^1)_b$ hat,

$R^3$ einen Rest mit einem kohlenwasserstoffhaltigen Rückgrat bezeichnet, der über Kohlenstoff am Silicium gebunden ist, wobei die Verzweigung der Zickzacklinie in der Formel (3) eine Verzweigung dieses Rückgrads an einer beliebigen Stelle symbolisiert, die drei nicht näher gekennzeichneten Bindungen des Si-Atom für weitere, am Siliciumatom gebundene Reste stehen, ausgewählt unter von Silicium abhydrolysierbaren Resten, Hydroxygruppen und über ein Kohlenstoffatom am Silicium gebundenen Resten, die dieselbe Bedeutung wie $R^3$ oder eine davon abweichende andere Bedeutung haben können, oder Sauerstoffbrücken zu weiteren Siliciumatomen bzw. anderen Metallatomen darstellen, wenn die Struktur (3) Bestandteil eines Kieselsäure(hetero)polykondensats ist. A eine Kupplungsgruppe bedeutet, die ausgewählt ist unter -S-, -NH- und $NR^4$, worin $R^4$ einen kohlenwasserstoffhaltigen Rest darstellt,

B eine Kupplungsgruppe bedeutet, die ausgewählt ist unter Ester-, Ether-, Säureamid- und Urethangruppen,

W ein substituierter oder unsubstituierter Kohlenwasserstoffrest ist, dessen Kette unterbrochen sein kann durch -S-, -O-, -NH-, $-NR^4-$, -C(O)O-, -NHC(O)-, -C(O)NH-, -NHC(O)O-, -C(O)NHC(O)-, -NHC(O)NH-, -S(O)-. -C(S)O-, -C(S)NH-, -NHC(S)-, -NHC(S)O-,

der Index k 0 oder 1 ist,

die Indices m und n unabhängig voneinander für 1, 2 oder eine ganze Zahl von mehr als 2 stehen,

der Index o mindestens 1 bedeutet, wenn die Formel (3) ein Silan darstellt, und mindestens 0,2 bedeutet, wenn die Formel ein Kieselsäure(hetero)polykondensat bedeutet

a 1, 2, 3, 4 oder eine größere ganze Zahl bedeutet und

b 1, 2, 3, 4 oder eine größere ganze Zahl bedeutet.

**16.** Verbindung oder Kieselsäure(hetero)polykondensat der Formel (4)

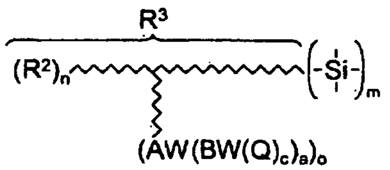

(4),

worin $R^3$, A, B, W, m, n, a und o die in Anspruch 15 angegebene Bedeutung besitzen, Q OH, $NR^7_2$, $NR^7_3{}^+$, $CO_2H$, $SO_3H$, $PO(OH)_2$ $PO(OR^4)_2$ oder ein Salz der vorgenannten Säuren ist und $R^2$ einen ungesättigten, organisch polymerisierbaren Rest bezeichnet oder eine Hydroxygruppe, ein phosphorhaltiger Rest, eine freie Carbonsäure oder ein Ester oder ein Salz oder genannten Säuren ist oder die Bedeutung $BW\text{-}(Q)_c$ hat, wobei $R^4$ und $R^7$ definiert sind wie für Verbindung (III) in Anspruch 11 beschrieben, und

c 1, 2, 3, 4 oder eine größere ganze Zahl bedeutet.

**17.** Verbindung oder Kieselsäure(hetero)polykondensat der Formel (5)

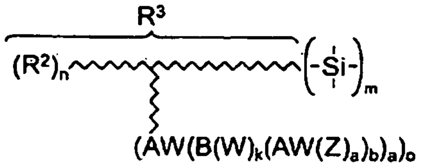

(5)

worin $R^3$, A, B, W, k, m, n, a b und o die in Anspruch 15 angegebene Bedeutung besitzen, $R^2$ einen ungesättigten, organisch polymerisierbaren Rest bezeichnet oder eine Hydroxygruppe, ein phosphorhaltiger Rest, eine freie Carbonsäure oder ein Ester oder ein Salz oder genannten Säuren ist oder die Bedeutung $B(W)_k$-$AW(Z)_a)_b$ hat, und

Z OH, ein Silylrest oder ein freier Carbonsäurerest oder ein Salz dieses Säurerestes ist.

**18.** Verbindung oder Kieselsäure(hetero)polykondensat der Formel (6)

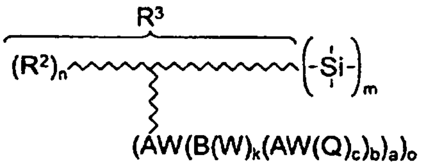

(6)

worin $R^3$, A, B, W, k, m, n, a b und o die in Anspruch 15 angegebene Bedeutung besitzen, $R^2$ einen ungesättigten, organisch polymerisierbaren Rest bezeichnet oder eine Hydroxygruppe, ein phosphorhaltiger Rest, eine freie Carbonsäure oder ein Ester oder ein Salz oder genannten Säuren ist oder die Bedeutung $B(W)_k$-$AW(Q)_c)_b$ hat, wobei Q und b definiert sind wie in Anspruch 16 und 17 angegeben.

**19.** Verbindung oder Kieselsäure(hetero)polykondensat mit der Formel (7)

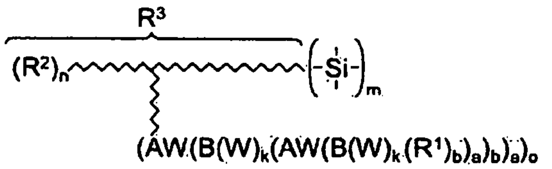

(7)

worin die Reste und Indices $R^1$, $R^3$, A, B, W, k, m, n, a b und o wie für Formel (3) in Anspruch 15 definiert sind und $R^2$ einen ungesättigten, organisch polymerisierbaren Rest bezeichnet oder eine Hydroxygruppe, ein phosphorhaltiger Rest, eine freie Carbonsäure oder ein Ester oder ein Salz oder genannten Säuren ist oder die Bedeutung $B(W)_k(AW(B(W)_k(R^1)_b)_a)_b$ hat.

**20.** Verbindung oder Kieselsäure(hetero)polykondensat mit der Formel (8)

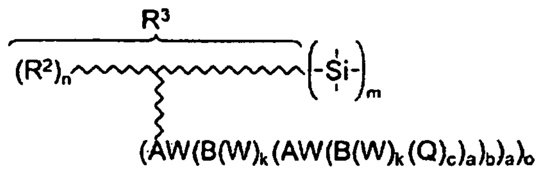

(8)

worin $R^3$, A, B, W. k, m, n, a b und o die in Anspruch 15 angegebene Bedeutung besitzen, $R^2$ einen ungesättigten, organisch polymerisierbaren Rest bezeichnet oder eine Hydroxygruppe, ein phosphorhaltiger Rest, eine freie Carbonsäure oder ein Ester oder ein Salz oder genannten Säuren ist oder die Bedeutung $B(W)_k(AW(B(W)_k(Q)_c)_a)_b$ hat, wobei Q und b definiert sind wie in Anspruch 16 und 17 angegeben.

**21.** Organisches Polymer, erhalten aus einer Verbindung nach einem der Ansprüche 15 bis 20, die mindestens eine ungesättigte, organisch polymerisierbare Gruppen aufweist, oder erhalten aus einem Kieselsäure(hetero)polykondensat nach einem der Ansprüche 15 bis 19, das ungesättigte organisch polymerisierbare Gruppen aufweist, durch

(a) das Umsetzen der Verbindung bzw. des Kieselsäure(hetero)polykondensats mit einem zwei- oder mehrfunktionellen Thiol oder Amin oder
(b) das Polymerisieren der Verbindung bzw. des Kieselsäure(hetero)polykondensats in einer Polyreaktion, bei der ein Teil oder alle der vorhandenen reaktionsfähigen Doppelbindungen unter dem Einfluss von Wärme, Licht, ionisierender Strahlung oder redoxinduziert in eine propagierende Kohlenstoffkette eingebaut werden.

**22.** Organisches Polymer, erhalten aus einer Verbindung nach einem der Ansprüche 15 bis 19, die mindestens eine freie Hydroxygruppe oder Carbonsäuregruppe aufweist, oder erhalten aus einem Kieselsäure(hetero)polykondensat nach einem der Ansprüche 15 bis 19, welches freie Hydroxygruppen oder Carbonsäuregruppen aufweist, durch

(a) das Vernetzen vorhandener Hydroxy- bzw. Carbonsäuregruppen mit einem di- oder polyfunktionellen Isocyanat oder
(b) das Vernetzen vorhandener Hydroxygruppen mit einer di- oder polyfunktionellen, ggf. aktivierten Carbonsäure.

## Claims

**1.** Process for the chain extension of Si-C bonded radicals of silanes or siloxanes having at least two functional groups, wherein the number of functional groups on the respective SiC bonded groups is maintained or increased,
**characterized in that**
a silane or siloxane with a radical bonded to a silicon atom by a carbon atom, the radical carrying at least two functional groups,
wherein a first one of said functional groups is an unsaturated, organically polymerizable group and a second one of said functional groups is selected among

(a) additional unsaturated, organically polymerizable groups,
(b) $COOR^8$ or $-(O)_bP(O)(R^5)_2$ and
(c) -OH,

wherein $R^8$ is $R^4$ or $M_{1/X}^{x+}$, $M^{x+}$ being hydrogen or an x-fold positively charged metal cation, and b = 0 or 1,
is reacted in a first reaction
with a compound of formula (I)

$$X\text{-}W\text{-}(Z)_a \qquad (I)$$

wherein

X is SH, $NH_2$ or $NHR^4$,
Z is OH, the carboxylic acid radical -COOH or a salt or an ester of said radical or a silyl radical,
W is a substituted or non-substituted hydrocarbon radical, the chain of which can be interrupted by -S-, -O-, -NH-, $-NR^4-$, -C(O)O-, -NHC(O)-, -C(O)NH-, -NHC(O)O-, -C(O)NHC(O)-, -NHC(O)NH-, -S(O)-, -C(S)O-, -C(S)NH-, -NHC(S)-, -NHC(S)O-, and
a represents 1, 2, 3, 4 or a greater integer,
wherein
$R^4$ is a non-substituted or substituted hydrocarbon radical,
$R^5$ is a non-substituted or substituted hydrocarbon radical or $OR^6$, and
$R^6$ is hydrogen or is a non-substituted or substituted hydrocarbon radical,
such that the radical X attacks the first one of the functional groups.

**2.** Process according to claim 1, wherein Z is OH, the carboxylic acid radical -COOH or a salt or an ester of said radical and/or wherein the second one or one second one of said functional groups of the radical bonded to silicon is a OH group.

**3.** Process according to any of the preceding claims, wherein the molar ratio of the or of all of said first functional group(s) on the Si-C bound radicals to the radicals Z in the compound of formula (I) is >1 to 1, preferably is at least 1.05 to 1 and more preferably is in the range between 1.05 to 1 and 1.50 to 1.

4. Process according to claim 2, wherein the product of the first reaction is further reacted in a second reaction with a compound (II)

$$Y\text{-_}(W)_k\text{-}(R^1)_b \qquad (II)$$

wherein Y is NCO, epoxy or - if the radical or radicals Z in the product of the first reaction is/are (a) hydroxy group(s) - COA',
W is defined as for compound (I) in claim 1,
$R^1$ is an unsaturated, organically polymerizable group,
A' is hydroxy, a halogenide or $-OC(O)R^4$ with $R^4$ being a non-substituted or substituted carbon radical,
k = 0 or 1, wherein k = 0 is only possible in the event that Y represents COA', and
b is = 1 or greater than 1,
wherein the molar ratio of the product of the first reaction to the compound with formula (II) is preferably greater than 1, and more preferred being at least 1.05.

5. Process according to Claim 4, **characterized in that** the first reaction was performed with a compound (I) wherein Z is = OH, wherein the compound (II) in the second reaction is used in a substoichiometric amount with regard to the radicals Z present in the product of the first reaction.

6. Process according to claim 2, wherein the product of the first reaction is further reacted in a second reaction, either with a compound (III)

$$Y'\text{-}W\text{-}(Q)_c \qquad (III)$$

wherein

Y' is defined either as Y in the compound (II) or, in the case where Z is COOH or a salt thereof, can instead have the meaning of $NHR^4$, $NH_2$, or OH with $R^4$ = non-substituted or substituted hydrocarbon and, in the case where Z is OH, can have the meaning of COOH or a salt thereof,
W is defined as for the compound (II), or wherein
Y' and Q together form a group -C(O)O(O)C- and W is a straight-chain, branched or cyclic alkylene or alkenylene group, each having preferably 2 to 12 carbon atoms, or an optionally alkyl-substituted or condensed arylene group having preferably 6 to 12 carbon atoms, and
Q is OH, $NR'_2$, $NR^7{}_3{}^+$, $CO_2H$, $SO_3H$, $PO(OH)_2$, $PO(OR^4)_2$, $OPO(OH)_2$, $OPO(OR^4)_2$ or a salt of the previously mentioned acids, wherein $R^4$ has the meaning given above in respect to formula (I) and $R^7$ either has the same meaning as $R^4$ or two groups $R^7$ together can represent a optionally substituted, optionally unsaturated alkylene group, and
c is 1, 2, 3, 4 or a greater number,
or, in the event that the radical or radicals Z in the product of the first reaction is/are (a) hydroxy group(s), is reacted with $P_2O_5$ or with $POCl_3$,
wherein the molar ratio of the product of the first reaction to the compound having formula (III) is preferably greater than 1, and more preferably being at least 1.05.

7. Process according to any of claims 4 and 6, wherein in said compound having formula (II) or (III), respectively, Y and Y', respectively, is COA' and, in particular, is (meth)acrylic acid chloride or anhydride, or wherein $Y'W(Q)_c$ is succinic acid anhydride, glutaric acid anhydride or maleic acid anhydride.

8. Process according to any of claims 4 or 5, wherein the product of the second reaction is further reacted in a third reaction with a compound (IV)

$$X\text{-}W\text{-}(Q)_c \qquad (IV)$$

wherein X and W are defined as in formula (I) pursuant to claim 1, and
Q and c have the meaning given in claim 6 for formula (III),
wherein the molar ratio of the product of the second reaction to the compound with formula (IV) is preferably greater than 1, and more preferably at least 1.05.

9. Process according to claim 5, further comprising the reaction with a compound (V), which is selected among the

anhydride of a dicarboxylic acid and a compound of formula Y"WC(Q)$_c$, wherein Y" means NCO, epoxy or COA' with A' = hydroxy, a halogenide or -OC(O)$R^4$ with $R^4$ = a non-substituted or substituted hydrocarbon group, and W, Q and c are defined as for compound (III) in Claim 6.

**10.** Process according to claim 4, wherein the product of the second reaction is further converted in a third reaction with a compound of formula (I) as defined in claim 1, wherein the molar ratio of the product of the second reaction to the compound of formula (I) in the third reaction is greater than 1, and preferably is at least 1.05.

**11.** Process according to claim 10, wherein the product of the third reaction is further reacted in a fourth reaction either with a compound (III)

$$Y\text{-}W\text{-}(Q)_c \qquad \text{(III)}$$

wherein Y and W are defined as in compound (II) pursuant to claim 4, Q is OH, $NR^7_2$, $NR^7_3{}^+$, $CO_2H$, $SO_3H$, $PO(OH)_2$, $PO(OR^4)_2$ or a salt of the aforementioned acids, wherein $R^4$ has the meaning specified in Claim 1 for formula (I), $R^7$ either has the same meaning as $R^4$ or two groups $R^7$ together represent an optionally substituted, optionally unsaturated alkylene group, and c is 1, 2, 3, 4 or a greater number, wherein the molar ratio of the product of the first reaction to the compound with formula (II) is preferably greater than 1, and more preferably at least 1.05, or, in the event that the radical or radicals Z in the product of the third reaction is/are (a) hydroxy group(s), is reacted with $P_2O_5$ or $POCl_3$.

**12.** Process according to claim 10, wherein the product of the third reaction is further reacted in a fourth reaction with a compound having formula (II), as is defined in Claim 7, wherein the molar ratio of the product of the third reaction to the compound having formula (II) is preferably greater than 1, and more preferably is at least 1.05.

**13.** Process according to any of claims 4 and 12, further comprising

(a) reacting the respective product with a single-functional or multifunctional thiol, or
(b) polymerizing the respective product in a polyreaction, in which a part or all of the reactive double bonds present are incorporated into a propagating carbon chain, under the influence of heat, light, ionizing radiation or by redox-induction.

**14.** Process according to any of claims 1 to 12, further comprising

(a) the cross-linking of existing hydroxy or carboxylic acid groups with a di- or polyfunctional isocyanate, or
(b) the cross-linking of existing hydroxy groups with a di- or polyfunctional, optionally activated, carboxylic acid.

**15.** Compound or silicic acid (hetero)polycondensate of formula (3)

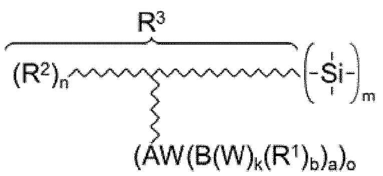 (3)

wherein

$R^1$ designates an unsaturated, organically polymerizable radical,
$R^2$ has the same meaning as $R^1$ or is a hydroxy group, a phosphorous containing radical, a free carboxylic acid, or an ester or a salt of the aforementioned acids, or has the meaning of B-$(W)_k$-$(R^1)_b$,
$R^3$ designates a radical with a backbone comprising hydrocarbon, which is bonded to silicon by carbon, wherein the branching of the zigzag line in formula (3) symbolizes a branching of this backbone at an arbitrarily selectable point,
the three bonds of the Si atom not further characterized represent additional radicals that are bonded to the silicon atom, selected from among radicals capable of being hydrolyzed off from silicon, hydroxy groups and radicals bonded to silicon by a carbon atom which can have the same meaning as $R^3$ or a meaning differing therefrom, or represent oxygen bridges to other silicon atoms or other metal atoms, respectively, if the structure

(3) is a component of a silicic acid (hetero)polycondensate, A represents a linkage group, which is selected among -S-, -NH- and $NR^4$, wherein $R^4$ represents a radical containing hydrocarbon,
B represents a linkage group, which is selected among ester, ether, acid amide and urethane groups,
W is a substituted or non-substituted hydrocarbon radical, the chain of which can be interrupted by -S-, -O-, -NH-, $-NR^4-$, -C(O)O-, -NHC(O)-, -C(O)NH-, -NHC(O)O-, -C(O)NHC(O)-, -NHC(O)NH-, -S(O)-, -C(S)O-, -C(S)NH-, -NHC(S)-, -NHC(S)O-, the index k is 0 or 1,
the indices m and n, independent from each other, represent 1, 2 or an integer greater than 2,
the index o represents at least 1, if the formula (3) represents a silane, and represents at least 0.2 if the formula represents a silicic acid (hetero)polycondensate,
a represents 1, 2, 3, 4 or a greater integer and
b represents 1, 2, 3, 4 or a greater integer.

**16.** Compound or silicic acid (hetero)polycondensate of formula (4)

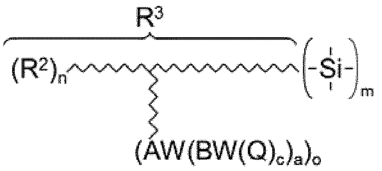

(4),

wherein $R^3$, A, B, W, m, n, a and o have the meaning specified in Claim 15,
Q is OH, $NR^7{}_2$, $NR^7{}_3{}^+$, $CO_2H$, $SO_3H$, $PO(OH)_2$, $PO(OR^4)_2$ or a salt of the aforementioned acids and $R^2$ represents an unsaturated, organically polymerizable radical or is a hydroxy group, a phosphorous containing radical, a free carboxylic acid or an ester or a salt of the aforementioned acids or has the meaning $BW-(Q)_c$, wherein $R^4$ and $R^7$ are defined as for compound (III) described in Claim 11, and
c represents 1, 2, 3, 4 or a greater integer.

**17.** Compound or silicic acid (hetero)polycondensate of formula (5)

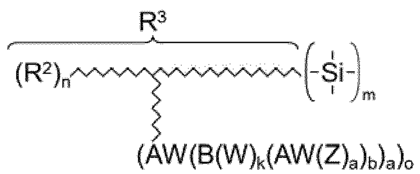

(5)

wherein $R^3$, A, B, W, k, m, n, a, b and o have the meaning specified in claim 15,
$R^2$ represents an unsaturated, organically polymerizable radical or is a hydroxy group, a phosphorous containing radical, a free carboxylic acid or an ester or a salt of the aforementioned acids or has the meaning $B(W)_k-AW(Z)_a)_b$, and
Z is OH, a silyl radical or a free carboxylic acid radical or a salt of this acid radical.

**18.** Compound or silicic acid (hetero)polycondensate of formula (6)

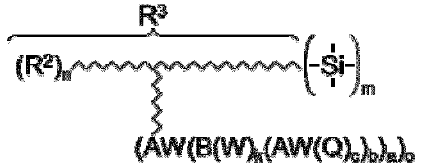

(6)

wherein $R^3$, A, B, W, k, m, n, a, b and o have the meaning specified in claim 15, $R^2$ represents an unsaturated, organically polymerizable radical or is a hydroxy group, a phosphorous containing radical, a free carboxylic acid or an ester or a salt of the aforementioned acids or has the meaning $B(W)_k-AW(Q)_c)_b$, wherein Q and b are defined as indicated in claims 16 and 17.

**19.** Compound or silicic acid (hetero)polycondensate of formula (7)

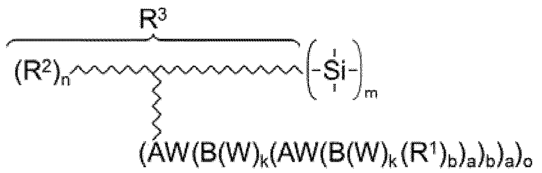

(7)

wherein the radicals and indices $R^1$, $R^3$, A, B, W, k, m, n, a, b and o are defined as for formula (3) in claim 15, and $R^2$ represents an unsaturated, organically polymerizable radical or is a hydroxy group, a phosphorous containing radical, a free carboxylic acid or an ester or a salt of the aforementioned acids or has the meaning $B(W)_k(AW(B(W)_k(R^1)_b)_a)_b$.

**20.** Compound or silicic acid (hetero)polycondensate having formula (8)

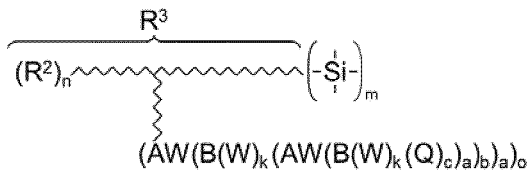

(8)

wherein $R^3$, A, B, W, k, m, n, a, b and o have the meaning as defined in claim 15, $R^2$ represents an unsaturated, organically polymerizable radical or is a hydroxy group, a phosphorous containing radical, a free carboxylic acid or an ester or a salt of the aforementioned acids or has the meaning $B(W)_k(AW(B(W)_k(Q)_c)_a)_b$, wherein Q and b are defined as indicated in claim 16 and 17.

**21.** Organic polymer, obtained from a compound according to any of claims 15 to 20 which has at least one unsaturated, organically polymerizable group, or obtained from a silicic acid (hetero)polycondensate according to any of claims 15 to 20 which has unsaturated, organically polymerizable groups, by

(a) reacting the compound or the silicic acid (hetero)polycondensate, respectively, with a bis or multifunctional thiol or amine or
(b) polymerizing the compound or the silicic acid (hetero)polycondensate, respectively, in a polyreaction, in which a part or all of the existing reactive double bonds are incorporated into a propagating carbon chain, under the influence of heat, light, ionizing radiation or redox-induction.

**22.** Organic polymer, obtained from a compound according to any of claims 15 to 19 which has at least one free hydroxy group or carboxylic acid group, or obtained from a silicic acid (hetero)polycondensate according to any of claims 15 to 19 which has free hydroxy groups or carboxylic acid groups, by

(a) cross-linking of existing hydroxy or carboxylic acid groups with a di- or polyfunctional isocyanate, or
(b) cross-linking of existing hydroxy groups with a di- or polyfunctional, optionally activated carboxylic acid.

**Revendications**

**1.** Procédé pour l'allongement de chaînes de radicaux ayant au moins deux groupes fonctionnels et liés à un atome de silicium par l'intermédiaire d'un atome de carbone dans des silanes ou des siloxanes avec conservation ou augmentation du nombre de groupes fonctionnels sur les radicaux liés à un atome de silicium par l'intermédiaire d'un atome de carbone, **caractérisé en ce que** l'on fait réagir un silane ou siloxane comprenant un radical lié à un atome de silicium par l'intermédiaire d'un atome de carbone, lequel radical porte au moins deux groupes fonctionnels, le premier des groupes fonctionnels étant un groupe insaturé polymérisable de façon organique et le second des groupes fonctionnels étant choisi parmi :

(a) d'autres groupes insaturés polymérisables de façon organique,
(b) $COOR^8$ ou $-(O)_bP(O)(R^5)_2$ et

(c) -OH,

$R^8$ étant identique à $R^4$ ou $M^{x+}{}_{1/x}$, $M^{x+}$ étant l'hydrogène ou un cation métallique chargé positivement x fois, et b = 0 ou 1, dans une première réaction avec un composé de formule (I)

$$X\text{-}W\text{-}(Z)_a \qquad \text{(I)}$$

dans lequel X est SH, $NH_2$ ou $NHR^4$,
Z est OH, le radical acide carboxylique -COOH ou un sel ou un ester de ce radical ou un radical silyle,
W est un radical hydrocarboné substitué ou non substitué dont la chaîne peut être interrompue par -S-, -O-, -NH-, -$NR^4$-, -C(O)O-, -NHC(O)-, -C(O)NH-, -NHC(O)O-, -C(O)NHC(O)-, -NHC(O)NH-, -S(O)-, -C(S)O-, -C(S)NH-, -NHC(S)-, -NHC(S)O- et
a désigne 1, 2, 3, 4 ou un nombre entier supérieur,
$R^4$ étant un radical hydrocarboné non substitué ou substitué,
$R^5$ étant un radical hydrocarboné non substitué ou substitué ou $OR^6$,
$R^6$ étant l'hydrogène ou un radical hydrocarboné non substitué ou substitué, de telle sorte que le radical X se greffe sur le premier groupe fonctionnel.

2. Procédé selon la revendication 1, Z étant OH, le radical acide carboxylique -COOH ou un sel ou un ester de ce radical et/ou le second ou un second des groupes fonctionnels du radical lié à un atome de silicium est un groupe OH.

3. Procédé selon l'une quelconque des revendications précédentes, le rapport molaire du ou de tous les premiers groupes fonctionnels sur les radicaux liés à un atome de silicium par l'intermédiaire d'un atome de carbone par rapport aux radicaux Z dans le composé de formule (I) est supérieur à 1/1, de préférence d'au moins 1,05/1 et est situé de manière davantage préférée dans la plage de 1,05/1 à 1,50/1.

4. Procédé selon la revendication 2, le produit de la première réaction réagissant en outre dans une deuxième réaction avec un composé (II)

$$Y\text{-}(W)_k\text{-}(R^1)_b \qquad \text{(II)}$$

dans lequel

Y est NCO, un groupe époxy ou, si le ou les radicaux Z dans le produit de la première réaction est/sont un ou plusieurs groupes hydroxy, Y est -COA'
W est défini comme dans la revendication 1 pour le composé (I),
$R^1$ est un groupe insaturé polymérisable de manière organique,
A' est un groupe hydroxy, un halogénure ou -OC(O)$R^4$, $R^4$ étant un radical hydrocarboné non substitué ou substitué,
k = 0 ou 1, k = 0 n'étant possible que dans le cas où Y représente COA' et b = 1 ou est supérieur à 1,
le rapport molaire du produit de la première réaction par rapport au composé de formule (II) étant de préférence supérieur à 1 et, de manière davantage préférée, d'au moins 1,05.

5. Procédé selon la revendication 4, **caractérisé en ce que** la première réaction a eu lieu avec un composé (I), Z = OH, le composé (II) dans la deuxième réaction étant utilisé dans une proportion molaire inférieure, par rapport aux radicaux Z présents dans le produit de la première réaction.

6. Procédé selon la revendication 2, le produit de la première réaction étant en outre transformé dans une deuxième réaction, soit avec un composé (III)

$$Y'\text{-}W\text{-}(Q)_c \qquad \text{(III)}$$

dans lequel

Y' est défini soit en tant que Y pour ledit composé (II), soit, dans le cas de Z égale à COOH ou un de ses sels, peut désigner à la place $NHR^4$, $NH_2$ ou OH avec $R^4$ = un radical hydrocarboné non substitué ou substitué et, dans le cas de Z = OH, peut désigner COOH ou un de ses sels,
W est tel que défini pour le composé (II), ou

Y' et Q forment ensemble le groupe -C(O)O(O)C- et W est un groupe alkylène ou alcénylène linéaire, ramifié ou cyclique, ayant de préférence respectivement 2 à 12 atomes de carbone ou un groupe arylène facultativement substitué par un groupe alkyle ou condensé ayant de préférence 6 à 12 atomes de carbone et
Q est OH, $NR^7_2$, $NR^7_3{}^+$ $CO_2H$, $SO_3H$, $PO(OH)_2PO(OR^4)_2$, OPO(OH), $OPO(OR^4)_2$ ou un sel des acides susmentionnés, $R^4$ ayant la signification susmentionnée pour ladite formule (I) et $R^7$ ayant soit la même signification que $R^4$, soit deux radicaux $R^7$ ensemble peuvent représenter un groupe alkylène facultativement substitué ou facultativement non substitué, et
c vaut 1, 2, 3, 4 ou plus,
soit, dans le cas où le ou les radicaux Z dans le produit de la première réaction est/sont un ou plusieurs groupes hydroxy, le produit de la première réaction est transformé avec $P_2O_5$ ou avec $POCl_3$,
le rapport molaire du produit de la première réaction par rapport au composé de formule (III) étant de préférence supérieur à 1 et de manière davantage préférée, d'au moins 1,05.

**7.** Procédé selon l'une quelconque des revendications 4 et 6, dans lequel, dans le composé de formule (II) ou (III), Y ou Y' est COA' et en particulier de l'anhydride ou du chlorure d'acide (méth)acrylique, $Y'W(Q)_c$ étant de l'anhydride succinique, de l'anhydride glutarique ou de l'anhydride maléique.

**8.** Procédé selon l'une quelconque des revendications 4 ou 5, dans lequel on fait réagir le produit de la deuxième réaction dans une troisième réaction avec un composé (IV) :

$$X\text{-}W\text{-}(Q)_c \qquad (IV)$$

dans lequel X et W sont définis comme dans la formule (I) selon la revendication 1, et
Q et c ont les significations données à la revendication 6 pour la formule (III), le rapport molaire du produit de la deuxième réaction par rapport au composé de formule (IV) est de préférence supérieur à 1 et est, de manière davantage préférée, d'au moins 1,05.

**9.** Procédé selon la revendication 5, comprenant en outre la réaction avec un composé (V) qui est choisi parmi l'anhydride d'un acide dicarboxylique et un composé de formule $Y''WC(Q)_c$, Y" désignant NCO, un groupe époxy ou COA' avec A' = groupe hydroxy, un halogénure ou $-OC(O)R^4$ avec $R^4$ = un radical hydrocarboné non substitué ou substitué et W, Q et c sont définis comme pour le composé (III) de la revendication 6.

**10.** Procédé selon la revendication 4, dans lequel le produit de la deuxième réaction est en outre transformé dans une troisième réaction avec un composé de formule (I) comme défini dans la revendication 1, le rapport molaire du produit de la deuxième réaction par rapport au composé de formule (I) dans la troisième réaction est supérieur à 1 et est, de manière davantage préférée, d'au moins 1,05.

**11.** Procédé selon la revendication 10, dans lequel on fait en outre réagir le produit de la troisième réaction dans une quatrième réaction avec un composé (III) :

$$Y\text{-}W\text{-}(Q)_c \qquad (III)$$

dans lequel Y et W sont définis comme dans le composé (II) selon la revendication 4, Q étant OH, $NR^7_2$, $NR^7_3{}^+$, $CO_2H$, $SO_3H$, $PO(OH)_2$,$PO(OR^4)_2$ ou un sel des acides susmentionnés, $R^4$ ayant la signification donnée dans la revendication 1 pour la formule (I), $R^7$ ayant soit la même signification que $R^4$, soit deux radicaux $R^7$ ensemble peuvent représenter un groupe alkylène éventuellement substitué ou éventuellement non substitué, et
c vaut 1, 2, 3, 4 ou plus, le rapport molaire du produit de la première réaction par rapport au composé de formule (II) étant de préférence supérieur à 1 et de manière davantage préférée, d'au moins 1,05 ou, dans le cas où le ou les radicaux Z dans le produit de la troisième réaction est/sont un ou plusieurs groupes hydroxy, est transformé avec $P_2O_5$ ou $POCl_3$.

**12.** Procédé selon la revendication 10, dans lequel le produit de la troisième réaction est en outre transformé dans une quatrième réaction avec un composé de formule (II) comme défini dans la revendication 7, le rapport molaire du produit de la troisième réaction par rapport au composé de formule (II) est supérieur à 1 et est, de manière davantage préférée, d'au moins 1,05.

**13.** Procédé selon l'une quelconque des revendications 4 et 12, comprenant en outre :

(a) la réaction du produit respectif avec un thiol monofonctionnel ou polyfonctionnel, ou

(b) la polymérisation du produit respectif dans une réaction de polymérisation, pour laquelle tout ou partie des doubles liaisons réactives existantes sont intégrées sous l'influence de la chaleur, de la lumière, d'un rayonnement ionisant ou induites par oxydo-réduction dans une chaîne carbonée qui se propage.

**14.** Procédé selon l'une quelconque des revendications 1 à 12, comprenant en outre :

(a) la réticulation des groupes hydroxy ou acide carboxylique existants avec un isocyanate bifonctionnel ou polyfonctionnel, ou

(b) la réticulation des groupes hydroxy existants avec un acide carboxylique bifonctionnel ou polyfonctionnel éventuellement activé.

**15.** Composé ou (hétéro)polycondensat d'acide silicique de formule (3) :

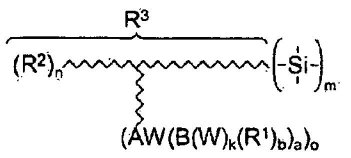

(3)

dans laquelle

$R^1$ désigne un radical insaturé polymérisable de façon organique,

$R^2$ a la même signification que $R^1$ ou bien désigne un groupe hydroxy, un radical phosphoré, un acide carboxylique libre ou un ester ou un sel ou les acides mentionnés, ou bien désigne $B-(W)_k-(R^1)_b$,

$R^3$ désigne un radical avec un squelette hydrocarboné qui est lié au silicium par un atome de carbone, la ramification de la ligne en zigzag dans la formule (3) symbolise une ramification de ce squelette à un endroit quelconque, les trois liaisons non caractérisées plus en détail de l'atome de silicium représentant d'autres radicaux liés à l'atome de silicium, choisis parmi les radicaux pouvant être séparés du silicium par hydrolyse, les groupes hydroxy et les radicaux liés à un atome de silicium par l'intermédiaire d'un atome de carbone, qui peuvent avoir la même signification que $R^3$ ou une autre signification qui en découle, ou qui représentent des ponts oxygène pour d'autres atomes de silicium ou d'autres atomes métalliques, si la structure (3) fait partie d'un (hétéro)polycondensat d'acide silicique.

A désigne un groupe de couplage choisi parmi -S-, -NH- et $NR^4$, $R^4$ représentant un radical hydrocarboné,

B désigne un groupe de couplage choisi parmi les groupes ester, éther, amide d'acide et uréthane,

W est un radical hydrocarboné substitué ou non substitué dont la chaîne peut être interrompue par -S-, -O-, -NH-, $-NR^4-$, -C(O)O-, -NHC(O)-, -C(O)NH-, -NHC(O)O-, -C(O)NHC(O)-, -NHC(O)NH-, -S(O)-, -C(S)O-, -C(S)NH-, -NHC(S)-, -NHC(S)O-,

l'indice k est égal à 0 ou 1,

les indices m et n, indépendamment l'un de l'autre, sont égaux à 1, 2 ou à un nombre entier supérieur à 2,

l'indice o est égal à au moins 1 si la formule (3) représente un silane, et est égal à au moins 0,2 si la formule désigne un (hétéro)polycondensat d'acide silicique,

a désigne 1, 2, 3, 4 ou un nombre entier supérieur et

b désigne 1, 2, 3, 4 ou un nombre entier supérieur.

**16.** Composé ou (hétéro)polycondensat d'acide silicique de formule (4) :

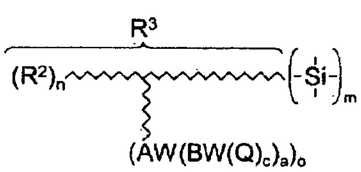

(4),

dans laquelle $R^3$, A, B, W, m, n, a et o ont la signification donnée à la revendication 15, Q est OH, $NR^7_2$, $NR^7_3{}^+$, $CO_2H$, $SO_3H$, $PO(OH)_2$ $PO(OR^4)_2$ ou un sel des acides susmentionnés et $R^2$ désigne un radical insaturé polymérisable de façon organique ou bien est un groupe hydroxy, un radical phosphoré, un acide carboxylique libre ou un

ester ou un sel ou les acides susmentionnés ou encore désigne BW-$(Q)_c$, $R^4$ et $R^7$ étant définis comme pour le composé (III) dans la revendication 11, et c désigne 1, 2, 3, 4 ou un nombre entier supérieur.

**17.** Composé ou (hétéro)polycondensat d'acide silicique de formule (5) :

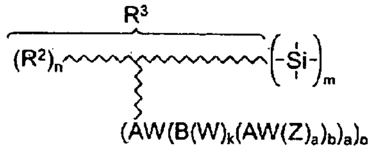

(5)

dans laquelle $R^3$, A, B, W, k, m, n, a, b et o ont la signification donnée à la revendication 15, $R^2$ désigne un radical insaturé polymérisable de façon organique ou bien est un groupe hydroxy, un radical phosphoré, un acide carboxylique libre ou un ester ou un sel ou les acides susmentionnés ou encore désigne $B(W)_k$-$AW(Z)_a)_b$, et Z désigne OH, un radical silyle ou un radical acide carboxylique ou un sel de ce radical acide.

**18.** Composé ou (hétéro)polycondensat d'acide silicique de formule (6) :

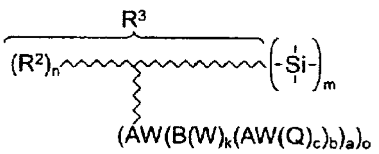

(6)

dans laquelle $R^3$, A, B, W, k, m, n, a, b et o ont la signification donnée à la revendication 15, $R^2$ désigne un radical insaturé polymérisable de façon organique ou bien est un groupe hydroxy, un radical phosphoré, un acide carboxylique libre ou un ester ou un sel ou les acides susmentionnés ou encore désigne $B(W)_k$-$AW(Q)_c)_b$, Q et b étant définis comme dans la revendication 16 ou 17.

**19.** Composé ou (hétéro)polycondensat d'acide silicique de formule (7) :

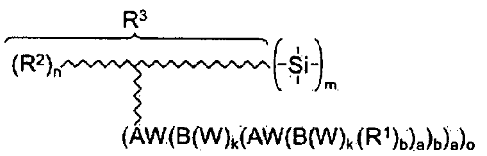

(7)

dans laquelle les radicaux et indices $R^1$, $R^3$, A, B, W, k, m, n, a, b et o ont la signification donnée à la revendication 15 comme pour la formule (3) et $R^2$ désigne un radical insaturé polymérisable de façon organique ou bien est un groupe hydroxy, un radical phosphoré, un acide carboxylique libre ou un ester ou un sel ou les acides susmentionnés ou encore désigne $B(W)_k(AW(B(W)_k(R^1)_b)_a)_b$.

**20.** Composé ou (hétéro)polycondensat d'acide silicique de formule (8) :

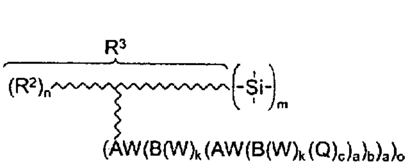

(8)

dans laquelle $R^3$, A, B, W, k, m, n, a, b et o ont la signification donnée à la revendication 15, $R^2$ désigne un radical insaturé polymérisable de façon organique ou bien est un groupe hydroxy, un radical phosphoré, un acide carboxylique libre ou un ester ou un sel ou les acides susmentionnés ou encore désigne $B(W)_k(AW(B(W)_k(Q)_c)_a)_b$, Q et b étant définis comme dans les revendications 16 ou 17.

**21.** Polymère organique obtenu à partir d'un composé selon l'une quelconque des revendications 15 à 20 qui présente au moins un groupe insaturé polymérisable de façon organique, ou obtenu à partir d'un (hétéro)polycondensat d'acide silicique selon l'une quelconque des revendications 15 à 19, polymère qui présente des groupes insaturés polymérisables de façon organique en :

(a) faisant réagir le composé ou l'(hétéro)polycondensat d'acide silicique avec un thiol bifonctionnel ou polyfonctionnel ou une amine ou en
(b) polymérisant le composé ou l'(hétéro)polycondensat d'acide silicique dans une réaction de polymérisation au cours de laquelle tout ou partie des doubles liaisons réactives existantes sont intégrées sous l'influence de la chaleur, de la lumière, d'un rayonnement ionisant ou induites par oxydo-réduction dans une chaîne carbonée qui se propage.

**22.** Polymère organique obtenu à partir d'un composé selon l'une quelconque des revendications 15 à 19 qui présente au moins un groupe hydroxy ou un groupe acide carboxylique, ou obtenu à partir d'un (hétéro)polycondensat d'acide silicique selon l'une quelconque des revendications 15 à 19, polymère qui présente des groupes hydroxy libres ou des groupes acide carboxylique en :

(a) réticulant les groupes hydroxy ou acide carboxylique existants avec un isocyanate bifonctionnel ou polyfonctionnel ou en
(b) réticulant les groupes hydroxy existants avec un acide carboxylique bifonctionnel ou polyfonctionnel éventuellement activé.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4011044 A1
- DE 4416857 C1
- DE 19910895 A1
- DE 10349766 A1
- DE 10132654 A1
- DE 102011050672